# EUROPEAN PATENT SPECIFICATION

(11) **EP 4 627 521 B1**
(45) Date of publication and mention of the grant of the patent: **18.11.2026**
(21) Application number: 23838282.4
(22) Date of filing: 01.12.2023
(51) Int. Cl.: G06T 7/00

(54) **SAMPLE PROCESSING AGNOSTIC IMAGE REPRESENTATION LEARNING FOR DIGITAL PATHOLOGY**
LERNEN DER DARSTELLUNG AGNOSTISCHER BILDER ZUR PROBENVERARBEITUNG FÜR DIGITALE PATHOLOGIE
APPRENTISSAGE DE REPRÉSENTATION D'IMAGE COMPATIBLE AVEC LE TRAITEMENT D'ÉCHANTILLON POUR UNE PATHOLOGIE NUMÉRIQUE

(30) Priority: 02.12.2022 US 202263385931 P
(43) Date of publication of application: 08.10.2025
(73) Proprietor: Genentech Inc., South San Francisco, California 94080-4990 (US); F. Hoffmann-La Roche AG, 4070 Basel (CH)
(72) Inventor: GAO, Zijun, South San Francisco, California 94080-4990 (US); NGUYEN, Trung Kien, South San Francisco, California 94080-4990 (US); GILDENBLAT, Jacob, South San Francisco, California 94080-4990 (IL); ABBASI-SURESHJANI, Samaneh, South San Francisco, California 94080-4990 (CH); DHALLUIN, Paul MB, South San Francisco, California 94080-4990 (CH)
(74) Representative: Mewburn Ellis LLP
(86) International application number: PCT/US2023/082165
(87) International publication number: WO 2024/119130

(56) References cited:
- RAIPURIA GEETANK ET AL: "Stain-AgLr: Stain Agnostic Learning for Computational Histopathology Using Domain Consistency and Stain Regeneration Loss", 21 September 2022, SPRINGER INTERNATIONAL PUBLISHING, PAGE(S) 33 - 44, XP047634057
- AICHA BENTAIEB ET AL: "Adversarial Stain Transfer for Histopathology Image Analysis", IEEE TRANSACTIONS ON MEDICAL IMAGING, vol. 37, no. 3, 8 December 2017 (2017-12-08), USA, pages 792 - 802, XP055496993, ISSN: 0278-0062, DOI: 10.1109/TMI.2017.2781228
- DAVID TELLEZ ET AL: "Whole-Slide Mitosis Detection in H&E Breast Histology Using PHH3 as a Reference to Train Distilled Stain-Invariant Convolutional Networks", ARXIV.ORG, CORNELL UNIVERSITY LIBRARY, 201 OLIN LIBRARY CORNELL UNIVERSITY ITHACA, NY 14853, 17 August 2018 (2018-08-17), XP080897844, DOI: 10.1109/TMI.2018.2820199
- TELLEZ DAVID ET AL: "H&E stain augmentation improves generalization of convolutional networks for histopathological mitosis detection", 31 December 2018 (2018-12-31), XP093142196, Retrieved from the Internet <URL:https://geertlitjens.nl/publication/tell-18-a/tell-18-a.pdf> [retrieved on 20240318]

## Description

### TECHNICAL FIELD

This disclosure generally relates to digital pathology and, in particular, tools for analyzing and classifying digital pathology images.

### BACKGROUND

As digital scanning technology has improved, many laboratories and other institutions storing preserved tissue specimens on glass slides have been scanning those slides to generate digitized images of the tissue samples. A pathologist or other trained specialist will often evaluate a whole slide image (WSI) for evidence of abnormalities in the depicted tissue. Digitized WSI are often very large, for example 100,000 pixels by 100,000 pixels in each of several color channels, making it difficult to efficiently analyze WSI on a holistic level without applying advanced computational image analysis techniques.

Conventional image analysis techniques typically start by obtaining convolutional neural networks (CNNs) pre-trained on generic natural image sets (e.g., ImageNet) and then applying transfer learning techniques. Such CNNs may be of limited value, however, since the generic natural images typically depict objects that do not appear in WSI and may not be helpful in distinguishing features of interest given the unique and specific aspects of WSI. For example, most structures in hematoxylin and eosin (H&E)-stained slides appear in shades of blue, purple, and pink.

For digital pathology, it is desirable to obtain a CNN that has been pre-trained specifically to extract features from WSIs (e.g., H&E slide images). Unfortunately, however, most large data sets of WSI are not labeled, which makes it difficult to take advantage of supervised learning techniques.

Furthermore, in digital pathology, tissue samples may be processed using different techniques. These processing techniques can impart differences in the generated digital pathology images. For example, digital pathology slides obtained from different scanners may have visible (as well as, in some cases, invisible) differences due to settings, features, components, or other aspects. These different scanners may use different light sources to capture images, have different lenses, use different software or different software versions, have lenses formed of different materials, or have other differences, or combinations thereof. As another example, differences may be attributed to different slide preparation machines (e.g., stainers) used to prepare the digital pathology slides, different batches of stains, different staining agents, or, in some cases, two different scanning machines of the same model may simply have been calibrated differently. As yet another example, differences may be attributed to different magnifications being used by a same or different scanner, different sample thickness being prepared, and the like.

When training a feature encoder, use of images obtained via different tissue sample processing techniques (e.g., from different scanners) can preserve features specific to the tissue sample processing technique (e.g., the scanner) used to obtain a corresponding image, which can inhibit downstream classification tasks and analysis. For instance, the quality of the features derived from the image may decrease because the representations of the images are less related to the biological attributes depicted therein.

Therefore, it is desirable to develop and train a machine learning model for performing digital pathology analysis that is agnostic to the tissue sample processing technique used to prepare and capture a corresponding image.

Raipura Geetank et al. ("Stain-AgLr: Stain Agnostic Learning for Computational Histopathology Using Domain Consistency and Stain Regeneration Loss", 21 September 2022, Springer International Publishing, page(s) 33 - 44) describes a training methodology, Stain-AgLr, that achieves high invariance to stain color changes on unseen test data. Aicha Bentaieb et al. ("Adversarial Stain Transfer for Histopathology Image Analysis", IEEE Transactions on Medical Imaging, vol. 37, no. 3, 8 December 2017 (2017-12-08), USA, pages 792 - 802) describes a discriminative image analysis model equipped with a stain normalization component that transfers stains across datasets.

### SUMMARY

Described herein are systems, methods, and programming for training and implementing a machine learning model for performing digital pathology analysis that is agnostic to the tissue sample processing technique used to prepare and capture a corresponding digital pathology image.

Some aspects include receiving image data including a first image set and a second image set. The first image set and the second image set include digitized images of a plurality of digital pathology slides processed using a first slide preparation machine and a second slide preparation machine, respectively. The first slide preparation machine and the second slide preparation machine each have a set of attributes, where a value of at least one of the attributes differs between the first slide preparation machine and the second slide preparation machine. A first augmented view set and a second augmented view set are generated using the image data. The first augmented view and the second augmented view are generated based on one or more augmentations applied to each image of the first image set and the second image set. For each of the digital pathology slides, a first encoder, e.g. vision transformer, is trained. Training the encoder includes: generating, using the first vision transformer, a first representation of an augmented view of the first augmented view set, and enhancing a similarity between the first representation and a second representation of an augmented view of the second augmented view set. The second representation is generated via a second encoder, e.g. a second vision transformer. The first representation and the second representation both correspond to the same digital pathology slide.

Some additional aspects include receiving training data including images of a plurality of biological samples processed using a first slide preparation machine or a second slide preparation machine. The first slide preparation machine and the second slide preparation machine each have a set of attributes. A value of at least one of the attributes differs between the first slide preparation machine and the second slide preparation machine. For each of the biological samples, a first augmented view and a second augmented view of one of the imaes of the biological sample processed using the first slide preparation machine are generated, and a first representation of the first augmented view is generated using a first encoder. The first representation is provided to a discriminator to produce a prediction of whether the biological sample corresponding to the one of the images was processed using the first slide preparation machine or the second slide preparation machine. One or more parameters of the discriminator are updated based on a first loss computed based on the produced prediction and metadata associated with the one of the images. The metadata indicates whether the biological sample was processed using the first slide preparation machine or the second slide preparation machine. For example, the metadata may indicate that the biological sample was processed using the first slide preparation machine. One or more parameters of the first encoder are updated based on the first loss. The updated first encoder is trained to generate an updated first representation of the one of the images, and enhance a similarity between the updated first representation and a second representation of the second augmented view generated using a second encoder.

The scope of the claimed invention is defined in the appended claims.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.
FIG. 1A is a diagram illustrating an example system used to train and use a sample processing-agnostic model, in accordance with various embodiments.
FIG. 1B is a diagram of an example process for obtaining images depicting biological samples, in accordance with various embodiments.
FIGS. 2A-2B are diagrams of example image data and example processing technique labels for the image data, in accordance with various embodiments.
FIG. 3 is a diagram of example training data used to train a sample processing-agnostic model, in accordance with various embodiments.
FIG. 4 is a diagram illustrating an example framework of a model used as a basis for a sample processing-agnostic model, in accordance with various embodiments.
FIG. 5 is a diagram illustrating an example framework of another model used as a basis for a sample processing-agnostic model, in accordance with various embodiments.
FIG. 6A is a diagram of example image tiles originating from images captured using different tissue-processing techniques to be included in an image set for training a model, in accordance with various embodiments.
FIG. 6B is a diagram illustrating different slide preparation machines and different settings associated with those slide preparation machines for producing images representing a same biological sample, in accordance with various embodiments.
FIG. 7 is a flowchart illustrating an example process for training a sample processing-agnostic model using a mean-similarity training technique, in accordance with various embodiments.
FIG. 8 is a diagram of an example adversarial model used to train a sample processing-agnostic model built on the framework of FIG. 4, in accordance with various embodiments.
FIGS. 9-10 are diagrams illustrating an example training process used to train the adversarial model of FIG. 8, in accordance with various embodiments.
FIG. 11 is a diagram of another example adversarial model used to train a sample processing-agnostic model built on the framework of FIG. 5, in accordance with various embodiments.
FIGS. 12A-12B are diagrams illustrating an example training process used to train the adversarial model of FIG. 11, in accordance with various embodiments.
FIG. 13 is a flowchart illustrating an example process for training a sample processing-agnostic model using an adversarial training technique, in accordance with various embodiments.
FIG. 14A is a diagram of an example downstream classification subsystem used to train a downstream classifier, in accordance with various embodiments.
FIG. 14B is a flowchart illustrating an example process for training a downstream classifier, in accordance with various embodiments.
FIG. 15A is a diagram of example training and validation data used to train a model, in accordance with various embodiments.
FIG. 15B is a diagram of example downstream classifier training and validation data used to train a downstream classifier, in accordance with various embodiments.
FIG. 16 is a flowchart illustrating an example process for analyzing an image of a biological sample, in accordance with various embodiments.
FIG. 17 illustrates images of different biological samples captured using different tissue processing techniques, in accordance with various embodiments.
FIG. 18A is a plot illustrating embeddings produced from multi-scanner data, in accordance with various embodiments.
FIGS. 18B illustrates various plots of representations created by an encoder for biological samples included in the validation data for an encoder trained using the mean similarity approach, in accordance with various embodiments.
FIG. 19 illustrates plots of representations created by an encoder for biological samples included in the validation data for an encoder trained using the adversarial approach, in accordance with various embodiments
FIGS. 20A-20B illustrate plots of the standard deviation of embeddings over training for the mean embedding similarity approach and the adversarial approach, respectively, in accordance with various embodiments.
FIG. 21 illustrates an image of a biological sample and data table of sample data, in accordance with various embodiments.
FIGS. 22A-22B illustrate images obtained by two different scanners of a same biological sample, in accordance with various embodiments.
FIGS. 23A-26B illustrate various example embedding plots, in accordance with various embodiments.
FIG. 27 illustrates an example computing system with which one or more embodiments described herein may be implemented.

### DETAILED DESCRIPTION

In digital pathology, biological samples, such as tissue samples, may be processed using a slide preparation machine. The slide preparation machine may include a slide scanning machine (also referred to herein interchangeably as a "scanner"), a slide staining machine, or other machines and systems. Digitized images of the biological samples may be captured using a slide scanning machine. The images can be analyzed to detect tissue abnormalities or other anomalies that could be present. Traditionally, these images were analyzed by humans (e.g., physicians), however the advent of machine learning and artificial intelligence has enabled quicker and more robust digital pathology analyses to be performed. Still further, machine learning models and artificial intelligence can detect associations and/or abnormalities not detectable from traditional human-review.

Machine learning models can be trained to perform a task. For example, an image classifier may be trained to receive an image, generate a representation of the image that is understandable by a computer, and output a classification result based on the generated representation. The classification result may indicate a class or classes of objects that the image is determined to depict, a likelihood (e.g., a probability) that the image depicts objects belonging to a particular class or classes, or other information.

In order to train the machine learning model to perform the classification, the model may be provided with training data including images (e.g., whole slide images) of biological samples. In some embodiments, an image may be captured of each biological sample. Furthermore, in some embodiments, an image of each biological sample may be captured using each slide scanning machine from a set of slide scanning machines. The slide scanning machines may include different attributes, such as magnification level, lens material, lens thickness, software, and the like. The purpose of training the model using images captured using different slide scanning machines is to ensure that the model does not learn features relating to the specific slide scanning machine used and/or minimizes an effect that the features of the specific scanner has on the classification results. Additionally, different processing techniques may be used to process the biological samples prior to imaging. For example, different slide staining machines may be used to prepare the biological samples for digitization. The different slide staining machines may use different staining agents, different batches of a staining agent, or other differences, or combinations thereof. The model may be trained using images of biological samples processed using different slide preparation machines to ensure that the model does not learn features relating to the specific slide preparation machine used and/or minimizes an effect that those features have on downstream classification results. There may also be differences introduced by tissue cutting. For example, one biological sample may be prepared having a first thickness, while a second biological sample may be prepared having a second thickness.

In some embodiments, training a model's backbone includes pre-training a feature encoder. The feature encoder is trained to produce meaningful representations of images. The representations describe aspects of the underlying biological sample and can be analyzed by a computer for performing one or more tasks (e.g., tissue classification). As defined herein, an "embedding" refers to a vector representation of features describing an image. An embedding is meaningful if it possesses the features adapted for downstream classification or regression tasks. The encoder functions to "encode" the image data representing the image as the embedding in an embedding space. Thus, the encoder may be trained to focus on the features describing the morphological characteristics of the content depicted by the image, while also not focusing on features that are irrelevant or of minimal value to the downstream classification tasks. Regression may also be performed. For example, a disease's progression may be predicted which leads to a continuous output, which may be analyzed via regression techniques.

In some cases, the data that is used to train the feature encoder (e.g., the classifier) includes images of biological samples. For example, images of tissue samples depicting tumors or other anatomical/biological abnormalities may be used to train the classifier to detect their presence in images of other biological samples. Tissue abnormalities that can be detected from a WSI include, by way of example only and not limitation, inflammation, pigmentation, degeneration, anisokaryosis, hypertrophy, mitotic increase, mononuclear cell infiltration, inflammatory cell infiltration, inflammatory cell foci, decreased glycogen, glycogen accumulation (diffuse or concentrated), extramedullary myelopoiesis, extramedullary hematopoiesis, extramedullary erythropoiesis, single-cell necrosis, diffuse necrosis, marked necrosis, coagulative necrosis, apoptosis, karyomegaly, peribiliary, increased cellularity, glycogen deposits, lipid deposits, microgranuloma, congestion, Kupffer cell pigmentation, increased hemosiderin, histiocytosis, hyperplasia, or vacuolation, among many others.

In some embodiments, a given biological sample disposed on a glass slide prepared using one or more slide preparation machines. The slide preparations may include, for example, one or more slide staining machines (also referred to herein interchangeably as "stainers"), one or more slide scanning machines (e.g., scanners), or other machines. The slide preparation machines may each have a set of attributes. Values for each set of attributes may be the same or similar across different slide preparation machines. Some embodiments include a value of at least one of the attributes being the same (or approximately the same) for two separate slide preparation machines. Some embodiments include a value of at least one of the attributes being the same (or approximately the same) for a same slide preparation machine used to prepare and digitize images of biological samples. For example, a first batch of images may be captured using a scanner of the biological samples using one staining agent, and a second batch of images may be captured using the scanner of the biological samples using another staining agent. The set of attributes may indicate a staining agent, such as hematoxylin and eosin, used to stain the slide, a tissue thickness used for the biological samples, or other attributes.

The slides may be imaged using one or more slide scanning machines (e.g., scanners). Attributes of the slide scanning machines may include a magnification level, lens material, lens thickness, scanning software, or other attributes. In some embodiments, a value of at least one attribute of a first scanner may differ from a value of the at least one attribute of a second scanner. In general, the values of the attributes are irrelevant to the morphological characteristics of the underlying biological sample. The scanners may capture images of the biological samples, which, in some embodiments, may be referred to as whole slide images (WSIs).

As described herein, WSIs are extremely large format digital images (e.g., 100,000 x 100,000 pixels) that can result from digitization of physical slides of biological samples (e.g., tissue) into high-resolution image files or can be output directly by medical scanning devices. WSIs are typically preserved in the highest possible resolution format because of the nature of the images being captured and to avoid the misdiagnosis of tissue depicted in the WSI due to artifacts that ordinarily result from image compression and manipulation. WSIs often include orders of magnitude larger numbers of pixels than typical digital images, and can include resolutions of 100,000 pixels by 100,000 pixels (e.g., 10,000 megapixels) or greater.

Analysis of a WSI is a labor-intensive process that requires highly specialized individuals with the knowledge and dexterity to review the WSI, recognize and identify abnormalities, classify the abnormalities, label the WSI, and potentially render diagnosis of the tissue depicted by the WSI. Additionally, because WSIs are used for a wide array of tissue types, persons with the knowledge and skill to identify abnormalities must be further specialized in order to provide accurate analysis and diagnosis.

Therefore, because of the labor- and knowledge-intensive nature of the work, WSIs are considered candidates for automation of certain functions. However, the large size of WSIs renders typical image analysis techniques ineffective, slow, and expensive. It is not practical to perform standard image recognition and deep learning techniques, which require analysis of multiple rounds of many samples of WSIs to increase accuracy. The techniques described herein are directed to solving the problem of automating feature recognition in WSI and enabling the development of novel data analysis and presentation techniques that previously were not optimized for these images (e.g., WSIs) with different characteristics compared to natural images.

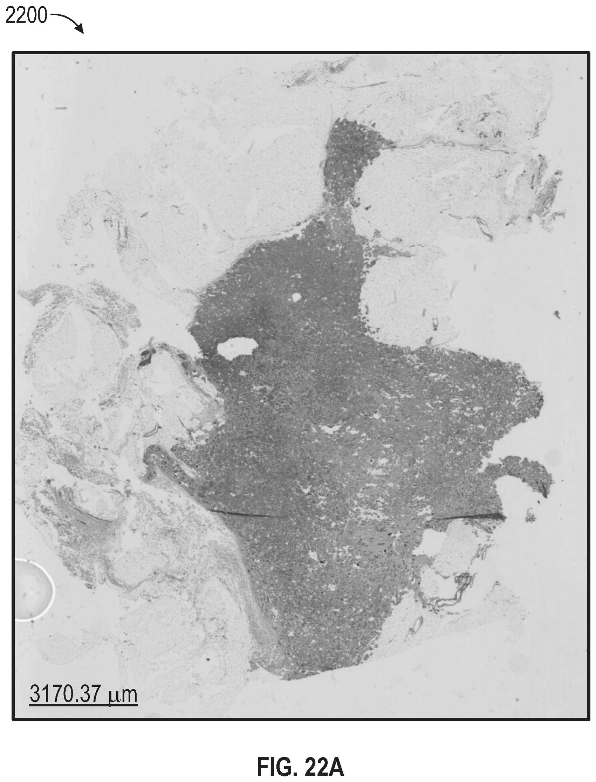

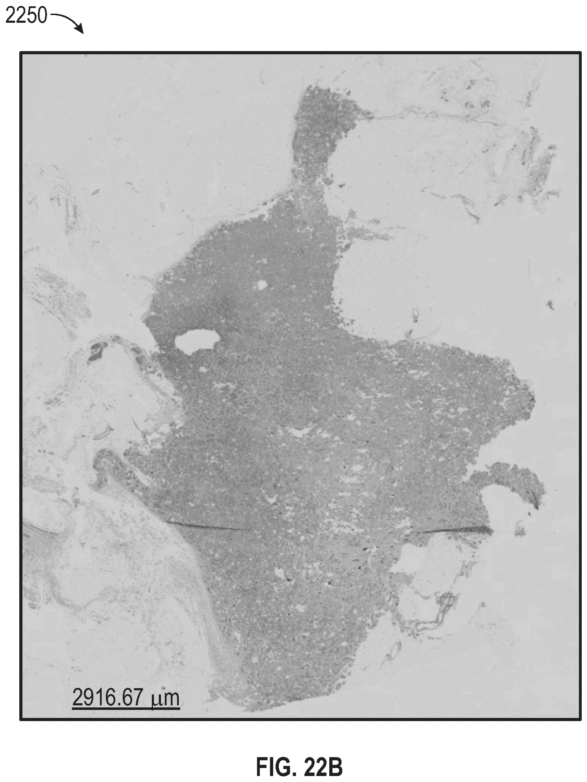

When the classifier is trained using images captured from different sources, or obtained using different methods and/or protocols, intrinsic differences can arise. For example, an image of a biological sample captured using one scanner may differ from an image of the same biological sample captured using a different scanner. As an example, with reference to FIGS. 22A and 22B, image 2200 and 2250 illustrate an example of a same biological sample captured by two different slide scanning machines. Although the magnifications in images 2200 and 2250 differ, there are other differences between the features detected by either scanner when imaging the biological sample, which can impact produced embeddings and cause errors in downstream classifications. As another example, an image of a biological sample prepared using a first slide preparation technique may differ from an image of the same biological sample captured using a second, different, slide preparation technique. These differences can impact the embeddings generated by the encoder, which can impact downstream classifications. Thus, it would be beneficial for there to be techniques to train an encoder for use in downstream biological sample image classification tasks that is agnostic to a slide preparation machine (e.g., a scanner, a stainer) used to capture the underlying image of the biological sample, as well as, or alternatively, agnostic to other origin-specific characteristics of the image.

Particular embodiments may repeat one or more steps of the example process(es), where appropriate. Although this disclosure describes and illustrates particular steps of the example process(es) as occurring in a particular order, this disclosure contemplates any suitable steps of the example process(es) occurring in any suitable order. Moreover, although this disclosure describes and illustrates an example process, this disclosure contemplates any suitable process including any suitable steps, which may include all, some, or none of the steps of the example process(es), where appropriate. Furthermore, although this disclosure describes and illustrates particular components, devices, or systems carrying out particular steps of the example process(es), this disclosure contemplates any suitable combination of any suitable components, devices, or systems carrying out any suitable steps of the example process(es).

In all example embodiments described herein, appropriate options, features, and system components may be provided to enable collection, storing, transmission, information security measures (e.g., encryption, authentication/authorization mechanisms), anonymization, pseudonymization, isolation, and aggregation of information in compliance with applicable laws, regulations, and rules. In all example embodiments described herein, appropriate options, features, and system components may be provided to enable protection of privacy for a specific individual, including by way of example and not limitation, generating a report regarding what personal information is being or has been collected and how it is being or will be used, enabling deletion or erasure of any personal information collected, and/or enabling control over the purpose for which any personal information collected is used.

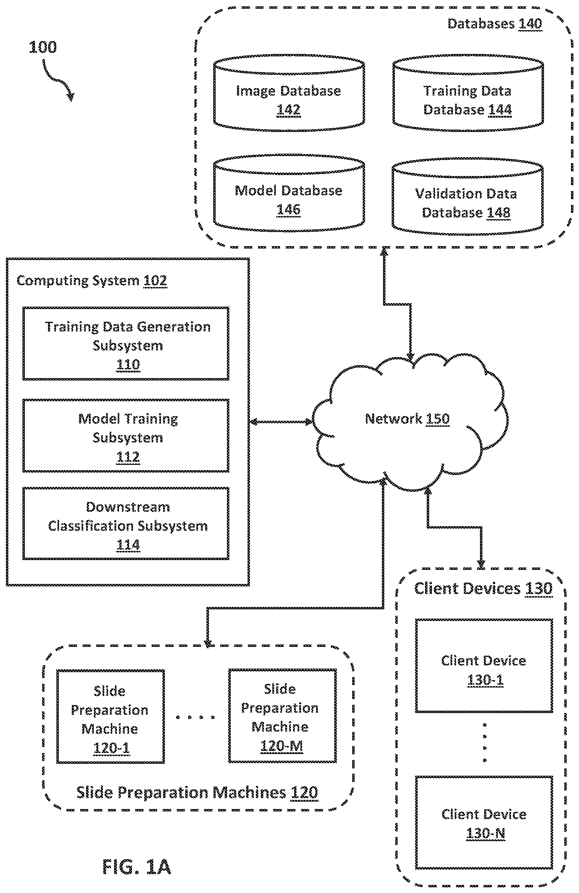

FIG. 1A is a diagram illustrating an example system 100 used to train and use a sample processing-agnostic model, in accordance with various embodiments. System 100 may include a computing system 102, slide preparation machines 120 (e.g., slide preparation machine 120-1-120-M), client devices 130 (e.g., client device 130-1-130-N), databases 140 (e.g., image database 142, training data database 144, model database 146, validation data database 148), or other components. In some embodiments, components of system 100 may communicate with one another using network 150, such as the Internet.

In some embodiments, slide preparation machines 120 may prepare and digitize slides of biological samples using one or more slide preparation techniques. These slide preparation techniques may impart different features to a produced representation of a biological sample, which may affect downstream classification tasks. As an example, slide preparation machines 120 may be a same type/model, however some of slide preparation machines 120 may differ. In particular, each slide preparation machine 120 may have a set of attributes, and values of those attributes may be the same or different across different slide preparation machines, or even a same slide preparation machine. A slide preparation machine may be used to prepare a slide of a biological sample for digitization, scan the slide to obtain an image of the biological sample, or perform other tasks, or combinations thereof.

For example, slide preparation machines 120 may include slide staining machines (e.g., stainers) and slide scanning machines (e.g., scanners) made a same or different manufacturers. Slide preparation machines 120 may have different attributes, such as settings, features, components, or other differences. For example, different scanners may use different light sources to capture images, have different lenses, use different software or different software versions, have lenses formed of different materials, have different lens thickness, or have other differences, or combinations thereof. In some instances, two different slide scanning machines that are the same model may have been calibrated differently. As another example, different stainers may use different staining agents, different batches of a same staining agent, use different tissue thickness for sampling, or have other differences, or combinations thereof. For example, one batch of stains may be used for a biological sample captured by one or more of slide preparation machines 120. In some embodiments, one or more steps may be performed to the biological samples prior to being processed by slide preparation machines 120. For example, the biological samples may be cut to different thicknesses. Typically, the cutting process is performed by humans, however some embodiments include use of an automated sample cutting machine. Regardless of whether the tissue is cut via human or machine, each cut, and further each tissue sample, may differ. The differences in tissue thickness can also impact digital pathology analyses. Thus, the techniques described herein also may be capable of minimizing the impact that variations in tissue sample thickness may have on downstream classification tasks.

Client devices 130 may include client device 130-1 to 130-N. Each client device 130 may be capable of communicating with one or more components of system 100 via network 150 and/or via a direct connection. Client device 130 may refer to a computing device capable of interfacing with various components of system 100 to control one or more tasks, cause one or more actions to be performed, or effectuate other operations. For example, client device 130 may be configured to receive and display an image of a scanned biological sample. Example computing devices that client devices 130 may correspond to include, but are not limited to, which is not to imply that other listings are limiting, desktop computers, servers, mobile computers, smart devices, wearable devices, cloud computing platforms, or other client devices. In some embodiments, each client device 130 may include one or more processors, memory, communications components, display components, audio capture/output devices, image capture components, or other components, or combinations thereof. Each client device 130 may include any type of wearable device, mobile terminal, fixed terminal, or other device.

It should be noted that, while one or more operations are described herein as being performed by particular components of computing system 102, those operations may, in some embodiments, be performed by other components of computing system 102 or other components of system 100. As an example, while one or more operations are described herein as being performed by components of computing system 102, those operations may, in some embodiments, be performed by components of slide preparation machines 120 and/or client devices 130. It should be noted that, although some embodiments are described herein with respect to machine learning models, other prediction models (e.g., statistical models or other analytics models) may be used in lieu of or in addition to machine learning models in other embodiments (e.g., a statistical model replacing a machine-learning model and a non-statistical model replacing a non-machine-learning model in one or more embodiments).

Computing system 102 may include one or more subsystems, such as, for example, training data generation subsystem 110, model training subsystem 112, downstream classification subsystem 114, or other subsystems.

Training data generation subsystem 110 may be configured to generate training data used to train a model, generate validation data for validating a model after training, update training/validation data, or perform other operations relating to the preparation of data for use in training the model. In some embodiments, training data generation subsystem 110 may be configured to obtain images depicting biological samples. Each image may be captured using one of slide preparation machines 120 (e.g., scanner 124). For example, image 1 may be captured using a first slide preparation machine, while image 2 may be captured using a second slide preparation machine, and both image 1 and image 2 are images of a same biological sample (e.g., a tissue sample). Slide preparation machines 120 may include a set of attributes, and in some embodiments, a value of at least one of the attributes may be the same. For example, a first scanner A of a first slide preparation machine may be used to capture an image of a biological sample and a second scanner B of a second slide preparation machine may be used to capture an image of the same biological sample. In some embodiments, slide preparation machines 120 may employ different slide preparation processes. For example, a first stainer of a first slide preparation machine may use a first staining agent to stain a slide of a biological sample and a second stainer of a second slide preparation machine may use a second staining agent to stain a slide of the biological sample.

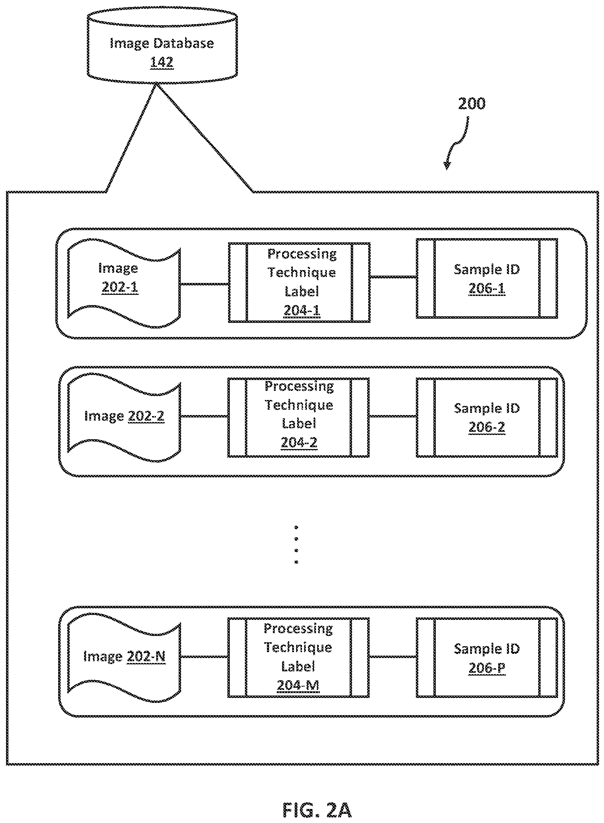

In some embodiments, some or all of the captured image may include metadata indicating a slide preparation machine that was used to those image. The associated metadata may indicate a scanner provenance, a stainer provenance, slide batch information, or other information classifies attributes of the slide preparation process used to prepare a slide and/or image captured thereof. An example of image database 142 may be found at FIG. 2A.

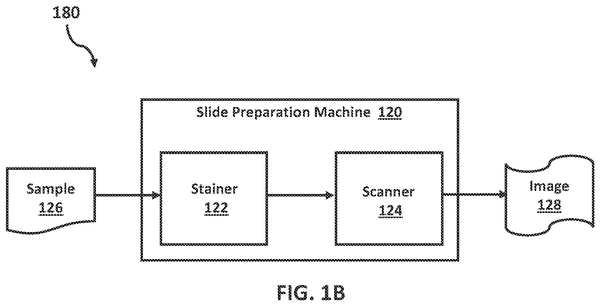

FIG. 1B is a diagram of an example process 180 for obtaining images depicting biological samples, in accordance with various embodiments. As mentioned above, slide preparation machine 120 may include a stainer 122, a scanner 124, or other devices used to prepare and capture images for digital pathology analyses. Although FIG. 1B depicts slide preparation machine 120 including stainer 122 and scanner 124, each may be a separate component (e.g., a stainer coupled to slide preparation machine 120, which includes a scanner; a scanner coupled to slide preparation machine 120, which includes a stainer. In some embodiments, process 180 may include a sample 126 being provided to slide preparation machine 120. In particular, sample 126 may be provided to stainer 122, which may perform one or more staining processes to prepare slides for digitization. The prepared slides may then be scanned via scanner 124 to obtain image 128.

In some embodiments, stainer 122 may apply a staining agent (e.g., H&E) to a slide of sample 126. Different staining agents may be used by different stainers 122. Furthermore, even for a same staining agent, concentrations, quantities, or other aspects of the application of the staining agent may vary from sample to sample and from stainer to stainer.

Biological samples, prior to being stained, may be cut to different thickness. The cutting may be performed by a machine, however humans may also cut the biological samples. The cutting itself, whether performed by a machine or a human, can introduce variations that can impact downstream analysis. For example, one biological sample may be cut at a thickness of 2 mm, while another biological sample may be cut at a thickness of 4 mm. Digital pathology images captured of these biological samples, even if from a same source biopsy, may include different characteristics. However, the underlying morphological properties of the sample should remain the same because those samples came from a same source.

In addition to the different tissue processing techniques that can be used to process a sample with stainer 122, slide preparation machine 120 may also impart different tissue processing features. Similar to the tissue processing techniques mentioned above, features specific to slide preparation machine 120 may also be encoded into images 128, which can impact downstream classifications. For example, different scanners 124 may use different lenses, different magnification settings, different lens thicknesses, different software, or different digitization techniques to capture image 128 of sample 126. Some embodiments include images 128 having multiple magnification levels (e.g., 5x, 10x, 20x, 40x, etc.). In this scenario, images 128 may form a pyramid-like format. In some embodiments, one of the magnification levels may be selected as a target magnification level (e.g., 40x). Tiles may be obtained from the image at that fixed magnification level. Some embodiments include using images from multiple magnification levels together. Further still, slide preparation machines 120 may be of different makes, models, versions, or may have other differences that can be imparted to images 128.

A scanner, as described herein, refers to a computing system and imaging system capable of scanning, digitizing, compressing, storing, retrieving, and/or viewing slides of biological samples. The scanner may include a portion where samples may be loaded into the machine, an image capturing component, processors, memory, network interfaces, displays (or other input/output devices), or other components, or combinations thereof. Some scanners may be capable of loading different quantities of slides. For example, scanners may load 100 or more slides, 200 or more slides, 500 or more slides, or other quantities. The speed at which images are captured of those slides, as well as the magnification used to capture those images, may vary depending on the scanner, the software, the lens, or other considerations.

As an example, with reference to FIG. 2A, image database 142 may be configured to store image data 200. Image data 200 may include *N* images 202 (e.g., whole slide images) depicting *P* biological samples. For each biological sample, one or more images may be captured. For example, for each of the *P* biological samples, one or more images may be captured (e.g., ten or more images, one hundred or more images, one thousand or more images, etc.). Each image may be processed and digitized using one of a predefined set of slide preparation machines (e.g., slide preparation machines 120). For example, slide preparation machines 120 may include*M* slide preparation machines. Each slide preparation machine may include a slide staining machine and a slide scanning machine. Therefore, there may be *M* slide staining machines and *M* slide scanning machines. In some embodiments, each biological sample may be prepared using some or all of the *M* slide staining machines. For example, a first stainer may prepare a slide of a first biological sample using a first staining technique, while a second stainer may prepare a slide of the first biological sample using a second staining technique. In some embodiments, each biological sample may be scanned using some or all of the *M* scanners. For example, for a first biological sample, scanner 1 may be used to capture image 1 of biological sample 1, while scanner 2 may be used to capture image 2 of the biological sample 1.

In some embodiments, image data 200 may be organized in a data structure based on the respective biological sample represented by that image. For example, all images captured of biological sample 1 may be stored in association with one another, whereas all images captured of biological sample N may be stored in association with one another. Persons of ordinary skill in the art will recognize that alternative organizational schemes may be used and the aforementioned is merely an example.

In some embodiments, each image 202 may have metadata associated therewith. For example, each image 202 may include a processing technique label (e.g., a scanner label, a staining label), a sample identifier, a timestamp indicating when that particular image was captured, a slide label indicating a slide used for capturing the image, a tissue thickness, a geographical location, an operator identifier, or other information, or combinations thereof. Alternatively, only some of images 202 may include a processing technique label, a sample identifier, or other metadata.

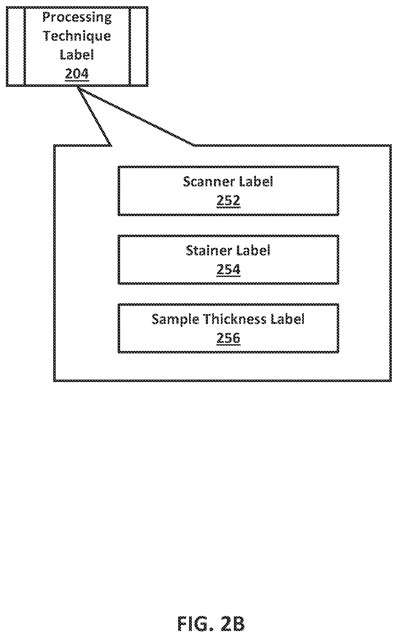

In some embodiments, the processing technique label may indicate values of attributes associated with the processing of a particular image. For example, processing technique label 204-1 may indicate one or more processing techniques used in the creation of image 202-1. While only a single processing technique label is shown within FIG. 2A, persons of ordinary skill in the art will recognize that multiple processing technique labels may be associated with a given image. As an example, with reference to FIG. 2B, processing technique label 204 may include a scanner label 252, a stainer label 254, a sample thickness label 256, or other metadata indicating values of attributes associated with a slide preparation machine used to prepare the slide and corresponding image. For example, scanner label 252 may indicate a scanner used to capture an image of a given biological sample; stainer label 254 may indicate a staining agent and/or process used to stain a slide of the biological sample; sample thickness label 256 may indicate a thickness of the biological sample, so on. In some embodiments, a magnification label also be included indicating a fixed magnification level used for training.

Scanner label 252 may include metadata associated with an image, which may indicate a scanner that was used to capture the corresponding image. For example, processing technique label 204-1 associated with image 202-1 may include a first scanner label (e.g., scanner label 252) indicating that a first scanner was used to capture image 202-1. Similarly, processing technique label 204-2 associated with image 202-2 may include a second scanner label indicating that a second scanner was used to capture image 202-2, and processing technique label 204-M associated with image 202-N may include an *M*-th scanner label indicating that an *M*-th scanner was used to capture image 202-N.

In some embodiments, two or more images 202 may be prepared using a same slide preparation machine or a same component of a slide preparation machine. For example, two or more of images 202 may be captured by a same scanner. In such cases, the corresponding scanner label may include the same information. For example, if images 202-1 and 202-2 were both captured using scanner 1, then the corresponding scanner labels may be equivalent or otherwise specify a same scanner (e.g., a device identifier, port address, etc.).

Sample IDs 206 indicate a biological sample depicted by the corresponding image. For example, image 202-1 may include sample ID 206-1, indicating the biological sample depicted by image 202-1. Similarly, image 202-2 may include sample ID 206-2, indicating the biological sample depicted by image 202-2, and image 202-P may include sample ID 206-P, indicating the biological sample depicted by image 202-P. In some embodiments, two or more of images 202 may depict the same biological sample. In such cases, the corresponding sample ID may include the same information. For example, if images 202-1 and 202-2 were both images of a first biological sample, then sample ID 206-1 and sample ID 206-2 may be equivalent or otherwise specify a same biological sample (e.g., slide number, clinical trial information, etc.).

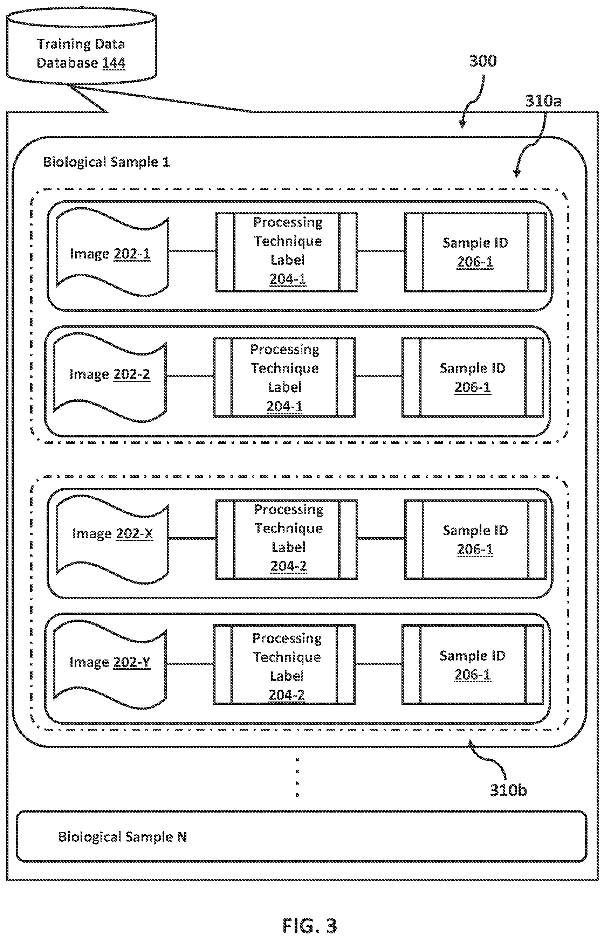

In some embodiments, training data generation subsystem 110 may be configured to create training data and/or validation data for training a machine learning model based on image data 200. For example, training data generation subsystem 110 may organize image data 200 such that images relating to a same biological sample are grouped together, images captured by a same scanner are grouped together, biological samples relating to a same clinical trial or treatment arm are grouped together, and the like. As an example, with reference to FIG. 3, training data database 144 may include training data 300, generated by training data generation subsystem 110 based on image data 200. In some embodiments, training data generation subsystem 110 may be configured to identify a biological sample associated with each of images 202. For instance, a sample identifier indicating the biological sample associated with a given image may be extracted from each image's metadata. Training data generation subsystem 110 may select images having similar sample IDs and may group those images together. For example, as seen in FIG. 3, images 202-1, 202-2, 202-X, and 202-Y may each be grouped together based on each of these images having a same sample ID 206-1. Sample ID 206-1 may refer to biological sample 1, and therefore each of the images associated with biological sample 1 may be grouped together.

In some embodiments, training data generation subsystem 110 may be configured to further organize the images based on a slide preparation machine used to prepare and/or digitize the biological samples. As an example, training data generation subsystem 110 may organize the images based on scanner provenance. Training data generation subsystem 110 may detect a scanner label associated with images 202 and group images together that were captured by the same scanner. As an example, with respect to FIG. 3, images 202-1 and 202-2 may be grouped into a first image set 310a and images 202-X and 202-Y may be grouped into a second image set 310b. Each of images 202-1, 202-2, 202-X, and 202-Y relate to a same biological sample, indicated by sample ID 206-1, however within this collection of images, training data generation subsystem 110 can group the images based on each one's corresponding processing technique label (e.g., scanner label). For example, first image set 310a may include images 202-1 and 202-2 based on each of images 202-1 and 202-2 having a same processing technique label, processing technique label 204-1. This may indicate that images 202-1 and 202-2 were prepared and processed by a same slide preparation machine. For instance, images 202-1 and 202-2 may have been captured using a same scanner, in addition to being images depicting a same biological sample (e.g., biological sample 1). As another example, second image set 310b may include images 202-X and 202-Y based on each of images 202-X and 202-Y having a same processing technique label, processing technique label 204-2. This may indicate that images 202-X and 202-Y were prepared and processed using a same slide preparation machine. For instance, images 202-X and 202-Y may have been captured by a same scanner in addition to being images depicting a same biological sample (e.g., biological sample 1).

In some embodiments, training data 300 may include images relating to *N* biological samples. For each biological sample, one or more image sets may be generated by training data generation subsystem 110. Furthermore, each slide preparation machine may prepare and process the same biological sample. For example, each scanner may be used to capture an image or images of the same biological sample (however only some scanners may be used to capture some biological samples).

In some embodiments, different organizational schemes may be used by training data generation subsystem 110. For example, in some embodiments, image sets may be generated that include images captured by multiple scanners - akin to first and second image sets 310a and 310b being merged. Still further, image sets may be generated that include images depicting multiple biological samples. For example, image sets may be generated that include images of two or more biological samples.

Each image set may include one or more, one hundred or more, one thousand or more, one million or more, or other quantities of images. Thus, although image sets 310a and 310b are illustrated as including two images, more images may be included with each respective image set. Furthermore, image sets may include different quantities of images. The number of biological samples scanned may be any number of samples, and may depend on the clinical trial. For example, the N biological samples may include one or more biological samples, ten or more biological samples, one hundred or more biological samples, one thousand or more biological samples, or other quantities.

It should be understood that, as described herein, processing techniques associated with the different slide preparation machines may differ. For example, different scanners may have different settings, perform different tasks, be fabricated by a different entity or in a different manner, and different stainers may use a different staining technique, a different staining agent, different tissue thickness, or have other differences. Therefore, person of ordinary skill in the art will recognize that other differences may be used to develop a sample-agnostic model. For example, the sample-agnostic model may be agnostic to staining agent, staining technique, tissue thickness, and the like. In such scenarios, an image may include associated metadata indicating, for example, a staining agent used for a biological sample depicted by the image.

In some embodiments, training data generation subsystem 110 may be configured to generate validation data used to validate (e.g., test) a model. Validation data may include images of biological samples captured using a known slide preparation machine. The validation data may be used to test the accuracy of the model to correctly guess the image's corresponding slide preparation machine (e.g., scanner provenance) or to not be impacted by the image's slide preparation machine and/or processes performed thereby when used for down-stream classifications.

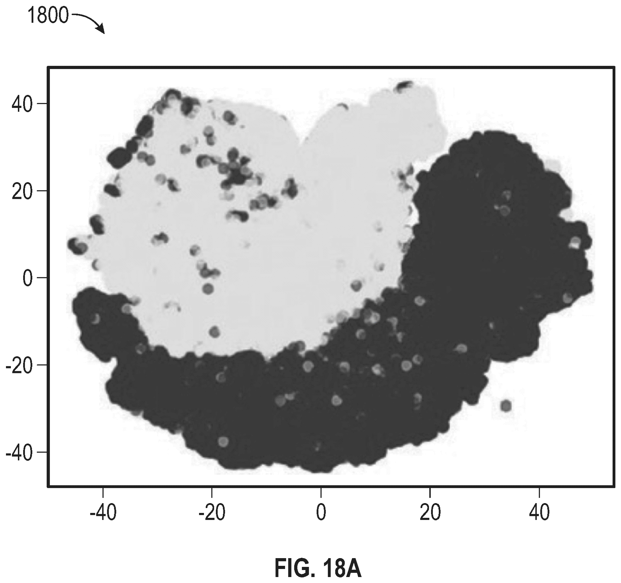

As mentioned above, intrinsic differences between data sets captured using different methods or protocols can affect the ability of a model to perform downstream classifications. A known issue with conventional digital pathology analyses is that features learned by the model may not be scanner-agnostic. For example, with reference to FIG. 18A, plot 1800 illustrates an example t-distributed stochastic neighbor embedding (TSNE) plot of the embeddings obtained from multi-scanner data. Plot 1800 may be created by generating embeddings from image data including images of biological samples captured using two scanners (however other attributes of the slide preparation process may also differ). Each scanner is represented within plot 1800 by one of the colors. For instance, one scanner's embeddings is represented by the "yellow" or lighter-colored clustering and the other scanner's embeddings is represented by the "purple" or darker-colored clustering. As seen from plot 1800, the two clusters are easily distinguishable, indicating that although the same biological samples were imaged by the same two scanners, the scanners impact the embedding generation process and the impacted embeddings can affect downstream classification tasks. Therefore, a technical problem exists in generating a model configured to perform downstream digital pathology classification tasks while also being agnostic to the scanner used to capture the image and/or agnostic to other non-morphological characteristics of the image (e.g., staining agent, magnification, tissue sample thickness, etc.).

Described herein are technical solutions to overcome the aforementioned technical problems. In some embodiments, a sample processing-agnostic model is developed for performing digital pathology classification tasks. The model may employ a student-teacher framework as a backbone. One example of this backbone is the "self-Distillation with NO labels" or DINO framework. Another example of the backbone is the "bootstrap your own latent" or BYOL framework. Both frameworks are described herein as well as enhancements made to the frameworks to develop a sample processing-agnostic model.

In some embodiments, an encoder chosen for use as the model's architecture is a convolutional neural network. For example, the ResNet-18 architecture can be used as the base framework for the encoder. ResNet-18 includes 18 layers organized as four residual blocks. A residual block is one that applies an identity mapping: the input to one layer is also passed directly to another layer. In some embodiments, each residual block is connected to the next layer in the network as well as skipped layers further down the network. The connection between a residual block and a down-network layer is referred to as a shortcut or skip connection, which can bypass one or more layers. Mathematically, if the input x is the input to a layer and the output is *F(x)*, then the output of the residual block can be expressed as *Y = F(x) + x*. ResNet-18, in particular, is a trained convolutional neural network CNN trained on images from the ImageNet database to classify images into one of 1,000 categories. The input image size for ResNet-18 is 256 x 256.

### DINO Base Framework

In some embodiments, the base framework used to build the sample processing-agnostic model is the DINO framework. DINO is a self-supervised learning approach based on knowledge distillation, which causes a network to mimic the output of another network, leading to the propagation of information from a small set of annotations to a large unlabeled database. The knowledge distillation process is even able to be extended to use cases where the images lack labels. For a full description of the DINO framework, reference is made to "Emerging Properties in Self-Supervised Vision Transformers," to Caron et al., 2021.

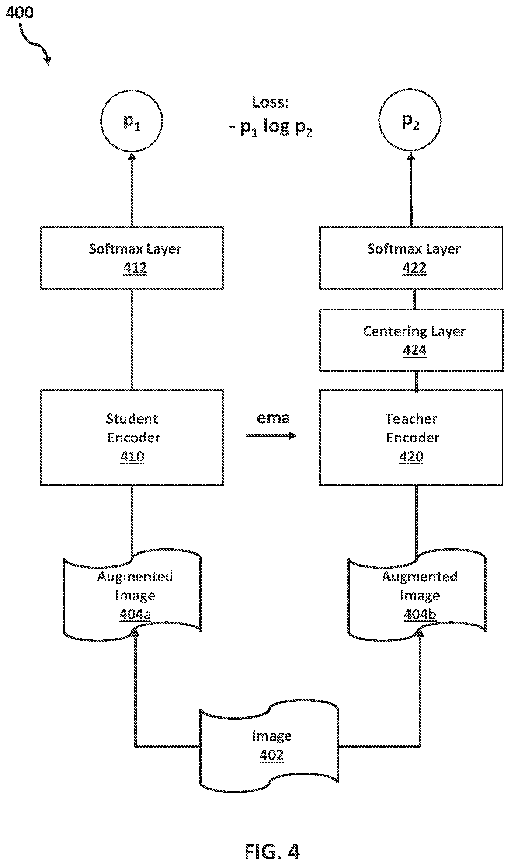

As an example, with reference to FIG. 4, DINO framework 400 includes two networks, the student network formed of student encoder 410 and a softmax layer 412, and the teacher network including teacher encoder 420, softmax layer 422, and a centering layer 424. An image 402, such as an image of a biological sample, may be obtained (e.g., from image database 142). In some embodiments, image 402 may include metadata indicating a scanner that was used to scan the biological sample and produce image 402. Additionally or alternatively, image 402 may include metadata indicating a stainer used to apply a staining agent to the biological sample, a thickness of the biological sample, a magnification level used, or other slide preparation information. In some embodiments, one or more augmentations may be performed to image 402 to obtain augmented images 404a and 404b. The various augmentations that may be performed to image 402 include, but are not limited to, flipping, blurring, cropping, color jittering, or other image augmentations, or combinations thereof. In some embodiments, training data generation subsystem 110 may be configured to perform the augmentation of image 402 to obtain augmented images (also referred to interchangeably as "augmented views") 404a, 404b. In some embodiments, augmented images 404a and 404b may have different augmentations performed to them. For example, augmented image 404a may include a small crop (referred to herein interchangeably as a "local crop"), while augmented image 404b may include a large (referred to herein interchangeable as a "global crop"). By providing local crops to student encoder 410 while global crops (as well as, in some embodiments, the local crops) are provided to teacher encoder 420, a local-to-global mapping can be obtained.

Student encoder 410 and teacher encoder 420 may have a same architecture. For example, student encoder 410 may include a first set of parameters θₛ and teacher encoder 420 may include a second set of parameters θₜ. Student encoder 410 is trained to match the output of teacher encoder 420, whose hyper-parameters are updated based on an average (e.g., an exponential moving average) of student encoder 410. In other words, parameters θₜ may be learned based on parameters θₛ. In some embodiments, parameters θₛ may be learned by minimizing a loss function (Equation 1) using stochastic gradient descent:

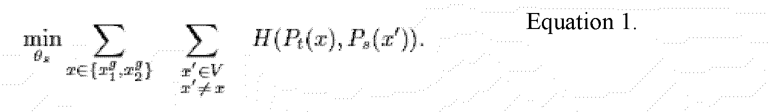

Model training subsystem 112 may be configured to train student encoder 410 and teacher encoder 420. In some embodiments, each of student encoder 410 and teacher encoder 420 may output an embedding representing the input image. Model training subsystem 112 may be configured to pass the embedding from student encoder 410 to softmax layer 412, which outputs p₁. Output p₁ may include elements indicating how likely the image depicts content relating to *K* classes. The probability may be computed using Equation 2: 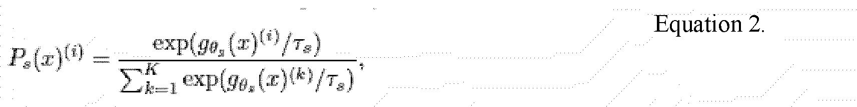 In Equation 2, τ represents a temperature parameter that controls the sharpness of the output distribution, and *g* represents the student or teacher networks.

Model training subsystem 112 may be configured to pass the embedding output from teacher encoder 420 to a centering layer 424. Centering layer 424 may be used to center the output embedding from teacher encoder 420 with a mean computed over the batch of augmented views.

Model training subsystem 112 may be configured to maximize the similarity of the temperature-softmaxed outputs of the student network and the teacher network, as indicated by outputs p₁ and p₂. Using the notation of Equation 2, outputs p₁ and p₂ can be represented as probabilities *Pₛ(x₁)* and *Pₜ(x₂)*, respectively. The similarity can be measured as the cross-entropy loss, denoted by Equation 3: $\begin{matrix}{min}_{{θ}_{s}} H \left({P}_{t}\left({x}_{2}\right), {P}_{s}\left({x}_{1}\right)\right) \\ with H \left(a, b\right) = - alog \left(b\right)\end{matrix}$ Equation 3.

In some embodiments, the technical problem of Equation 3 can be adapted for a larger number of views than the local-global cropping strategy of the DINO framework. For example, different views of an image (e.g., augmented image 404a, image 404b) can be created through application of one or more image augmentations (such as, for example, blurring, flipping, rotating, color distorting, and/or cropping). An augmented image may also be referred to herein interchangeably as an "augmented view." The augmentations may be performed by training data generation subsystem 110 and/or model training subsystem 112.

For one sample, the result of the augmentations is a set *V* of distorted views composed of two global crops, denoted as *x_{g1}* and *x_{g2}*, and several local crops. In some embodiments, all of the crops may be provided to student encoder 410 while only the global crops may be passed to teacher encoder 420. This enables a local-to-global correspondence to be learned.

Model training subsystem 112 may be further configured to solve the optimization problem of DINO, which can be expressed by Equation 4: ${min}_{{θ}_{s}} {L}_{DINO} \left(x\right) = {min}_{{θ}_{s}} {\sum }_{x ∈ \left\{{x}_{{g}_{1}}, {x}_{{g}_{2}}\right\}} {\sum }_{x ′ ∈ V , x ′ \neq x} H \left({P}_{t}\left(x\right), {P}_{s}\left(x′\right)\right)$ Equation 4.

In Equation 4, *x* and *x'* refer to augmented views of an image provided to teacher encoder 420 and student encoder 410, respectively.

In some embodiments, model training subsystem 112 may be configured to propagate gradients through student encoder 410. In some cases, the gradients may only be propagated through student encoder 410. Model training subsystem 112 may apply a gradient stop to the teacher network (e.g., teacher encoder 420, centering layer 424, softmax layer 422) to prevent back-propagation. In some embodiments, model training subsystem 112 may use a momentum encoder to dynamically build the teacher network (e.g., teacher encoder 420). As an example, parameters θₜ may be updated with an exponential moving average (ema) of the weights (of parameters θₛ) of student encoder 410.

### BYOL Framework

In some embodiments, the base framework used to build the sample processing-agnostic model is the BYOL framework. The BYOL model is a self-supervised image representation learning process. The BYOL architecture includes two neural networks: an "online" neural network and a "target" neural network. The online and target neural networks interact and learn from one another. For instance, for a given image, augmented versions of the image can be created, and the online neural network is trained using a first augmented version of the image to predict the target neural network representation of a second augmented version of the image. The rationale behind this process is that the representation of one augmented view of an image should be predictive of the representation of a different augmented view of that same image. Thus, BYOL process includes training a model to generate an enhanced representation by predicting a target representation using a target model.

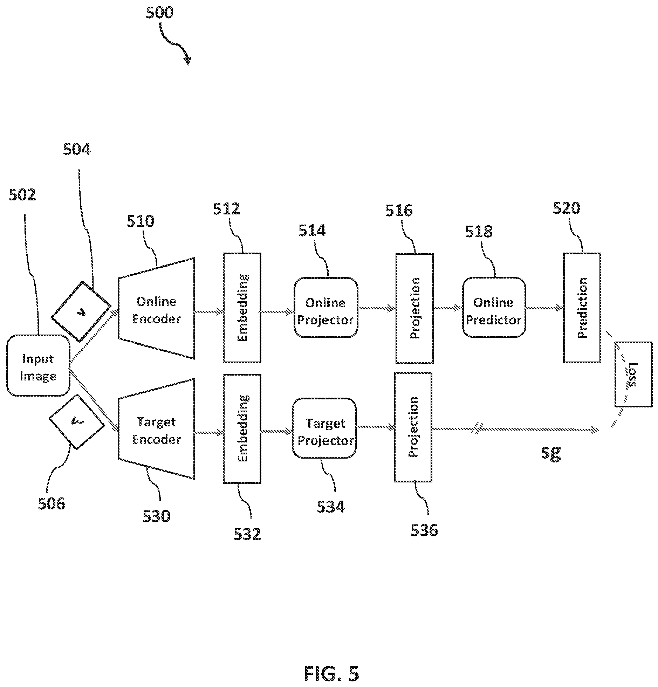

As an example, with reference to FIG. 5, a BYOL framework 500 is presented. In some embodiments, framework 500 is configured to learn a representation *y_{θ}* (for example, for classifying images). Framework 500 may include a first encoder 510 and a second encoder 530. First encoder 510 and second encoder 530 are referred to herein interchangeable as "online encoder 510" and "target encoder 530." In some embodiments, first encoder 510 and/or second encoder 530 may be convolutional neural networks.

First encoder 510 may be defined by a set of weights *θ*, and may include a first stage: encoding *f_{θ}*, a second stage: projecting *g_{θ}*, and a third stage: predicting *q_{θ}*. Second encoder 530 may be defined by another set of weights *ξ*, and may include similar first and second stages, encoding *f_{ξ}* and projecting *g_{ξ}*. In some embodiments, model training subsystem 112 may configure second encoder 530 to train first encoder 510, where weights *ξ* are an exponential moving average of weights *θ*. Thus, after each round of training, model training subsystem 112 may update weights *ξ* according to Equation 5: $ξ ← τξ + \left(1-τ\right) θξ ← τξ + \left(1-τ\right) θ$ Equation 5.

In some embodiments, model training subsystem 112 may be configured to use framework 500 to take an image 502 and apply two (or more) image augmentations to image 502 to generate two augmented versions of image 502 (augmented view 504, *v*, and augmented view 506, *v*'). Model training subsystem 112 may randomly select image 502 from a training set of images (e.g., such as a set of whole slide images depicting biological samples). Some embodiments include image 502 being a sample image to be analyzed by framework 500, or a downstream classifier trained based on framework 500. For example, first encoder 510, after being trained, may be used to classify an image. The augmentations *t* and *t'* applied to image 502 generate a first augmented view 504, *v*, and a second augmented view 506, *v'*, of input image 502. In some embodiments, model training subsystem 112 may be configured to select augmentations *t*, *t'* from a set of predefined augmentations. Augmentation *t* may be selected from a first set of predefined augmentation, while augmentation *t'* may be selected from a second set of predefined augmentations. In some cases, the first and second sets of predefined augmentations may share one or more common types of augmentation (e.g., both sets may include a rotation augmentation), however the sets of predefined augmentations may not share any common types of augmentation.

Model training subsystem 112 may be configured to provide first augmented view *v* and second augmented view *v'* to encoder 510 and encoder 530, respectively. First augmented view *v* and second augmented view *v'* may then be encoded using encoder 510 and encoder 530 to produce a first representation *y_{θ}*, such as embedding 512, and a second representation *y'_{ξ}*, such as embedding 532, respectively. For instance, the encoding by first encoder 510 and second encoder 530 is defined by Equations 6a, 6b, respectively: ${y}_{θ} ≜ {f}_{θ} \left(v\right) {y}_{θ} ≜ {f}_{θ} \left(v\right)$ Equation 6, $y {′}_{ξ} ≜ {f}_{ξ} \left(v′\right) y {′}_{ξ} ≜ {f}_{ξ} \left(v′\right)$ Equation 6.

Model training subsystem 112 may provide first representation *y_{θ}* (e.g., embedding 512) and second representation *y'_{ξ}* (e.g., embedding 532) to first (online) projector 514 and second (target) projector 534. Embedding 512 and embedding 532 may be subsequently used by first projector 514 and second projector 534 to generate a first projection 516, denoted as *z_{θ}*, and a second projection 536, denoted as *z'_{ξ}*, respectively. For instance, the projections by first projector 514 and second projector 534 are defined by Equations 7a, 7b, respectively: ${z}_{θ} ≜ {g}_{θ} \left(y\right) {z}_{θ} ≜ {g}_{θ} \left(y\right)$ Equation 7, $z {′}_{ξ} ≜ {g}_{ξ} \left(y′\right) z {′}_{ξ} ≜ {g}_{ξ} \left(y′\right)$ Equation 7.

In some embodiments, online predictor 518 may be configured to generate a prediction 520, denoted by *q_{θ}(z_{θ})*, based on projection 516. Prediction 520 is a prediction of second projection 536. After generating prediction 520, model training subsystem 112 may be configured to normalize both prediction 520 and projection 536 (for example, an ℓ₂-normalization) to obtain: $\overline{{q}_{θ}} \left({z}_{θ}\right) ≜ \frac{{q}_{θ} \left({z}_{θ}\right)}{{\left‖{q}_{θ}\left({z}_{θ}\right)\right‖}_{2}} \overline{{q}_{θ}} \left({z}_{θ}\right) ≜ \frac{{q}_{θ} \left({z}_{θ}\right)}{{\left‖{q}_{θ}\left({z}_{θ}\right)\right‖}_{2}}$ Equation 8, $\overline{z {′}_{ξ}} ≜ \frac{z {′}_{ξ}}{{\left‖z{′}_{ξ}\right‖}_{2}} \overline{z {′}_{ξ}} ≜ \frac{z {′}_{ξ}}{{\left‖z{′}_{ξ}\right‖}_{2}}$ Equation 9.

The loss function, 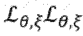 , also referred to interchangeably as the BYOL loss, is defined as: $\begin{matrix}{L}_{θ , ξ} ≜ {\left‖\overline{{q}_{θ}}\left({z}_{θ}\right)-\overline{z {′}_{ξ}}\right‖}_{2}^{2} = 2 - 2 ⋅ \frac{\left〈{q}_{θ}\left({z}_{θ}\right),z{′}_{ξ}\right〉}{{\left‖{q}_{θ}\left({z}_{θ}\right)\right‖}_{2} ⋅ {\left‖z{′}_{ξ}\right‖}_{2}} \\ {L}_{θ , ξ} ≜ {\left‖\overline{{q}_{θ}}\left({z}_{θ}\right)-\overline{z {′}_{ξ}}\right‖}_{2}^{2} = 2 - 2 ⋅ \frac{\left〈{q}_{θ}\left({z}_{θ}\right),z{′}_{ξ}\right〉}{{\left‖{q}_{θ}\left({z}_{θ}\right)\right‖}_{2} ⋅ {\left‖z{′}_{ξ}\right‖}_{2}}\end{matrix}$ Equation 10.

After each training step, model training subsystem 112 may update the weights in accordance with Equation 5 and Equation 10: $θ ← Optimizer \left(θ,{∇}_{θ}{L}_{θ , ξ}^{BYOL}ξ,η\right) θ ← Optimizer \left(θ,{∇}_{θ}{L}_{θ , ξ}^{BYOL}ξ,η\right)$ Equation 11.

In Equation 11, *ηη* is the learning rate, which may be predefined, and ${L}_{θ , ξ}^{BYOL} = {L}_{θ , ξ} + {{L}_{θ , ξ}}^{˜}$ , where ${{L}_{θ , ξ}}^{˜}$ refers to the symmetrized loss function obtained by feeding first augmented view 504 to first encoder 510 and second view 506 to second encoder 530.

After training is completed, model training subsystem 112 may store encoding *f_{θ}* of first encoder 510 in model database 146. The encoding *f_{θ}* of first encoder 510 may be used for training a classifier to classify images. In particular, downstream classification subsystem 114 may be configured to train a classifier to classify images of biological samples encoding *f_{θ}* of first encoder 510 stored by model database 146. In some embodiments, the encoding *f_{θ}* of first encoder 510 may be stored in model database 146 with metadata. For example, the metadata may indicate a time that first encoder 510 was trained and/or validated.

In some embodiments, augmentations that may be applied to input image 502 may include, but are not limited to, which is not to suggest that other listings are random cropping, limiting, flipping about one or more axes, color distortions, adjustments to at least one image brightness, contrast, saturation, or hue, converting to grayscale, blurring, or other augmentations, or combinations thereof.

In some embodiments, encoders 510 and 530 may be convolutional neural networks (CNNs) having a plurality of layers. For example, encoders 510 and 530 may include 3 or more layers, 10 or more layers, 50 or more layers, 100 or more layers, 200 or more layers, and the like. An example deep learning model that can be used for encoders 510 and 530 is ResNet (e.g., ResNet-18).

Described herein are two separate techniques for developing a sample processing-agnostic model. The first technique, the mean embedding similarity approach, does not require modifications to the DINO or BYOL framework to implement. The second technique, the adversarial approach, produces results with improved accuracy when used for downstream classifications, however modifications to the DINO or BYOL framework are needed.

### Mean Embedding Similarity Approach.

In some embodiments, the available data, such as image data 200, may include images of biological (e.g., tissue) samples that have been processed using two (or more) slide preparation machines (e.g., scanned with different scanners, stained with different stainers, etc.). For example, as seen in FIG. 3, training data 300 may be organized such that each biological sample includes one or more images captured by each available slide preparation machine (e.g., slide preparation machines 120). In some embodiments, each slide preparation machine may be configured to stain a biological sample and/or capture an image of a slide including the stained biological sample. Training data generation subsystem 110 may be configured to organize images 202-1 and 202-2 into first image set 310a as both images 202-1 and 202-2 have a same processing technique label 204-1 (e.g., both images 202-1 and 202-2 may have been captured a first scanner, using a first staining agent, a first magnification level, a first tissue thickness, etc.). Similarly, images 202-X and 202-Y, which also depict biological sample 1, may have a same processing label 204-2 (e.g., both images 202-X and 202-Y ay have been captured using a second scanner, using a second staining agent, a second magnification level, a second tissue thickness, etc.).

In some embodiments, training data generation subsystem 110 may be configured to divide each image (e.g., images 202) into a plurality of tiles. The tiles may each be the same size and/or shape and, in some cases, may overlap one another. For example, each tile may represent a 512 x 512 pixel patch. In some embodiments, the images from which the tiles are obtained may be of a larger size (e.g., 100,000 x 100,000 pixels). For example, each tile may be formed by dividing a WSI image into a set of tiles each having a same size (which may or may not overlap). In some embodiments, the tiles may be randomly selected from the larger image.

In some embodiments, the random augmentations may be performed to the tiles. For example, an image (e.g., a whole slide image) may be divided into tiles, and some or all of the tiles may be augmented using one or more predefined image augmentations. Alternatively, the images may be augmented and then the tiles may be obtained therefrom. To that, in some embodiments, images included within training data 300 may correspond to image tiles (e.g., obtained by dividing an image into the tiles), however in some cases training data 300 may include images (e.g., whole slide images) and/or image tiles. Furthermore, training data 300 may further include augmented views of images and/or image tiles. For example, image 202-1 may correspond to an image tile that has had one or more augmentations applied thereto.

In order to develop a model that is agnostic to slide preparation machines, a model needs to be trained to correctly identify the output from two tiles of the same tissue but prepared using different slide preparation machine (e.g., scanned by different scanners). One technical solution to this technical problem is to modify a loss function associated with the model framework (e.g., framework 400 or framework 500) such that embeddings that are too far from other embeddings corresponding to the same tissue sample are penalized.

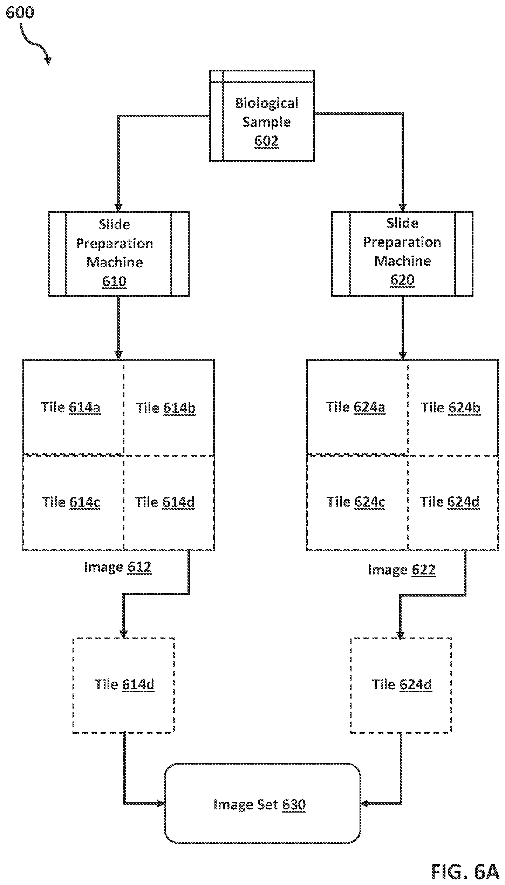

One technique that could be used to perform the penalization is a tile level technique. A tissue sample, scanned by a scanner, can be considered a form of an image augmentation that could be used during the creation of the set of augmented views in the beginning of the framework. Similarly, a tissue sample, prepared by one slide preparation machine, having a set of attributes, may be considered a form of an image augmentation. In some embodiments, a set *V* of crops (e.g., views) may include two tiles corresponding tiles from images prepared using different slide preparation machines (e.g., different scanners). As an example, with reference to FIG. 6A, process 600 includes a biological sample 602 (e.g., a tissue sample), which is provided to a first slide preparation machine 610 and a second slide preparation machine 620. As mentioned above, first slide preparation machine 610 may include a first slide staining machine (e.g., a stainer) and a first slide scanning machine (e.g., a scanner, and second slide preparation machine 620 may include a second slide staining machine and a second slide scanning machine. The attributes of each slide preparation machine may differ. For example, a scanner associated with first slide preparation machine 610 may differ from a scanner associated with second slide preparation machine 620. As another example, a stainer associated with first slide preparation machine 610 may differ from a stainer associated with second slide preparation machine 620. In some embodiments, biological sample 602 may be prepared on a glass slide and stained with hematoxylin and eosin (H&E)-stained slides. Slide preparation machines 610 and 620 (or a scanner associated therewith) may be configured to output first image 612 and second image 622, respectively, each of which depict biological sample 602.

In some embodiments, images 612 may be divided (e.g., via training data generation subsystem 110) into a plurality of image tiles 614a-d and 624a-d, respectively. Although only four image tiles are presented in FIG. 6A, persons of ordinary skill in the art will recognize that other quantities of image tiles may be produced for a given image, and the image tiles may overlap. In some embodiments, corresponding image tiles from different images captured using different slide preparation machines but of a sample biological sample may be identified and included within image set 630. For example, image tile 614d from image 612 and image tile 624d from image 622 may each be included in image set 630. In some embodiments, each image tile in image set 630 may include an identifier indicating the slide preparation machine used to capture and/or prepare that image as well as an identifier indicating a biological sample represented by that tile's corresponding image.

In some embodiments, some or all of the image tiles included in image set 630 may be augmented using one or more image augmentations. For example, image tiles 614d and/or 624d may be rotated, flipped, blurred, have their colors jittered, and the like. The augmented tiles may further include several global and local crops of the images. However, this technique can be impractical to implement because the two tiles that are analyzed should contain the same portion of the biological sample (e.g., tile 614d and tile 624d should depict the same portion of biological sample 602). Registering the similarity in tissue samples depicted by different image tiles can be impractical to track for a large number of images and image tiles, and therefore a slide level technique may be used instead.

In the slide level technique, instead of penalizing the distance (e.g., difference in similarity, measured as a distance in a latent space) between embeddings at the tile level, some embodiments penalize the distance at the slide level. For example, the model in the tile level technique is configured to generate embeddings based on tiles of the image (e.g., tiles 614a-d of image 612). Parameters of the model can then be tuned so that a similarity of embeddings of tiles representing a common portion of the biological sample (e.g., tiles 614d and 624d) is maximized. In the slide level technique, a similarity between embeddings of each image, produced by each scanner, may be maximized. For example, a similarity between an embedding generated based on image 612 and an embedding generated based on image 622, each of which represents biological sample 602, may be maximized. In some embodiments, the similarity that is maximized is the average tile embeddings for two corresponding whole slide images. For example, an embedding is computed for each of image tiles 614a-614d and the embeddings are then averaged together to obtain a first representation of image 612. A similar process may be performed to image tiles 624a-624d to obtain a second representation of image 622.

In some embodiments, a loss may be computed based on the first representation and the second representation. In some embodiments, batches of tiles may be created that include image tiles (and to compute the loss a new fragmentation of the tiles in mini-batches may be performed at each training epoch. Instead of randomly creating batches of tiles, batches may be formed of tiles corresponding to the same biological sample, but from different source images. For example, a batch of image tiles may be created that represent a portion of biological sample 602, but captured by a first scanner (associated with first slide preparation machine 610) and a second scanner (associated with second slide preparation machine 620). For example, a batch of image tiles may include image tile 614d and image tile 624d. In some embodiments, if there are multiple image tiles available to be selected from two or more images, where each tile corresponds to a tile from another image, the image tiles included in the batch may be selected at random. As an example, image tiles 614a-614d and image tiles 624a-624d may be created, each corresponding to an image 612 and 622, respectively captured and/or prepared by slide preparation machines 610 and 620 of biological sample 602. Therefore, to create the batch, training data generation subsystem 110 may select, randomly, one or more pairs of image tiles, such as tiles 614a and 624a, 614b and 624b, 614c and 624c, and 614d and 624d. Each batch may include images - denoted by *{x¹, , x²ⁿ}*, where each element *xⁱ* has at least one corresponding image *x^{j}* (e.g., captured by the *i-*th and *j*-th scanners). Over a given batch, a loss function may be minimized. One example of the loss function is Equation 12: $\begin{matrix}{min}_{{θ}_{s}} \frac{1}{2 n} {\sum }_{i} {L}_{DINO} \left({x}^{i}\right) + λ L \left(\frac{1}{n}{\sum }_{i = 1}^{n} {g}_{s} \left({x}^{i}\right) , \frac{1}{n}{\sum }_{i = n + 1}^{2 n} {g}_{s} \left({x}^{i}\right)\right) \\ where L \left(a, b\right) = 2 \left(1-\frac{a ∗ b}{\left‖a\right‖ \left‖b\right‖}\right)\end{matrix}$ Equation 12.

In Equation 12, *gₛ* represents the student encoder, *θₛ* represents the parameters of the student encoder, and λ represents the scale of the added term. The first term, *L_{DINO}* is given by Equation 4.

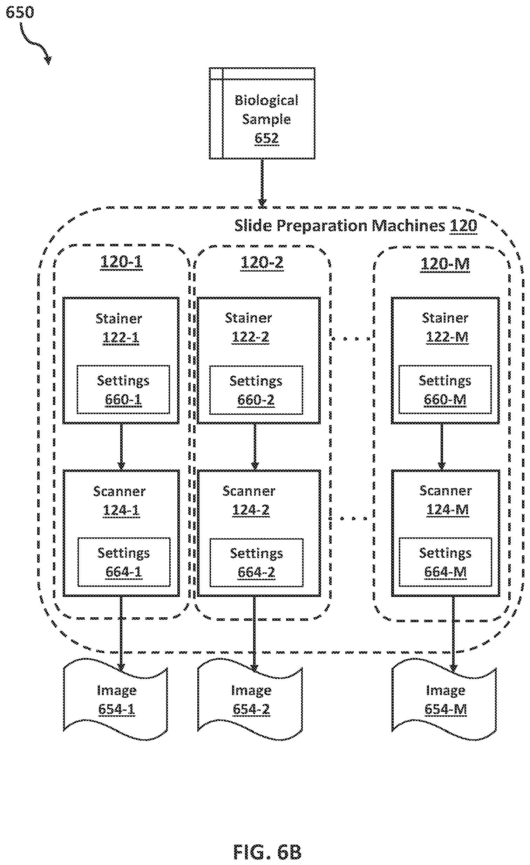

FIG. 6B is a diagram illustrating different slide preparation machines and different settings associated with those slide preparation machines for producing images representing a same biological sample, in accordance with various embodiments. In system 650, a biological sample may be provided to one or more of slide preparation machines 120. For example, biological sample 652 may be prepared on a slide and may be provided to a first slide preparation machine 120-1, a second slide preparation machine 120-2, and an *M*-th slide preparation machine 120-M. Each of slide preparation machines 120-1, 120-2, 120-M may include a slide staining machine and a slide scanning machine. For example, slide preparation machine 120-1 may include a stainer 122-1 and a scanner 124-1, slide preparation machine 120-2 may include a stainer 122-2 and a scanner 124-2, and slide preparation machine 120-M may include a stainer 122-M and a scanner 124-M.

Each of stainers 122-1, 122-2, 122-M may have different settings 660-1, 660-2, 660-M, respectively. Furthermore, each of scanners 124-1, 124-2, 124-M may have different settings 664-1, 664-2, 664-M. Settings 660-1, 660-2, 660-M may indicate different staining agents, tissue thicknesses, stain levels, or other properties of the respective stainer when preparing slides of a biological sample (e.g., biological sample 652), which may subsequently be imaged. Settings 664-1, 664-2, 664-M may indicate different scanner types, models, manufacturers, software, software version, light source, lens, lens material, lens thickness, magnification level, or other properties of the respective scanner when capturing images of a slide of a biological sample. In some embodiments, slide preparation machines 120-1, 120-2, and 120-M may capture one or more images, such as images 654-1, 654-2, and 654-M, respectively. For example, a slide prepared by stainer 122-1 based on settings 660-1 may be provided to scanner 124-1, which may capture image 654-1 based on settings 664-1. Images 654-1, 654-2, and 654-M each depict biological sample 652, however may include differences that can impact downstream classification tasks if not compensated for by making the classification model agnostic to slide preparation machine and the corresponding slide preparation and processing techniques used thereby.

As an example, Tables 1 and 2 below illustrate datasets that may be used to train a machine learning model. As seen from Table 1, the different data sets may employ different stainers to stain biological samples, have different thickness of tissue samples, and have different stain levels, as well as other differences.

**Table 1.**

| **Stainer** | **Thickness** | **Stain Level** | **Label** | **Tot slides** | **Tot tiles** |
|---|---|---|---|---|---|
| Stainer 1 | 2mm | High | 0 | 10 | 0.38M |
| | | Normal | 1 | 10 | 0.38M |
| | | Weak | 2 | 10 | 0.29M |
| | 3mm | High | 6 | 10 | 0.38M |
| | | Normal | 7 | 10 | 0.39M |
| | | Weak | 8 | 10 | 0.38M |
| | 4mm | High | 12 | 10 | 0.36M |
| | | Normal | 13 | 10 | 0.33M |
| | | Weak | 14 | 10 | 0.35M |

**Table 2.**

| **Stainer** | **Thickness** | **Stain Level** | **Label** | **Tot slides** | **Tot tiles** |
|---|---|---|---|---|---|
| Stainer 2 | 2mm | High | 3 | 10 | 0.36M |
| | | Normal | 4 | 10 | 0.39M |
| | | Weak | 5 | 10 | 0.36M |
| | 3mm | High | 9 | 10 | 0.38M |
| | | Normal | 10 | 10 | 0.35M |
| | | Weak | 11 | 10 | 0.37M |
| | 4mm | High | 15 | 10 | 0.36M |
| | | Normal | 16 | 10 | 0.3M |
| | | Weak | 17 | 10 | 0.37M |

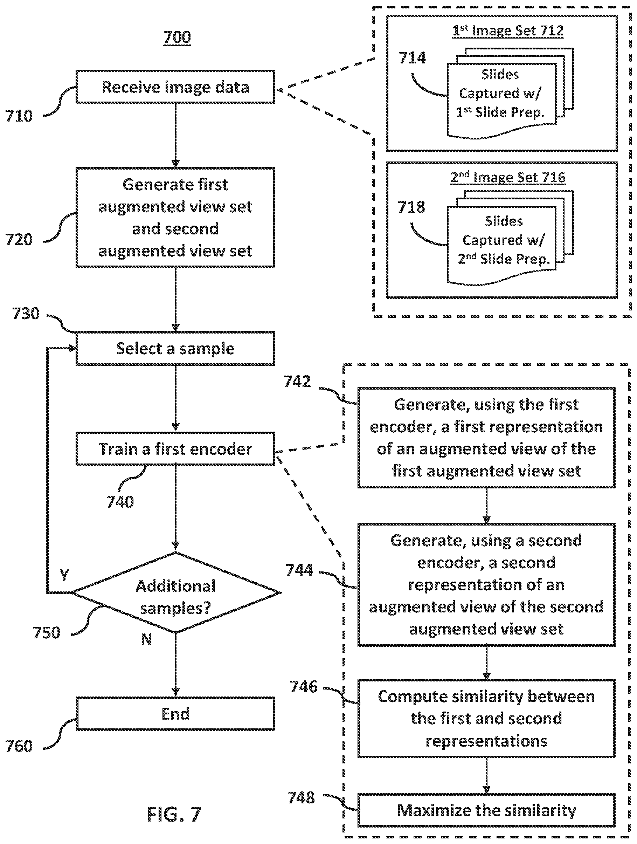

FIG. 7 is a flowchart illustrating an example process 700 for training a sample processing-agnostic model using a mean-similarity training technique, in accordance with various embodiments. Process 700 may begin at operation 710. In operation 710, image data may be received. In some embodiments, the image data may include a first image set 712 and a second image set 716. First image set 712 may include slides 714, representing images (e.g., whole slide images) captured and prepared using a first slide preparation machine (e.g., slide preparation machine 120-1). For example, slides 714 may include slides prepared using a first stainer and/or captured using a first scanner. Each image in first image set 712 may represent an image of one of a plurality of biological samples, such as tissue samples. For example, if ten biological samples are to be imaged, slides 714 may include ten slides, each depicting one of the ten biological samples. Second image set 716 may include slides 718, representing images (e.g., whole slide images) captured using a second slide preparation machine (e.g., slide preparation machine 120-M). For example, slides 718 may include slides prepared using a second stainer and/or captured using a second scanner. Each image in second image set 716 may represent an image of one of a plurality of biological samples, such as tissue samples. Continuing the previous example, if ten biological samples are to be imaged, slides 718 may include ten slides, each depicting one of the ten biological samples. In some embodiments, each biological sample may have an image captured and/or prepared using each available slide preparation machine. For example, for one biological sample, first image set 712 may include one image depicting the biological sample and second image set 716 may include one image depicting the biological sample. The similarities and differences between these two images may be harnessed to train a model to be agnostic to scanner-related and/or stainer-related embedding drivers to improve downstream biological sample classifications. In some embodiments, operation 710 may be performed by a subsystem that is the same or similar to training data generation subsystem 110.

In operation 720, a first augmented view set and a second augmented view set may be generated. The first augmented view set and the second augmented view set may, in some embodiments, respectively correspond to first image set 712 and second image set 716. In some embodiments, the first and second augmented view sets may include the images included by first and second image sets 712 and 716 (e.g., slides 714 and 718, respectively) that have had one or more image augmentations performed thereto. For example, image augmentations that may be performed include rotations, flipping, blurring, color jittering, cropping, or others. In some embodiments, slides 714 and 718 may be divided into image tiles. The image tiles may be overlapping. In some embodiments, the image tiles may have the augmentations performed to them, however alternatively (or additionally) augmentations may be performed prior to dividing the slide into the image tiles. In some embodiments, each augmented view set may include an image depicting each biological sample. For example, the first augmented view set may include an image of a first biological sample (including image tiles of that image) and the second augmented view set may include an image of the first biological sample (including image tiles of that image). In some embodiments, operation 720 may be performed by a subsystem that is the same or similar to training data generation subsystem 110.

In operation 730, a biological sample may be selected. The selected biological sample may be one of the biological samples of which images were captured by the first scanner and the second scanner. For example, biological sample 1 may be selected. Based on the selection, one or more augmented views from the first augmented view set corresponding to biological sample 1 and one or more augmented views from the second augmented view set corresponding to biological sample 1 may be selected. In some embodiments, operation 730 may be performed by a subsystem that is the same or similar to model training subsystem 112.

In operation 740, a first encoder may be trained. The first encoder may be implemented by a convolutional neural network, such as ResNet, a vision transformer, or another machine learning model. The first encoder may be part of DINO framework 400, BYOL framework 500, or another framework. In some embodiments, operation 740 may be performed by a subsystem that is the same or similar to model training subsystem 112.

Operation 740 may include one or more sub-steps. For instance, operation 740 may include a sub-step 742. In sub-step 742, a first representation of an augmented view of the first augmented view set may be generated using the first encoder. In some embodiments, the first representation may be an embedding. An embedding is a mapping of a variable to a vector (an array of numbers). The embedding is a vector representation of features describing the image. An embedding is meaningful if it possesses the features adapted for downstream classification or regression tasks. As an example, the embedding can be a 2048-dimensional vector, while the corresponding medical image (e.g., the whole slide image depicting the biological sample) includes data corresponding to a large number of pixels (e.g., tens of thousands of pixels, hundreds of thousands of pixels, millions of pixels, and the like). In some embodiments, the augmented view of the first augmented view set may include augmented views of image tiles of the corresponding image. For example, a first whole slide image from first image set 712 may be divided into image tiles and then the image tiles may have augmentations applied to them. Each of the image tiles for the first whole slide image may be provided to the first encoder, and an embedding representing each image tile may be generated. In some embodiments, the embeddings representing the image tiles may be combined to generate a mean embedding representation of the corresponding image. As another example, a first whole slide image from first image set 712 may have one or more augmentations applied thereto, and then subsequently divided into image tiles. The image tiles may each be provided to the first encoder to generate embeddings, which may then be combined to generate a mean embedding representation of the corresponding image. In embodiments, if multiple images of the same biological sample are captured by a single scanner, then the same process may be repeated and an overall mean embedding representation may be generated based on each image's corresponding mean embedding representation.

In sub-step 744, a second representation of an augmented view of the second augmented view set may be generated using the second encoder. In some embodiments, the second representation may be an embedding. In some embodiments, the augmented view of the second augmented view set may include augmented views of image tiles of the corresponding image. For example, a second whole slide image from second image set 716 may be divided into image tiles and then the image tiles may have augmentations applied to them. Each of the image tiles for the second whole slide image may be provided to the second encoder, and an embedding representing each image tile may be generated. In some embodiments, the embeddings representing the image tiles may be combined to generate a mean embedding representation of the corresponding image. As another example, a second whole slide image from second image set 712 may have one or more augmentations applied thereto, and then subsequently divided into image tiles. The image tiles may each be provided to the second encoder to generate embeddings, which may then be combined to generate a mean embedding representation of the corresponding image. In embodiments, if multiple images of the same biological sample are captured by a single scanner, then the same process may be repeated and an overall mean embedding representation may be generated based on each image's corresponding mean embedding representation.

In sub-step 746, a similarity between the first representation and the second representation may be computed. In some embodiments, a similarity may be computed based on a loss function. For example, the loss function used may be the DINO loss function or the BYOL loss function, depending on the framework used for training. For example, the loss function for the DINO framework is represented by Equation 12, while the loss function for the BYOL framework is represented by Equation 10 ( ${L}_{θ , ξ}^{BYOL} = {L}_{θ , ξ} + {{L}_{θ , ξ}}^{˜}$, where ${{L}_{θ , ξ}}^{˜}$ refers to the symmetrized loss function obtained by feeding first view 504 to first encoder 510 and second view 506 to second encoder 530).

In sub-step 748, the similarity between the first and second representations may be maximized. Maximizing the similarity may include updating the hyper-parameters of the first encoder and the second encoder. In some embodiments, the updates may be performed using back-propagation. In some embodiments, an optimizer (e.g., see Equation 11) may be used to optimize the loss function. For example, the Adam optimizer may be used.

In some embodiments, after operation 740 is performed for one biological sample's corresponding images (e.g., augmented views of image tiles) the parameters of the second encoder may be updated based on the updates to the first encoder's parameters. For instance, the weights and biases, as well as other parameters, of the second encoder may be updated using an exponential moving average (ema) of the weights and biases of the first encoder.

In operation 750, a determination may be made as to whether any additional biological samples are to be analyzed. For example, if there are N biological samples, the first augmented view set and the second augmented view set may each include N whole slide images (e.g., augmented versions of each of whole slide images 714 and whole slide images 718). Therefore, for the selected biological sample, an augmented view (e.g., tiles obtained by dividing the augmented view) of the image of the selected biological sample from each of the first augmented view set and the second augmented view set may be used to perform one round of training of the first encoder. In some embodiments, the determination may be made after the parameters of the first encoder (as well as, in some cases, the second encoder) have been updated. If, in operation 750, it is determined that there are additional biological samples to be analyzed, process 700 may return to operation 730 where another biological sample may be selected, and the augmented views from each of the first augmented view set and the second augmented view set representing the biological sample may be used to train the first encoder (e.g., by repeating sub-steps 742-748 using the representations of the first and second augmented views). If, however, in operation 750, it is determined that there are no additional biological samples to be analyzed, process 700 may proceed to operation 760. At operation 760, process 700 may end, and the trained model may be stored (e.g., in model database 146). In some embodiments, operations 750 and 760 may be performed by a subsystem that is the same or similar to model training subsystem 112.

In some embodiments, if it is determined, at operation 750, that no additional samples are to be analyzed, the first encoder may be tested/validated using testing data (also referred to herein interchangeably as validation data). For example, the first encoder may be tested using validation data to determine how accurate the trained model is to new data classification tasks. In some embodiments, the accuracy of the trained encoder against the validation may be compared to a threshold accuracy level. If the accuracy is determined to be greater than or equal to the threshold accuracy level, then the model may be stored in model database 146. For example, the trained model may be used for further downstream biological sample classification tasks.

### Adversarial Approach

In some embodiments, the DINO framework and/or the BYOL framework may be modified to facilitate adversarial learning. Conventionally, the DINO and BYOL frameworks are designed for unlabeled data. However, for digital pathology tasks where the datasets include images stained using multiple stainers, captured using multiple scanners, and the like, underlying labels may still exist. For example, metadata indicating a scanner label can be included with each image (and/or image tile) indicating a scanner that was used to capture that image. The scanner labels may be used to ensure that the embeddings encoded by a corresponding encoder of the DINO/BYOL framework only keep morphological characteristics and do not keep, or minimize the impact of, scanner provenance.

The DINO/BYOL frameworks may be modified to form an adversarial learning process whereby two networks compete against each other. The two networks include a "generator" and a "discriminator." The goal in adversarial learning is for the generator to generate results that can fool the discriminator, while the discriminator is designed to discriminate the outputs from the generator.

In the examples described herein, the student encoder of the DINO framework (e.g., student encoder 410) and the online encoder of the BYOL framework (e.g., online encoder 510) may be used as the generator for the adversarial DINO framework and the adversarial BYOL framework, respectively. In some embodiments, the encoders of the DINO/BYOL framework may be trained asynchronously with respect to a discriminator added for adversarial learning. For example, the discriminator's parameters may be updated, followed by the encoders' parameters from the DINO/BYOL frameworks being updated.

### Adversarial DINO Approach

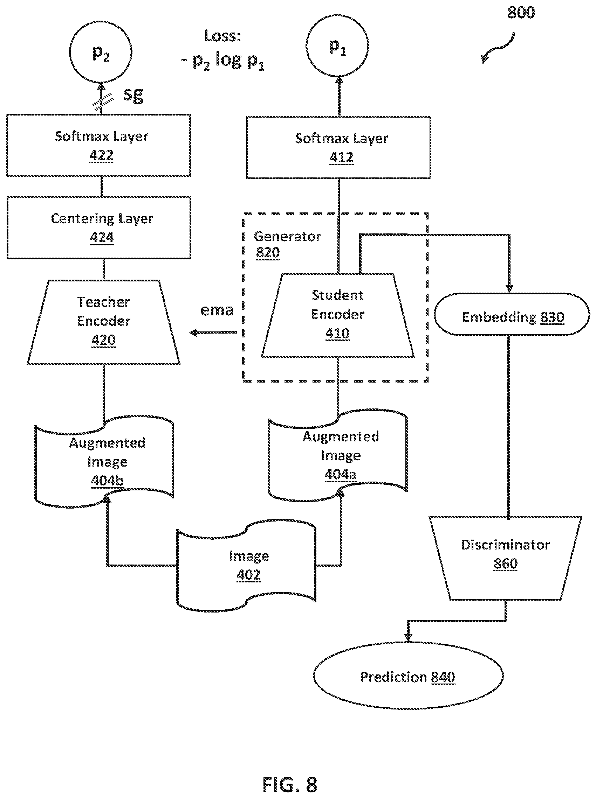

FIG. 8 illustrates an example adversarial framework 800 used to train a model to be agnostic to scanner type when performing digital pathology classifications, in accordance with various embodiments. In some embodiments, adversarial framework 800 may be built on the DINO framework depicted by framework 400 of FIG. 5.

Adversarial framework 800, for instance, may include two paths: one including student encoder 410 and softmax layer 412 (e.g., the "student network") and one including teacher encoder 420, centering layer 424, and softmax layer 422 (e.g., the "teacher network"). An image, such as image 402, may have one or more image augmentations performed thereto to obtain augmented image 404a and image 404b. In some embodiments, augmented images 404a, 404b may represent image tiles of image 402 that have had the image augmentations performed thereto. As mentioned above, with respect to FIG. 5, framework 400 is a self-supervised learning approach based on knowledge distillation, which causes a network to mimic the output of another network, leading to the propagation of information from a small set of annotations to a large unlabeled database. The knowledge distillation process is even able to be extended to use cases where the images lack labels.

In some embodiments, adversarial framework 800 adapts framework 400 such that student encoder 410 acts as a generator 820 for the adversarial learning process. Generator 820 may be configured to encode augmented image 404a (which may be an image tile) to obtain embedding 830. In some embodiments, embedding 830 is the same or similar to the embedding produced by student encoder 410 using framework 400 (for a same image). Adversarial framework 800 may provide embedding 830 to discriminator 860, which may be configured to produce a prediction 840. Prediction 840 includes a prediction by discriminator 860 as to which slide preparation machine was used to produce image 402. For example, prediction 840 may include a prediction of whether image 402 was captured via a first scanner or a second scanner. As another example, prediction 840 may include a prediction of whether image 402 was prepared using a first staining agent or a second staining agent, a first magnification level or a second magnification level, a first tissue thickness or a second tissue thickness, or other attributes of the slide preparation machines used to prepare and capture image 402. In some embodiments, discriminator 860 may be built as a linear layer of input size equal to the dimensions of the output embeddings (e.g., embedding 830) from generator 820. For example, if generator 820 - student encoder 410 - is implemented using a ResNet-18 architecture, then the number of dimensions of embedding 830 would be 512 dimensions, and therefrom discriminator 860 may have an input size of 512 dimensions.

In some embodiments, model training subsystem 112 may be configured to train discriminator 860 to determine a slide preparation machine type of embedding 830 output by generator 820. Furthermore, model training subsystem 112 may be configured to train generator 820 to produce representations (e.g., embeddings) of biological samples that are meaningful and able to fool discriminator 860. Generator 820 takes advantage of framework 400 (e.g., the DINO framework) and the presence of an opponent (e.g., discriminator 860) can improve the created embedding (e.g., embedding 830) such that it has more value. In some embodiments, however, image 402 may be provided to student encoder 410 in addition to first augmented view 404a. Furthermore, as described in greater detail below, in some embodiments, adversarial framework 800 may include a gradient stop (indicated by label "sg") on the teacher network.

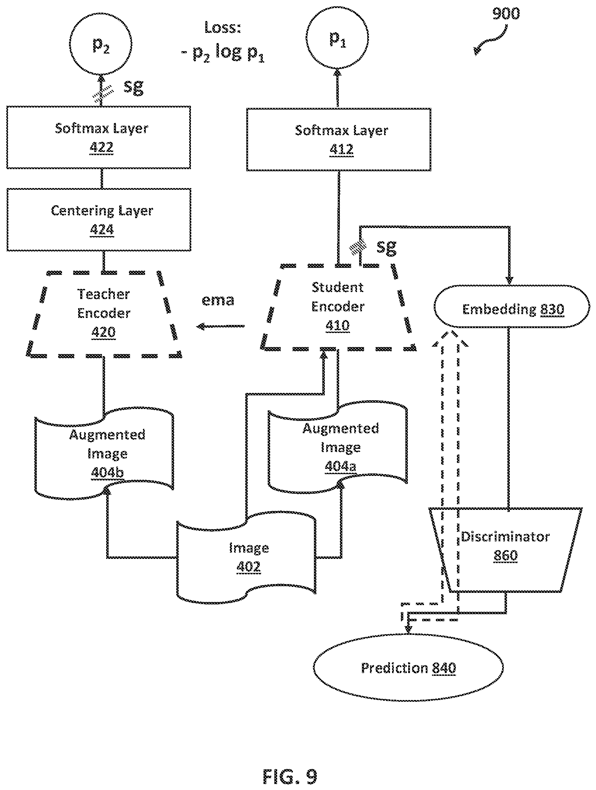

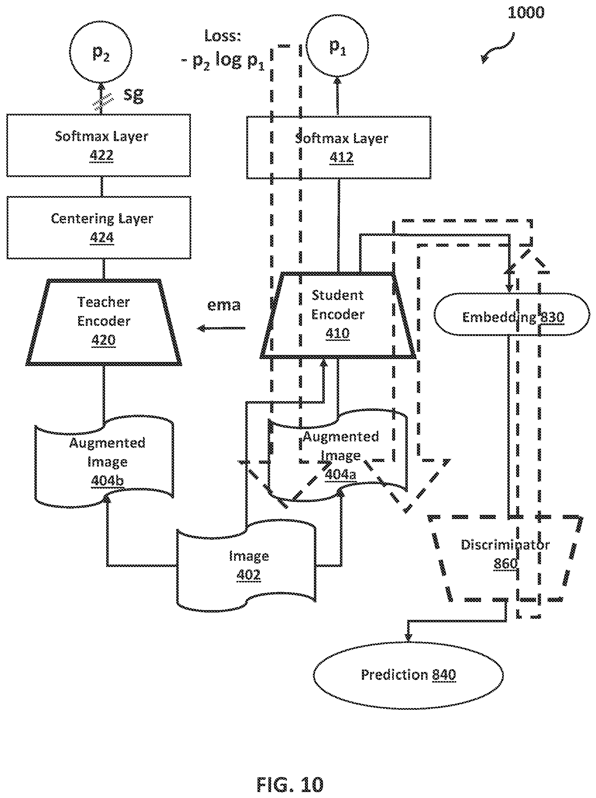

In contrast to the mean embedding similarity approach, where the loss function was the only modification made, adversarial framework 800 needs a new approach to compute the loss. The reason behind this is that an additional network, discriminator 860, needs to be trained. Furthermore, the training of discriminator 860 and student encoder 410 (as well as teacher encoder 420) are not done at the same time. Therefore, two different loss functions can be created at each step of the training process (each mini-batch), and two backward propagations may be performed. Accordingly, some embodiments include model training subsystem 112 performing two training steps, as detailed below and with respect to FIGS. 9 and 10.

During a first step of training, discriminator 860 may be updated. In some embodiments, model training subsystem 112 may be configured to freeze student encoder 410 (as well as teacher encoder 420) so that only parameters of discriminator 860, *θ_{D}*, are updated. Model training subsystem 112 may, as seen by first training step 900 of FIG. 9, freeze student encoder 410 and teacher encoder 420, as indicated by the dashed lines, while allowing backward gradient propagation to be performed with respect to discriminator 860. To freeze student encoder 410 and teacher encoder 420, model training subsystem 112 may be configured to apply a gradient stop "sg." Training discriminator 860 is a fully-supervised classification task. Discriminator 860 is trained, using model training subsystem 112, to predict a type of slide preparation machine (e.g., scanner) that was used to capture image 402 based on embedding 830. Image 402, for instance, can be augmented and tiled to obtain augmented image 404a, which may then be provided to student encoder 410 to be encoded as embedding 830.

In some embodiments, a biological sample depicted by an image may include a slide preparation label (e.g., slide preparation label 204-1). For example, image 402, which as detailed above may correspond to an image tile that has had one or more image augmentations applied thereto, may include a scanner label (e.g., scanner label 252) indicating whether a first scanner or second scanner was used to capture the image depicting the biological sample. Mathematically, for a given sample (e.g., image 402) *x*, which may include a scanner label *y* (or another label), discriminator 860 may be configured to output an *n*-dimensional vector *D(gₛ(x)).* In this example, *n* refers to a number of scanners (i.e., classes) used to capture an image of the biological sample. For example, if there are only two scanners, *n* = 2, the output of discriminator 860 may be an indicator of whether discriminator 860 predicted, based on embedding 830, that the input image *x* was captured using the first or second scanner. In some cases, *n* may refer to a number of samples used to train discriminator 860. In some embodiments, model training subsystem 112 may be configured to minimize a loss function to train discriminator 860. The loss function to be minimized may be the cross-entry loss, defined by Equation 13: ${min}_{{θ}_{D}} {L}_{Discriminator} \left(x\right) = {min}_{{θ}_{D}} - {\sum }_{i = 1}^{n} {y}_{i} log \left(D{\left({g}_{s}\left(x\right)\right)}_{i}\right)$ Equation 13.

During a second step of the training process, the generator (e.g., generator 820) may be updated. In some embodiments, model training subsystem 112 may be configured to perform second training step 1000, as seen in FIG. 10. In particular, during second training step 1000, student encoder 410 (as well as teacher encoder 420) may be updated. During second training step 1000, model training subsystem 112 may freeze discriminator 860 such that only student encoder 410 and teacher encoder 420 are updated, as indicated by the dashed lines of discriminator 860. In some cases, student encoder 410 may be updated and, subsequently, teacher encoder 420 may be updated. For instance, parameters of teacher encoder 420 may be updated with an exponential moving average of the parameters of student encoder 410. Generator 820 (e.g., student encoder 410) may be trained such that it produces meaningful representations of the input images (e.g., input image tiles) while also being able to fool discriminator 860 into incorrectly predicting the scanner used to capture that image.

In some embodiments, model training subsystem 112 may be configured to combine the loss function previously used for discriminator 860 with the traditional DINO loss function. The combined loss function is described by Equation 14: ${min}_{{θ}_{s}} {L}_{DINO} \left(x\right) - μ {L}_{Discriminator} \left(x\right)$ Equation 14.

The combined loss function recited in Equation 14 can be used by model training subsystem 112 to minimize the DINO loss (e.g., the loss function for framework 400) while also maximizing a loss for discriminator 860. In Equation 14, µ represents a parameter used to scale the added loss (e.g., the discriminator loss) in comparison to the DINO loss.

### Adversarial BYOL Approach

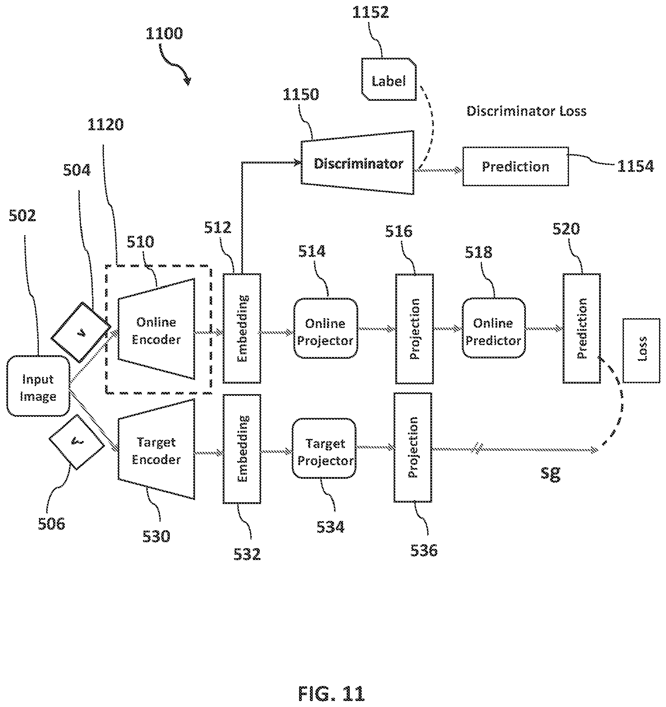

FIG. 11 illustrates another example adversarial framework 1100 used to train a model to be agnostic to attributes associated with slide preparation machines when performing digital pathology classifications, in accordance with various embodiments. In some embodiments, adversarial framework 1100 may be built on the BYOL framework depicted by framework 500 of FIG. 5.

Adversarial framework 1100, for instance, may include two paths: one including online encoder 510, online (first) projector 514, and online predictor 518 (e.g., the "online network") and one including target encoder 530 and target (second) projector 534 (e.g., the "target network"). An image, such as image 502, may have one or more image augmentations performed thereto to obtain augmented views 504 and 506. In some embodiments, augmented views 504, 506 may represent image tiles of image 502 that have had the image augmentations performed thereto.

In some embodiments, adversarial framework 1100 adapts framework 500 such that online encoder 510 acts as a generator 1120 for the adversarial learning process. Generator 1120 may be configured to encode augmented view 504 (which may be an image tile) to obtain embedding 512. Adversarial frame 1100 may provide embedding 512 to a discriminator 1150, which may be configured to produce a prediction 1154. Prediction 1154 may include a prediction by discriminator 1150 as to which slide preparation machine was used to produce image 502. For example, prediction 1154 may include a prediction of whether image 502 was captured via a first scanner or a second scanner. As another example, prediction 1154 may include a prediction of whether image 502 was prepared via a first stainer or a second stainer (or via a first staining agent or a second staining agent, which may be applied by a same or different slide staining machine). In some embodiments, discriminator 1150 may be built as a linear layer of input size equal to the dimensions of the output embeddings (e.g., embedding 512) from generator 1120. For example, if generator 1120 - student encoder 410 - is implemented using a vision transformer architecture, then the number of dimensions of embedding 512 would be 512 dimensions, and therefrom discriminator 1150 may have an input size of 512 dimensions.

In some embodiments, model training subsystem 112 may be configured to train discriminator 1150 to determine a slide preparation machine type of embedding 512 output by generator 1120. Furthermore, model training subsystem 112 may be configured to train generator 1120 to produce representations (e.g., embeddings) of biological samples that are meaningful and able to fool discriminator 1150. Generator 1120 takes advantage of framework 500 (e.g., the BYOL framework) and the presence of an opponent (e.g., discriminator 1150) can improve the created embedding (e.g., embedding 512) such that it has more value.

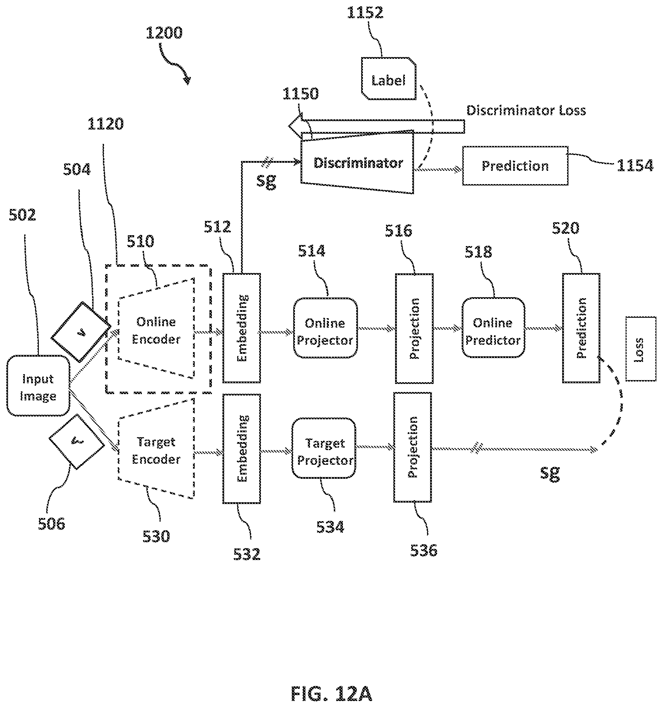

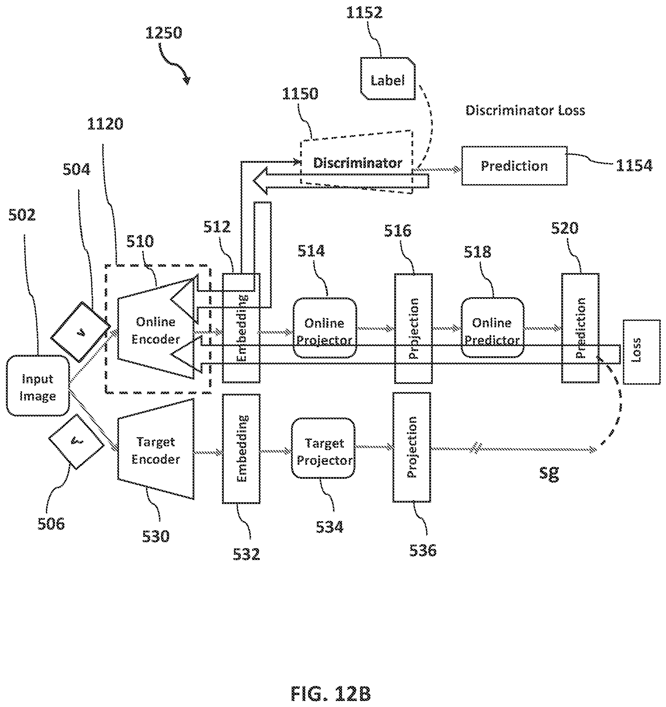

Similar to the adversarial DINO approach, the adversarial BYOL approach also needs to have a loss computed. Furthermore, the training of discriminator 1150 and online encoder 510 (as well as target encoder 530) may not be done at the same time. Therefore, two different loss functions can be created at each step of the training process (each mini-batch), and two backward propagations may be performed. Accordingly, some embodiments include model training subsystem 112 performing two training steps, as detailed below and with respect to FIGS. 12A and 12B.

During a first step of training, discriminator 1150 may be updated. In some embodiments, model training subsystem 112 may be configured to freeze online encoder 510 (as well as target encoder 530) so that only parameters of discriminator 1150, *θ_{D}*, are updated. Model training subsystem 112 may, as seen by first training step 1200 of FIG. 12A, freeze online encoder 510 and target encoder 530, as indicated by the dashed lines, while allowing backward gradient propagation to be performed with respect to discriminator 1150. To freeze online encoder 510 and target encoder 530, model training subsystem 112 may be configured to apply a gradient stop "sg." In some embodiments, training discriminator 1150 is a fully-supervised classification task. Discriminator 1150 is trained, using model training subsystem 112, to predict a type of scanner that was used to capture image 502 based on embedding 512. Image 502, for instance, can be augmented and tiled to obtain augmented image 504, which may then be provided to online encoder 510 to be encoded as embedding 512.

In some embodiments, a biological sample depicted by an image may include a slide preparation label (e.g., slide preparation label 204-1). For example, image 502, which as detailed above, may correspond to an image tile that has had one or more image augmentations applied thereto, may include a scanner label (e.g., scanner label 252) indicating whether a first scanner or second scanner was used to capture the image depicting the biological sample. Mathematically, for a given sample (e.g., image 502) v, which may include a label 1152, discriminator 1150 may be configured to output an *n*-dimensional vector *D(gₛ(x))*, such as prediction 1154. In this example, *n* refers to a number of scanners (i.e., classes) used to capture an image of the biological sample. For example, if there are only two scanners, *n* = 2, the output of discriminator 1150 may be an indicator of whether discriminator 1150 predicted, based on embedding 512, that the input image *v* was captured using the first or second scanner. In some embodiments, model training subsystem 112 may be configured to minimize a loss function to train discriminator 1150. The loss function to be minimized may be the cross-entry loss, defined by Equation 13.

During a second step of the training process, the generator (e.g., generator 1120) may be updated. In some embodiments, model training subsystem 112 may be configured to perform second training step 1250, as seen in FIG. 12B. In particular, during second training step 1250, online encoder 510 (as well as target encoder 530) may be updated. During second training step 1250, model training subsystem 112 may freeze discriminator 1150 such that only online encoder 510 and target encoder 530 are updated, as indicated by the dashed lines of discriminator 1150. In some cases, online encoder 510 may be updated and, subsequently, target encoder 530 may be updated. For instance, parameters of target encoder 530 may be updated with an exponential moving average of the parameters of online encoder 510. Generator 1120 (e.g., online encoder 510) may be trained such that it produces meaningful representations of the input images (e.g., input image tiles) while also being able to fool discriminator 1150 into incorrectly predicting the slide preparation machine used to prepare and capture that image.

In some embodiments, model training subsystem 112 may be configured to combine the loss function previously used for discriminator 1150 with the traditional BYOL loss function. The combined loss function may be described by Equation 14, with the exception that the DINO loss term is replaced with the BYOL loss term. In some embodiments, the BYOL framework (e.g., framework 500) may be updated, using model training subsystem 112, by back propagation of the combined loss of the BYOL network and the discriminator.

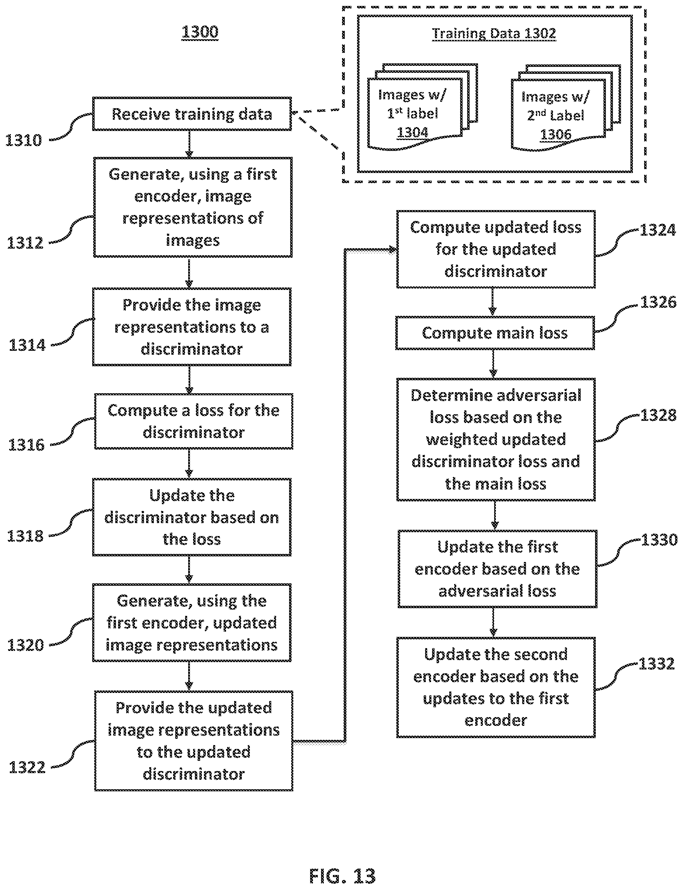

FIG. 13 is a flowchart illustrating an example process 1300 for training a sample processing-agnostic model using adversarial training techniques, in accordance with various embodiments. Process 1300 may begin at operation 1310. In operation 1310, training data 1302 may be received. In some embodiments, training data 1302 may include a first image set 1304 and a second image set 1306. First image set 1304 may include images (e.g., whole slide images) captured using a first slide preparation machine (e.g., slide preparation machine 120-1). For example, images included in first image set 1304 may include images captured using a first scanner and/or prepared using a first stainer. Each image in first image set 1304 may represent an image of one of a plurality of biological samples, such as tissue samples. For example, if ten biological samples are to be imaged, image sets 1304 and 1306 may each include ten slides, each depicting one of the ten biological samples. Second image set 1306 may include images (e.g., whole slide images) captured using a second slide preparation machine (e.g., slide preparation machine 120-M). For example, images included in first image set 1306 may include images captured using a second scanner and/or prepared using a second stainer. Each image in second image set 1306 may represent an image of one of a plurality of biological samples, such as tissue samples.

In some embodiments, each biological sample may have an image captured thereof using each available scanner. For example, for one biological sample, first image set 1304 may include one image depicting the biological sample and second image set 1306 may include one image depicting the biological sample. The similarities and differences between these two images may be harnessed to train a model to be agnostic to scanner-related and/or stainer-related embedding drivers to improve downstream biological sample classifications. In some embodiments, operation 1310 may be performed by a subsystem that is the same or similar to model training subsystem 112.

In some embodiments, augmented views of some or all of the images included in first image set 1304 and second image set 1306. Each image in first image set 1304 may include a first slide preparation label indicating that a first slide preparation machine was used to prepare and capture that image, and each image in second image set 1306 may include a second slide preparation label indicating that a second slide preparation machine was used to prepare and capture that image. In some embodiments, the images included within each of image sets 1304 and 1306 may correspond to augmented views of the respective images. For example, training data 1302 may include a first augmented view set and a second augmented view set. The first augmented view set and the second augmented view set may, in some embodiments, respectively correspond to first image set 1304 and second image set 1306. In some embodiments, the first and second augmented view sets may include the images included by first and second image sets 1304 and 1306 that have had one or more image augmentations performed thereto. For example, image augmentations that may be performed include rotations, flipping, blurring, color jittering, cropping, or others. In some embodiments, the images in first image set 1304 and second image set 1306 may be divided into image tiles. The image tiles may be overlapping. In some embodiments, the image tiles may have the augmentations performed to them, however alternatively (or additionally) augmentations may be performed prior to dividing the slide into the image tiles. In some embodiments, each augmented view set may include an image depicting each biological sample. For example, the first augmented view set may include an image of a first biological sample (including image tiles of that image) and the second augmented view set may include an image of the first biological sample (including image tiles of that image). In some embodiments, training data 1302 may include image tiles (including the applied image augmentations), each having a label associated therewith indicating one or more attributes associated with a slide preparation machine used to prepare and/or capture that image tile's corresponding image. For example, each image may have a label indicating a scanner used to capture the corresponding image.

In some embodiments, a biological sample may be selected. The selected biological sample may be one of the biological samples prepared and/or captured via the first slide preparation machine or the second slide preparation machine. In an example, the selected biological samples may be one of the biological samples captured by the first scanner and the second scanner. For example, biological sample 1 may be selected. Based on the selection, one or more augmented views (e.g., whole slide images, image tiles) from the first augmented view set corresponding to biological sample 1 and one or more augmented views from the second augmented view set corresponding to biological sample 1 may be selected.

In operation 1312, image representations may be generated using a first encoder. Some embodiments include generating image representations for a subset of images from first image set 1304 and/or second image set 1306. The first encoder may, for example, refer to online encoder 510. The images for which the image representations are generated may correspond to whole slide images or image tiles, which may also include image augmentations applied thereto. In some embodiments, the images may depict a selected biological sample prepared and/or captured using a first slide preparation machine, the first slide preparation machine being associated with the first label. Alternatively or additionally, the images may depict a selected biological sample prepared and/or captured using a second slide preparation machine, the second slide preparation machine being associated with the second label. In some embodiments, the image representations may correspond to embeddings generated to represent the image depicting the selected biological sample (e.g., images of the biological sample including the first label). As an example, embedding 512 may be produced by online encoder 510. In some embodiments, the embedding may be a 2048-dimensional vector. In some embodiments, operation 1312 may be performed by a subsystem that is the same or similar to model training subsystem 112.

In operation 1314, the image representations may be provided to a discriminator configured to predict a slide preparation machine or attribute thereof used to prepare and/or capture the image of the selected biological sample. As an example, discriminator 1150 may receive embedding 512 and may attempt to determine whether image 502 (represented by embedding 512) was imaged by a first scanner or a second scanner. In some embodiments, discriminator 1150 may be built as a linear layer of input size equal to the dimensions of the output embeddings (e.g., embedding 512) from generator 1120. For example, if generator 1120 - online encoder 510 - is implemented using a ResNet-18 architecture, then the number of dimensions of embedding 512 would be 512 dimensions, and therefrom discriminator 1150 may have an input size of 512 dimensions. In some embodiments, operation 1314 may be performed by a subsystem that is the same or similar to model training subsystem 112.

In operation 1316, a loss for the discriminator may be computed. The discriminator loss may be computed based on prediction 1154 obtained from discriminator 1150. As mentioned previously, prediction 1154 is a prediction by discriminator 1150 of which of the n possible slide preparation machines and/or attributes associated with those slide preparation machines was used to prepare and/or capture an image of a biological sample from which the input embedding was derived. For example, prediction 1154 may indicate whether image 502 was prepared using a first or second slide staining machine, was captured using a first or second slide scanning machine, etc. In some embodiments, operation 1316 may be performed by a subsystem that is the same or similar to model training subsystem 112.

In operation 1318, the discriminator may be updated based on the loss computed in the previous step. Updating the discriminator may include updating the parameters of the discriminator based on the computed discriminator loss. For example, parameters θ_{D} may be updated based on the computed loss. In some embodiments, the parameters may be updated using back propagation. As mentioned above, the parameters of online encoder 510 and target encoder 530 may remain frozen during the updating of parameters θ_{D} of discriminator 1150. Updating the parameters of the discriminator represents a training operation for the discriminator. In other words, the discriminator is trained by updating the discriminator's parameters based on the discriminator loss computed in operation 1316. In some embodiments, operation 1318 may be performed by a subsystem that is the same or similar to model training subsystem 112.

In operation 1320, updated image representations of the images may be generated using the first encoder. For example, the same images passed to the encoder during operation 1312 may again be passed to the first encoder. The images may be passed to the encoder again because, during the previous step (e.g., updating the discriminator), the BYOL/DINO framework was detached i.e., not updated. Therefore, now that the discriminator has been updated, the images can be encoded by the first encoder so as to train the components of the BYOL/DINO framework that were previously frozen. In some embodiments, operation 1320 may be performed by a subsystem that is the same or similar to model training subsystem 112.

In operation 1322, the updated image representations may be provided to the updated discriminator. For example, image representations for the images input to the first encoder after the discriminator was updated (at operation 1318) may be obtained and passed to the updated discriminator. In operation 1324, an updated loss for the updated discriminator may be computed. Operation 1324 may be substantially similar to operation 1316 with the exception that at operation 1324, the discriminator's parameters have been updated and the updated image representations may be used. In some embodiments, operations 1322 and 1324 may be performed by a subsystem that is the same or similar to model training subsystem 112.

In operation 1326, a main loss may be computed. The main loss function used may be the DINO loss function or the BYOL loss function, depending on the framework used for training. For example, the loss function for the DINO framework is represented by Equation 12, while the loss function for the BYOL framework is represented by Equation 10 ( ${L}_{θ , ξ}^{BYOL} = {L}_{θ , ξ} + {{L}_{θ , ξ}}^{˜}$ , where ${{L}_{θ , ξ}}^{˜}$ refers to the symmetrized loss function obtained by feeding first view 504 to first encoder 510 and second view 506 to second encoder 530). In some embodiments, operation 1326 may be performed by a subsystem that is the same or similar to model training subsystem 112.

In operation 1328, an adversarial loss may be determined based on the updated discriminator loss and the main loss. In some embodiments, the adversarial loss may be computed with a weight applied to the updated discriminator loss. To compute the adversarial loss, the updated discriminator loss, weighted, may be subtracted from the main loss. For example, as seen in Equation 14, the weight µ may be applied to the discriminator loss term, which may be subtracted from the adversarial loss term. In some embodiments, operation 1328 may be performed by a subsystem that is the same or similar to model training subsystem 112.

In operation 1330, the first encoder may be updated based on the determined adversarial loss. For example, parameters *θ_{S}* of student encoder 410 may be updated (e.g., using backward propagation). As another example, for adversarial framework 1100, which is built on the BYOL framework, the BYOL loss may be computed and parameters *θ_{Online}* of online encoder 510 may be updated (e.g., using backward propagation). In some embodiments, operation 1330 may be performed by a subsystem that is the same or similar to model training subsystem 112.

In operation 1332, the second encoder may be updated based on the updates made to the first encoder. In some embodiments, the second encoder's parameters may be updated based on the updated parameters of the first encoder. For example, parameters *θ_{T}* of teacher encoder 420 and parameters *θ_{Target}* of target encoder 530 may be updated based on parameters *θ_{S}* of student encoder 410 and parameters *θ_{Online}* of online encoder 510, respectively. For example, an exponential moving average of parameters *θ_{S}* of student encoder 410 (where parameters *θ_{S}* of student encoder 410 have already been updated based on the discriminator loss) may be used to update parameters *θ_{T}* of teacher encoder 420. In some embodiments, operation 1332 may be performed by a subsystem that is the same or similar to model training subsystem 112.

In some embodiments, process 1300 may repeat for additional sample images. For example, additional images of biological samples included in training data 1302 may be retrieved after the second encoder is updated at operation 1332. In some embodiments, a determination may be made as to whether any additional biological samples are to be analyzed. For example, if there are N biological samples, the first augmented view set and the second augmented view set may each include N whole slide images (e.g., augmented versions/tiles of each of whole slide images from first image set 1304 and/or augmented versions/tiles of whole slide images from second image set 1306). Therefore, for the selected biological sample (whose images are used at operation 1312 and then again at operation 1320), an augmented view (e.g., tiles obtained by dividing the augmented view) of the image of the selected biological sample from each of the first augmented view set and the second augmented view set may be used to perform one round of training of the first encoder. In some embodiments, the determination may be made after the parameters of the first encoder (as well as, in some cases, the second encoder) have been updated. If it is determined that there are additional biological samples to be analyzed, process 1300 may return to operation 1312 where another biological sample may be selected and process 1300 may repeat.

In some embodiments, if it is determined, that no additional samples are to be analyzed, the first encoder may be tested/validated using testing data (also referred to herein interchangeably as validation data). For example, the first encoder may be tested using validation data to determine how accurate the trained model is to new data classification tasks. In some embodiments, the accuracy of the trained encoder against the validation may be compared to a threshold accuracy level. If the accuracy is determined to be greater than or equal to the threshold accuracy level, then the model may be stored in model database 146. For example, the trained model may be used for further downstream biological sample classification tasks. In some embodiments, the validation steps may be performed on the second encoder instead or in addition to the first encoder.

The aforementioned training techniques (e.g., mean-similarity embedding approach, adversarial approach) may be used to "pre-train" an encoder for downstream classification tasks. After being pre-trained, each framework can be tested. In some cases, the only hyper-parameter that varies is the scale term in the global loss function (λ and µ for the mean-similarity embedding approach and the adversarial approach, respectively). For example, higher values of the scale term may increase the ability of the model to be agnostic to scanner origin. In some embodiments, the other hyper-parameters may remain the same. In some cases, the optimizer used is the Adam optimizer, as detailed, for example, in "Adam: A method for stochastic optimization," to Kingma et al.. As an example, whereas for stochastic gradient descent the learning rate is fixed, the Adam optimizer computes an exponential moving average of the gradient and the squared gradient, and the decay rate of the moving averages is controlled with two parameters.

### Downstream Task

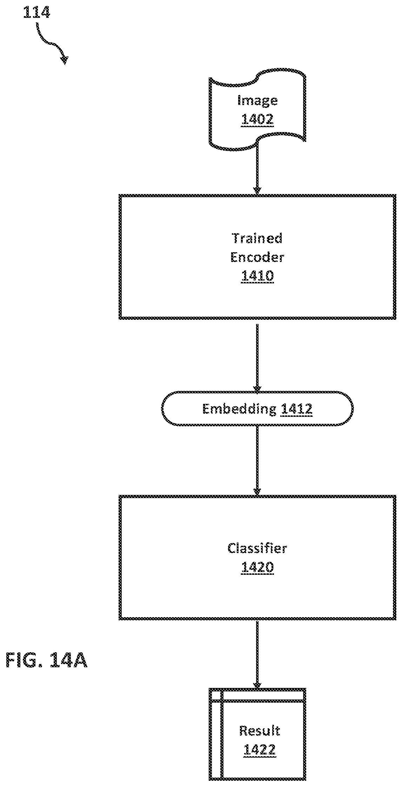

In some embodiments, a downstream task may be set up to evaluate the quality of the pre-trained encoders. The pre-trained encoder may alternatively or additionally be used for a number of independent tasks, such as survival prediction, cell detection and segmentation, mitosis detection, or other tasks. The downstream task is a fully-supervised classification task to detect whether a biological sample depicts a pre-defined characteristic associated with a condition, based on an image of that biological sample prepared and captured by a given slide preparation machine. For example, the downstream task may be to determine whether an image of a tissue sample includes a depiction of a tumor. In some embodiments, the downstream task is computed by taking the trained encoder from the mean-similarity embedding approach, as well as the trained encoder from the adversarial approach and concatenating each to a fully-connected classifier. As an example, with reference to FIG. 14A, downstream classification subsystem 114 may be configured to perform downstream classifications of images depicting biological samples to evaluate the quality of each pre-trained encoder - for the mean-similarity embedding approach, the DINO framework and the BYOL framework, and for the adversarial approach, the adversarial DINO framework and the adversarial BYOL framework. For example, trained encoder 1410 may refer to framework 400 (e.g., the DINO framework), framework 500 (e.g., the BYOL framework), framework 800 (e.g., the adversarial DINO framework), or framework 1100 (e.g., the adversarial BYOL framework).

Trained encoder 1410 may be provided with an image 1402 depicting a biological sample. For example, image 1402 may depict a tissue sample. The tissue sample may be a tissue sample including a tumor or other abnormality, or the tissue sample may depict "normal" tissue (e.g., no abnormalities). Trained encoder 1410 may be configured to generate an embedding 1412 representing image 1402 in a latent space. For example, embedding 1412 may be an n-dimensional vector. In some embodiments, embedding 1412 may be input to a fully-connected classifier 1420, which is configured to output a result 1422. Result 1422 may indicate a determination from classifier 1420 of whether the biological sample depicted by image 1402 represents a particular abnormality or depicts another pre-defined characteristic. In some embodiments, result 1422 may be a binary flag indicating whether the tissue sample depicted by image 1402 is a tumor.

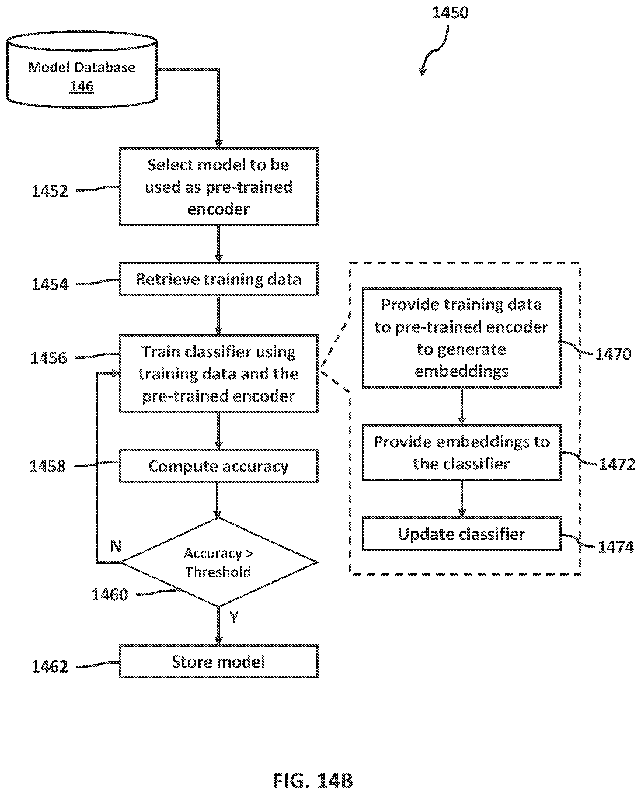

FIG. 14B is an illustrative flowchart of an example process 1450 for training a classifier, in accordance with various embodiments. In some embodiments, process 1450 may begin in operation 1452. In operation 1452, a model may be selected for use as a pre-trained encoder to backbone a downstream classifier. The model may be selected from model database 146. For example, pre-trained encoders having one of the frameworks, such as frameworks 400, 500, 800, or 1100, may be selected. The selected framework may be concatenated with a fully-connected classifier for downstream classification tasks, such as, for example, determining whether a whole slide image of a tissue sample depicts abnormal tissue, such as a tumor. In some embodiments, operation 1452 may be performed by a subsystem that is the same or similar to downstream classification subsystem 114.

In operation 1454, training data for training the classifier may be retrieved. For example, training data for training the classifier may be retrieved from training data database 144. In some embodiments, the training data may include images (e.g., image tiles) depicting biological samples prepared and/or captured using one slide preparation machine. This is to determine/ensure model agnosia to different slide preparation machines, as detailed below. The images used to train the classifier may differ from those that were used to train the encoder. For instance, each of the images used to train the classifier may not have a corresponding image included in the images used to train the encoder. In some embodiments, operation 1454 may be performed by a subsystem that is the same or similar to training data generation subsystem 110, model training subsystem 112, and/or downstream classification subsystem 114.

In operation, a classifier may be trained using the retrieved training data and the pre-trained encoder. For example, classifier 1420 may be trained using the retrieved training data and pre-trained encoder 1410. In some embodiments, training the classifier may include one or more sub-steps, such as sub-steps 1470-1474. In sub-step 1470, the training data may be provided to the pre-trained encoder to generate embeddings representing each image included in the training data. The training data, for example, may include images/image tiles depicting biological samples captured using a scanner and/or stainer. In some embodiments, the training data may include images captured using only one scanner, using only one stainer, or using only one slide preparation machine (which may include a scanner and a stainer). In sub-step 1472, the embeddings produced by the pre-trained encoder may be provided to the classifier. The classifier may be configured to generate a classification result. The classification result may include a flag indicating whether a given biological sample depicted by a given image/image tile depicts an abnormal biological sample or a normal biological sample. For example, the flag may indicate whether an image tile depicts a tissue sample that includes a tumor or normal tissue. The classification result may be a vector or array indicating a likelihood that the image depicts one of a pre-defined set of classes. For example, if there are two classes (e.g., normal tissue class or tumorous tissue class), then each value in the vector or array may represent a probability that a given image depicts the two different classes. In sub-step 1474, the classifier may be updated based on the classification result. For example, weights and biases of the classifier may be updated based on the classification result. In some embodiments, each of sub-steps 1470-1474 may be repeated for each image included in the training data.

In operation 1458, an accuracy of the trained classifier may be computed. In some embodiments, the accuracy may be computed based on validation data. The validation data may include images/image tiles depicting biological samples having a known classification. The accuracy may be computed by determining a number or percentage of images that were correctly classified by the classifier. In some embodiments, operation 1458 may be computed by a subsystem that is the same or similar to model training subsystem 112 and/or downstream classification subsystem 114.

In operation 1460, the accuracy of the classifier may be compared to a predefined threshold accuracy score to determine whether the classifier's accuracy is greater than the threshold accuracy score. For example, the threshold accuracy score may be 75% or greater, 85% or greater, 90% or greater, 95% or greater, or other values. If the accuracy score is determined to be less than (or equal to) the threshold accuracy score, process 1450 may return to operation 1456 where the classifier may be re-trained or further trained. In some embodiments, process 1450 may return to operation 1454 where new or updated training data is selected and/or retrieved, and the classifier is further trained based on the new or updated training data. Some embodiments may include resetting the classifier's parameters and/or the pre-trained encoder, or selecting a different pre-trained encoder if the accuracy score is less than the predefined threshold accuracy score. For example, if the accuracy score is less than the threshold accuracy score for more than N iterations, then the parameters of the classifier may be reset. In some embodiments, operation 1460 may be performed by a subsystem that is the same or similar to model training subsystem 112 and/or downstream classification subsystem 114.

In operation 1462, the trained classifier may be stored. For example, the trained classifier may be stored in model database 146. In some embodiments, operation 1460 may be performed by a subsystem that is the same or similar to model training subsystem 112 and/or downstream classification subsystem 114.

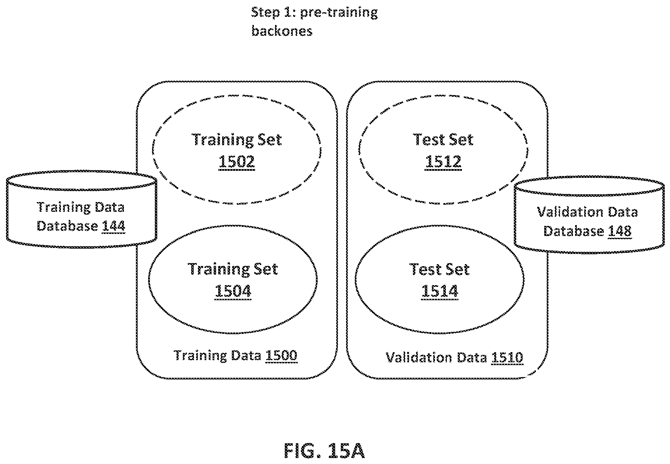

In some embodiments, downstream classification subsystem 114 may be designed to serve two functions: (1) verify a base quality of the trained encoders and (2) test the trained encoders' ability to be agnostic to slide preparation machine provenance. To do so, model training subsystem 112 may be configured to train classifier 1420 with data from one of the slide preparation machines (e.g., one scanner) while testing the classifier on data from multiple (or all) slide preparation machines (e.g., multiple scanners). This differs from the pre-training of the encoders, which used data from each slide preparation machine to perform both training and validation. As an example, with reference to FIG. 15A, during the pre-training of the encoders, training data sets 1500 may include a first training set 1502 including images of biological samples captured using a first scanner (indicated by the dashed-lines) and a second training set 1504 including images of the biological samples captured using a second scanner (indicated by the solid-lines). As another example, first training set 1502 may include images of biological samples captured using a first slide preparation machine and second training set 1504 may include images of the biological samples captured using a second slide preparation machine.

In some embodiments, each image included within first training set 1502 may include a same slide preparation label (e.g., a scanner label corresponding to scanner 124-1), while each image included within second training set 1504 may include a same slide preparation label (e.g., a scanner label corresponding to scanner 124-2). The images, which may be tiled and augmented versions, may be provided to an encoder to be trained. For example, images 402, 502may each be an image included in first training set 1502 or second training set 1504. Validation data 1510 may, similar to training data sets 1500, include a first test set 1512 including images depicting biological samples prepared and captured by the first slide preparation machine and a second test set 1514 including images depicting the biological samples prepared and captured by the second slide preparation machine. In some embodiments, each image included within first test set 1512 may include a same slide preparation label (e.g., a scanner label corresponding to scanner 124-1), while each image included within second test set 1514 may include a same slide preparation label (e.g., a scanner label corresponding to scanner 124-2). In some embodiments, images included in validation data 1510 may have their labels masked. The images, which may be tiled and augmented versions, may be provided to the trained encoder to test the accuracy of the trained encoder. For example, images 402 and 502may each be an image included in first test set 1512 or second test set 1514.

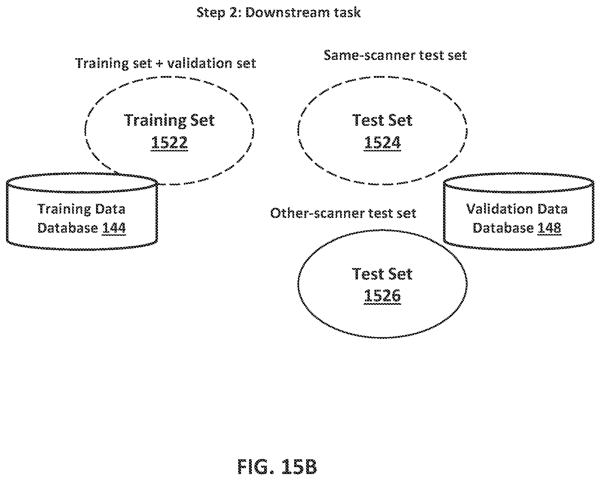

As seen by FIG. 15B, the downstream training of classifier 1420 may use different data for training and validation. For example, the training data used to train the classifier may include training data set 1522, which may include images depicting biological samples captured using the first scanner. Alternatively, training data set 1522 may include images depicting the biological samples but using the second scanner.

In some embodiments, the downstream classifier (e.g., classifier 1420) may be tested using first test set 1524, including images prepared and captured by the first slide preparation machine, and may also be tested using second test set 1526, including images prepared and captured by the second slide preparation machine. If more slide preparation machine are used to prepare and/or capture images of the biological samples, then test sets including images depicted by those slide preparation machines may also be used during testing of the trained classifier.

The data used to create training data and validation data used to pre-train an encoder and train a downstream classifier is detailed below.

### Data for Pre-Training the Encoder

During the pre-training stage, which is a self-supervised training, images stored in image database 142 may originate from multiple slide preparation machines. For example, images captured by two scanners may be stored in image database 142, as indicated by Table 3.

**Table 3.**

| **Scanner** | **Slides** | **Tiles** |
|---|---|---|
| Scanner 1 | 271 | 2288954 |
| Scanner 2 | 271 | 1750349 |

In some embodiments, each image may depict a biological sample, such as a tissue sample. Some or all of the biological samples may represent tumorous samples from various clinical trials (e.g., datasets from various cancer studies). In some embodiments, a scanner of each slide preparation machine may be set to a same magnification setting. For example, the slides captured by Scanner 1 and Scanner 2, of Table 3, may be captured at 20x magnification. In some embodiments, for each slide, tiles may be extracted. For instance, training data generation subsystem 110 may be configured to generate the training data and validation data used to train and validate frameworks 400, 500, 800, or 1100. The tiles may be overlapping. The tiles may subsequently be split into training data and validation data, stored in training data database 144 and validation data database 148.

### Downstream Training

In some embodiments, some or all of the images stored in image database 142 may include a label indicating whether the biological sample depicted by a given image is "normal" or "abnormal." For example, images may include a label indicating whether a tissue sample depicted by an image is a normal tissue sample or a tumor sample, and for the downstream task, training data generation subsystem 110 and/or downstream classification subsystem 114 may be configured to select, from the available images, images including the "normal" label and images including the "abnormal" label. By selecting the images including these labels, the number of samples used for training, validating, and testing the scanner-agnostic model may be significantly reduced.

Table 4 below includes an example of a size of the training data, validation data, and test data after filtering of images lacking "normal" or "abnormal" labels.

**Table 4.**

| | | **Slides** | **Total Tiles** | **Abnormal Tiles** | **Normal Tiles** |
|---|---|---|---|---|---|
| **Training** | Scanner 1 | 100 | 397615 | 368023 | 29592 |
| | Scanner 2 | 101 | 352294 | 340455 | 11839 |
| **Validation** | Scanner 1 | 21 | 83329 | 77466 | 5863 |
| | Scanner 2 | 21 | 77637 | 73776 | 3861 |
| **Test** | Scanner 1 | 22 | 77444 | 70787 | 6657 |
| | Scanner 2 | 22 | 71336 | 68631 | 2705 |

Training data generation subsystem 110 may be configured to split the sets of tiles into subsets, grouped based on slide preparation machine (e.g., Scanner 1 or Scanner 2), and role in the training process (e.g., training, validating, testing). Therefore, for a two-scanner system (e.g., slide preparation machines 120 include slide preparation machine 120-1 and slide preparation machine 120-2), six subsets of samples are created. Furthermore, training data generation subsystem 110 may be configured to split the various tiles amongst the different roles in the training process such that corresponding slides belong to a same corresponding set. Thus, no tile from the test subsets is included or has a counterpart used during the training portion of the training process.

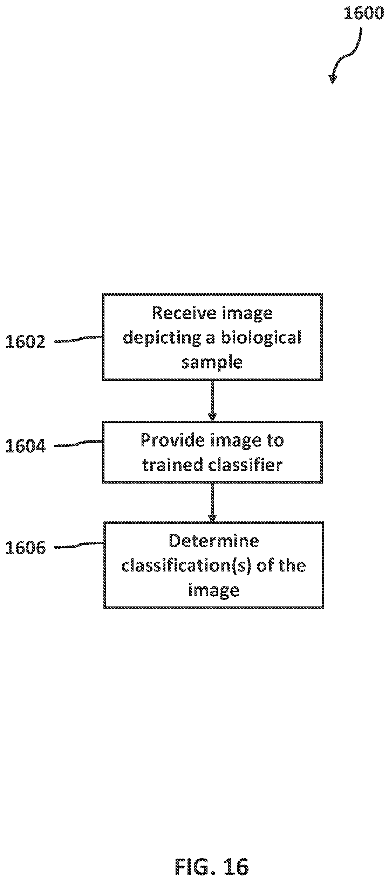

FIG. 16 is a flowchart illustrating an example process 1600 for analyzing an image of a biological sample, in accordance with various embodiments. In some embodiments, process 1600 may begin at operation 1602. In operation 1602, an image depicting a biological sample may be received. The biological sample may be prepared on a slide using a slide preparation machine, and an image may be captured using a slide scanning machine (the slide staining machine and the slide scanning machine may be part of a same slide preparation machine). In some embodiments, the slide preparation machine type, settings, or other characteristics may be unknown. For example, the scanner may be one of a set of scanners with which a model was trained to be agnostic to, during classification of biological samples. In some embodiments, the received image may be one of a set of images captured by a scanner depicting a particular biological sample. In some embodiments, operation 1602 may be performed by a subsystem that is the same or similar to downstream classification subsystem 114.

In operation 1604, the image may be provided to a trained classifier. The trained classifier may be trained using a backbone framework such as framework 800 (e.g., the adversarial DINO framework) or framework 1100 (e.g., the adversarial BYOL framework). For example, classifier 1420 may be provided with the image received at operation 1602. In some embodiments, operation 1604 may be performed by a subsystem that is the same or similar to downstream classification subsystem 114.

In operation 1606, one or more classifications of the image may be determined by the trained classifier. For example, the trained classifier may generate an embedding representing the image using a trained encoder (e.g., encoder 1410), and the embedding produced by the trained encoder may be provided to the trained classifier to obtain a classification result. The classification result may include one or more classifications for the biological sample. For example, the classification result may include a classification that the biological sample represents an abnormal biological sample (e.g., a tumor). In some embodiments, operation 1606 may be performed by a subsystem that is the same or similar to downstream classification subsystem 114.

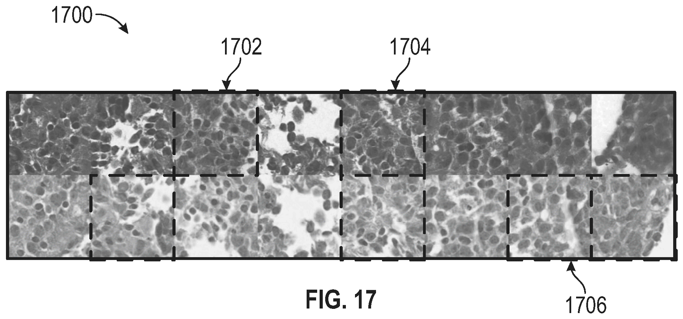

FIG. 17 illustrates a diagram of an example cross-scanner benchmark dataset. The two rows of image tiles within dataset 1700 may represent images of biological samples captured via one of two different scanners. For example, the top row may represent image tiles of biological samples captured using a first scanner, and the bottom row may represent image tiles of biological samples captured using a second scanner. Image pairs 1702, 1704, and 1706 may represent various pairs of image tiles. For example, image pair 1702 may include two image tiles representing a same slide (e.g., a same slide of a biological sample) captured using two different scanners. Image pair 1706 may include two image tiles representing a same slide captured using a same scanner. Image pair 1704 may include two image tiles representing a same tile identified by two different scanners. Image pair 1704 may be a registered pair. A registered pair may include images whose contents are supposed to be the same and the only difference may be in color appearance (for instance, if those images came from different scanners). Image pair 1702 may not be a registered pair because the contents of the two images may not be the same. When embeddings are generated for each of the image pairs, a distance in a latent space between a given pairs embeddings may differ. For example, the average L2 distance of the embeddings produced for the image tiles of image pair 1702 may be greater than the average L2 distance of the embeddings produced for the image tiles of image pair 1704. The average L2 distance of the embeddings produced for the image tiles of image pair 1704 may, however, be less than the average L2 distance of the embeddings produced for the image tiles of image pair 1706.

In some embodiments, a cross scanner ratio may be computed based on the average distance between registered image pairs of the same tile from the same scanner (e.g., image pair 1704) and the average distance between unregistered image pairs of the same slide but from different scanners (e.g., image pair 1702). For example, the cross scanner ratio may be: 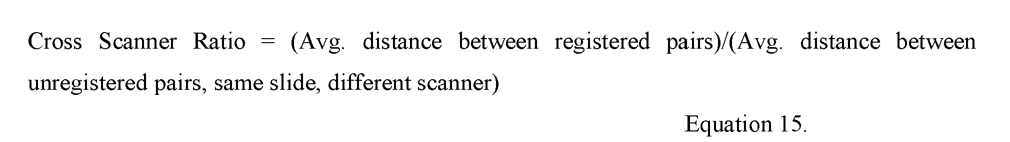 Cross Scanner Ratio = (Avg. distance between registered pairs)/(Avg. distance between unregistered pairs, same slide, different scanner) Equation 15.

The same scanner ratio may be computed based on the average distance between registered image pairs of the same tile from the same scanner (e.g., image pair 1704) and the average distance between unregistered pairs of the same slide by the same scanner. The lower these ratios are, the better the trained model is at being agnostic to various slide preparation techniques (e.g., scanners). For example, the same scanner ratio may be: 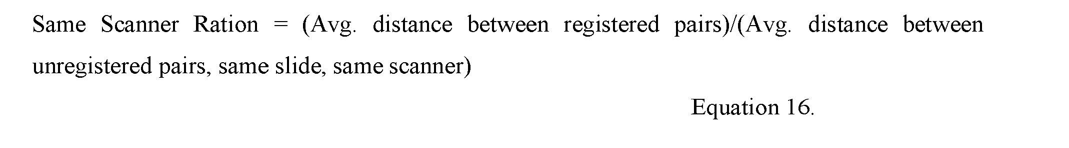 Same Scanner Ration = (Avg. distance between registered pairs)/(Avg. distance between unregistered pairs, same slide, same scanner) Equation 16.

### Example Results

The results are provided below with reference to Tables 5 and 6, including comparisons of the different approaches using the DINO framework (e.g., framework 400 and framework 800). Additionally, some of the results describe the results of a ResNet-18 model pre-trained on the ImageNet data set. In some embodiments, one or more hyper-parameters are tuned. For example, the weight decay may be tuned to avoid over-fitting, and the learning rate may also be tuned. In some cases, the Adam optimizer is used.

**Table 5.**

| **DINO** | **Cross Scanner Ratio** | **Same Scanner Ratio** |
|---|---|---|
| Base model | 0.937 | 1.772 |
| Adversarial model | **0.832** | **1.246** |

**Table 6.**

| **BYOL** | **Cross Scanner Ratio** | **Same Scanner Ratio** |
|---|---|---|
| Base model | 0.768 | 0.883 |
| Adv model | **0.543** | **0.548** |

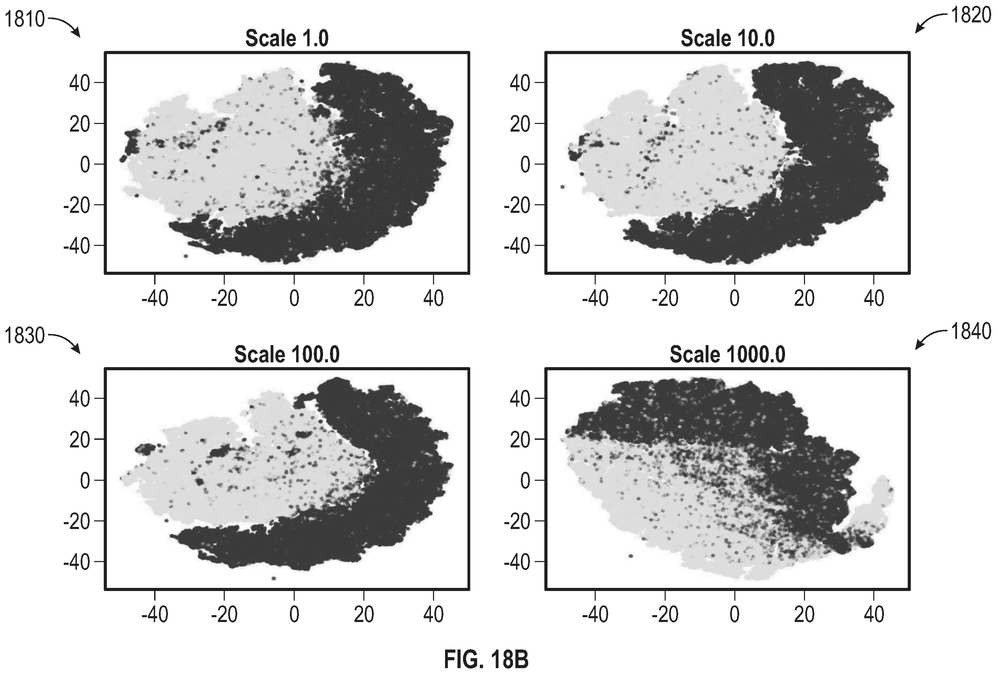

FIG. 18B illustrates various plots 1810-1840 of representations created by an encoder for biological samples included in the validation data for an encoder trained using the mean similarity approach, in accordance with various embodiments. Each of plots 1810-1840 may be depicted as TSNE plots, and can be used to highlight whether an encoder trained using the mean embedding similarity approach is agnostic to slide preparation machine provenance. Plots 1810-1840 show the learned features by various encoders with different scales. The scale, for example, may refer to λ from Equation 12. Plots 1810-1840 show the learned features of different versions of the mean similarity approach for different scales. For example, plot 1810 includes λ = 1.0, plot 1820 includes λ = 10.0, plot 1830 includes λ = 100.0, and plot 1840 includes λ = 1000.0. Some embodiments include, for each of plots 1810-1840, the data points each corresponding to an embedding representing an image tile, and each color corresponding to a particular slide preparation machine type. For example, the yellow (or lighter-colored) data points may represent embeddings of image tiles prepared and captured using a first slide preparation machine, while the purple (or darker-colored) data points may represent embeddings of image tiles captured using a second slide preparation machine.

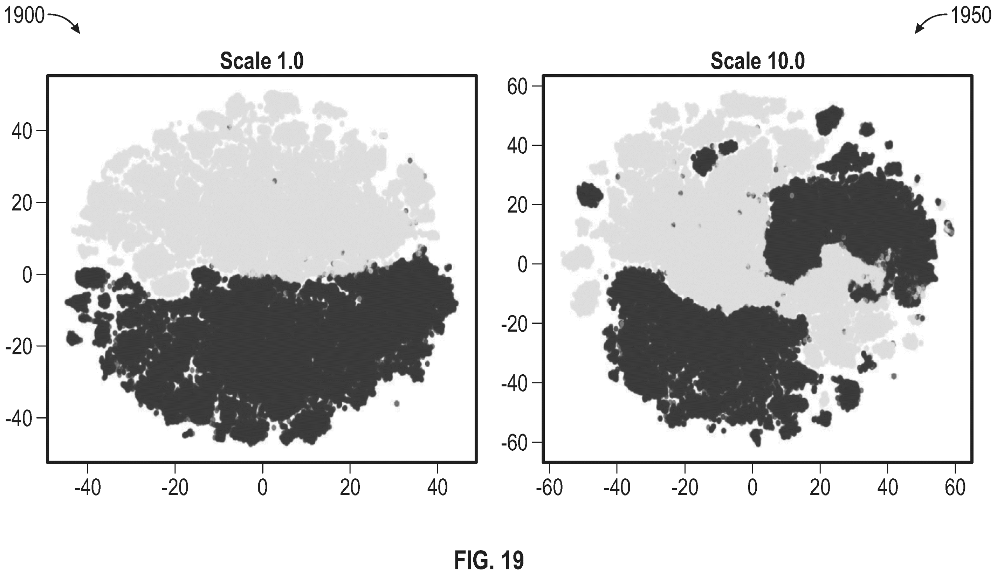

FIG. 19 illustrates plots 1900 and 1950 of representations created by an encoder for biological samples included in the validation data for an encoder trained using the adversarial approach, in accordance with various embodiments. Each of plots 1900-1950 may be depicted as TSNE plots, and can be used to highlight whether an encoder trained using the adversarial approach is agnostic to slide preparation machine provenance. Plots 1900-1950 show the learned features by various encoders. For example, plots 1900-1950 show the learned features of different versions of the adversarial approach for different scales. Here, the scale refers to the weight applied to the discriminator loss (e.g., µ in Equation 14). For example, plot 1900 include µ = 1.0, and plot 1950 includes µ = 10.0. Some embodiments include, for each of plots 1900-1950, the data points each corresponding to an embedding representing an image tile, and each color corresponding to a particular slide preparation machine type. For example, the yellow (or lighter-colored) data points may represent embeddings of image tiles captured using a first slide preparation machine, while the purple (or darker-colored) data points may represent embeddings of image tiles captured using a second slide preparation machine.

FIGS. 18B and 19 indicate that the higher the scale, the more "slide preparation machine-agnostic" (or "slide processing-agnostic) the model can be. For instance, for high scales, the TSNE plots are observed to be more mixed. The reasoning behind this is that the scale sets the importance of the slide preparation machine-agnostic penalization in comparison with the traditional loss (e.g., BYOL loss, DINO loss). In particular, for the adversarial framework, TSNE plots for higher scale values (e.g., plot 1950) illustrates a fragmentation of the clusters leading to the beginning of a noticeable merge of the clusters. The mixing is less obvious for the mean embedding similarity approach, for example.

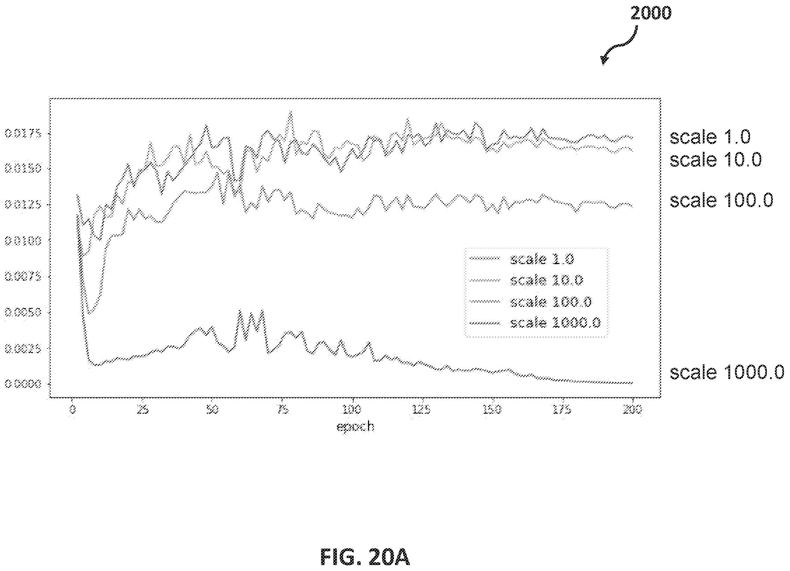

FIG. 20A illustrates a plot 2000 of the standard deviation of embeddings over training for the mean embedding similarity approach, in accordance with various embodiments. Self-supervised techniques can present challenges to ensure that the model does not collapse. A model that collapses may refer to a model that produces a constant output regardless of the input. The DINO framework (e.g., framework 400) and the BYOL framework (e.g., framework 500) is designed to avoid model collapse. For example, the embeddings produced by the teacher encoder (in the DINO framework) pass through a centering layer and sharpening steps, which helps avoid model collapse. However, the modifications made to the DINO framework with penalizations to ensure that the model is agnostic to slide preparation machine type, there is a greater risk for model collapse. Model collapse can be detected based on the distribution of the learned features. For example, computing system 102 may be configured to monitor the standard deviation of the embeddings produced during training.

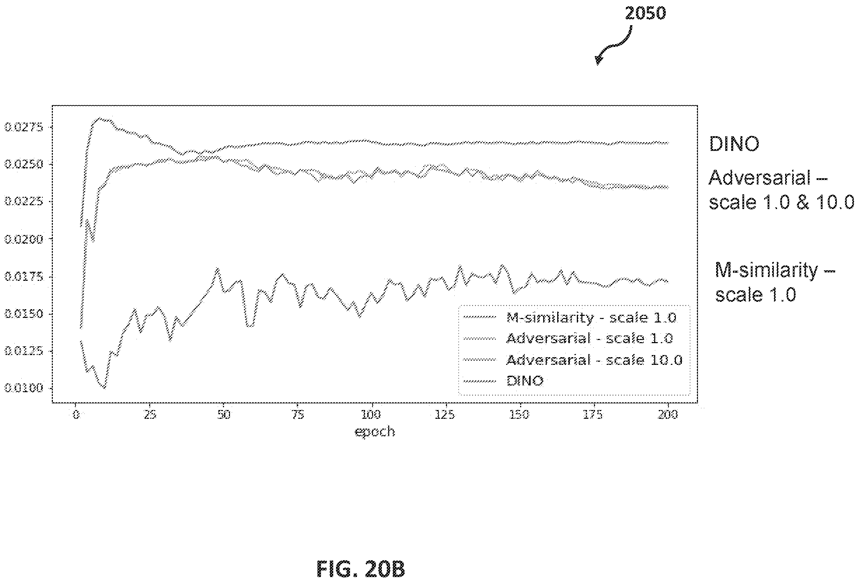

FIG. 20B illustrates a plot 2050 of the standard deviation of embeddings over training for the mean embedding similarity approach and the adversarial approaches, in accordance with various embodiments. The different traces of plot 2050 may correspond to the different training approaches used. For example, one trace indicates the standard deviation of embeddings produced via the mean-similarity approach with a scale of λ = 1.0. Other traces indicate the standard deviation of embeddings produced via the adversarial approaches with different scales, such as µ = 1.0 and µ = 10.0. Another trace indicates the standard deviation of embeddings produced via the DINO framework.

In some embodiments, the training process may be evaluated using several metrics. For the example datasets described above with respect to Tables 3 and 4, the data is imbalanced, and therefore the various frameworks may be ranked based on their AUC-PR score. Tables 7 and 8 below illustrate the results of the various metrics for the test data set. For example, downstream classification subsystem 114 may be configured to evaluate the trained model using test data, as included in Table 7. In Table 7, the test data used to validate the trained model and the training data used to train the model may include images captured using the same scanner. In Table 8, the test data used to validate the trained model and the training data used to train the model may include images captured using different scanners.

**Table 7.**

| Model | Acc | F1₀ | F1₁ | MCC | Rec | Prec | ROC*_{AUC}* | PR*_{AUC}* |
|---|---|---|---|---|---|---|---|---|
| Adversarial₁ | 97.9 | 98.9 | 77.5 | 77.9 | 94.9 | 65.4 | 99.5 | 93.9 |
| Adversarial₁₀ | 97.8 | 98.8 | 76.4 | 76.9 | 94.7 | 64.0 | 99.4 | 93.2 |
| ImageNet | 98.0 | 98.9 | 77.8 | 77.9 | 93.1 | 66.8 | 99.4 | 92.2 |
| M-similarity | 96.1 | 97.9 | 64.6 | 66.4 | 93.9 | 49.2 | 99.0 | 87.7 |
| DINO | 96.3 | 98.1 | 66.1 | 67.8 | 94.6 | 50.8 | 99.0 | 87.4 |

**Table 8.**

| Model | Acc | F1₀ | F1₁ | MCC | Rec | Prec | ROC*_{AUC}* | PR*_{AUC}* |
|---|---|---|---|---|---|---|---|---|
| Adversarial₁ | 97.9 | 98.8 | 88.6 | 87.7 | 95.4 | 82.8 | 99.4 | 96.6 |
| Adversarial₁₀ | 98.1 | 99.0 | 89.1 | 88.1 | 88.8 | 89.3 | 99.3 | 95.8 |
| ImageNet | 94.0 | 96.6 | 73.2 | 72.6 | 95.9 | 59.2 | 99.0 | 93.4 |
| DINO | 94.7 | 97.1 | 73.4 | 71.3 | 84.7 | 64.7 | 96.8 | 80.8 |
| M-similarity | 91.9 | 95.5 | 58.9 | 55.1 | 67.6 | 52.2 | 92.4 | 63.3 |

FIG. 20A illustrates that the encoder trained with the largest scale factor seems to collapse. While this can occur for some extreme cases, other versions do not appear to collapse. For instance, as seen in FIG. 20B, the standard deviations of the embeddings appear to be lower than those stemming from the DINO and adversarial DINO. This indicates that the features may lose track of useful information when the penalization is applied. However, the standard deviations for the adversarial approaches do not appear to indicate collapse will occur.

As illustrated by Tables 7 and 8, the encoders trained using the mean embedding similarity approach do not perform better overall than the basic DINO for the downstream classification tasks. The modification of the framework does not appear to improve performance, but instead penalizes the training too much. On the other hand, the results seem to indicate that the modifications to the framework (e.g., framework 800, the adversarial DINO framework) for the adversarial approach yield improved ability to be agnostic to scanner type, as well as, or alternatively, appear to generate improved embeddings that are more meaningful. The encoders trained using the adversarial approach further appear to perform to a similar level as the ResNet-18 model trained on ImageNet, as well as having improved results over that of DINO framework 400. Still further, the adversarial approach, particularly the adversarial DINO framework (e.g., framework 800) indicates that the added features from the framework improve the ability of the model to be agnostic to scanner type.

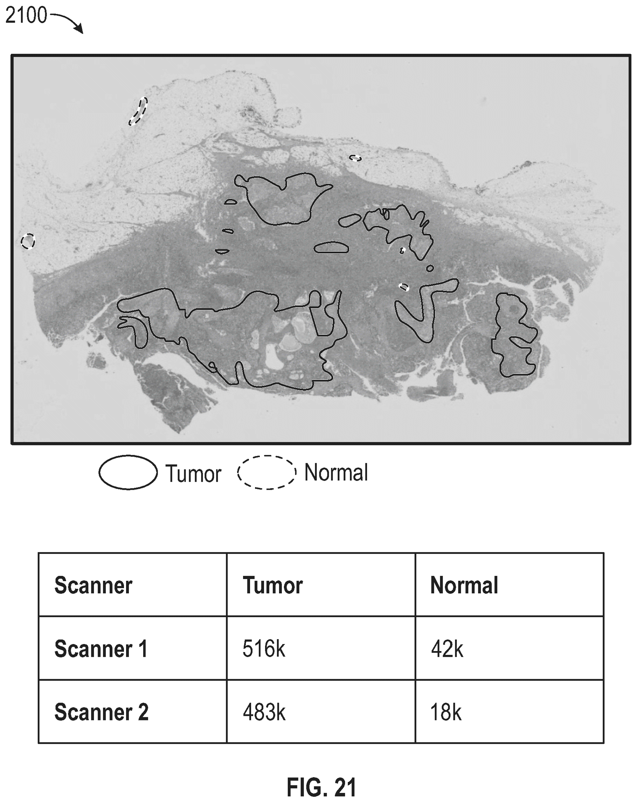

FIG. 21 illustrates an image 2100 of a biological sample, in accordance with various embodiments. The data used to develop the training data used to train the classifier (as well as the encoder) may include 516K images and/or image tiles of tissue samples depicting a tumor and 42K images and/or image tiles of normal tissue sample captured by a first slide preparation machine (e.g., scanner 1), and 483K images and/or image tiles of tissue samples depicting a tumor and 18K images and/or image tiles of normal tissue samples captured by a second slide preparation machine (e.g., scanner 2). A similar process as described above may be used for training and testing of the classifier. As seen in image 2100, the downstream classifier may determine, based on image 2100, that one or more regions of the tissue sample represent a tumor. In some embodiments, detection of the tumor or other abnormality in the biological sample may cause computing system 102 to output a classification result to client device 130. For example, the classification result may include the image of the tissue sample, regions where the tissue abnormality is detected, and an indication that the image depicts the abnormality.

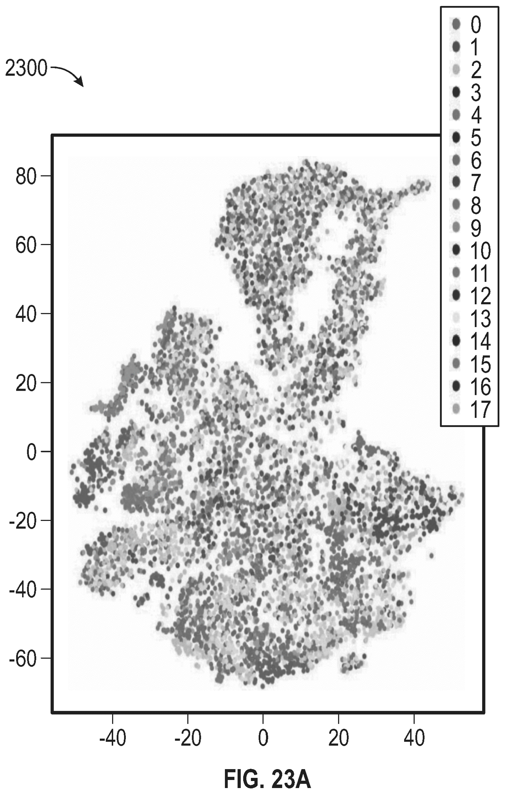

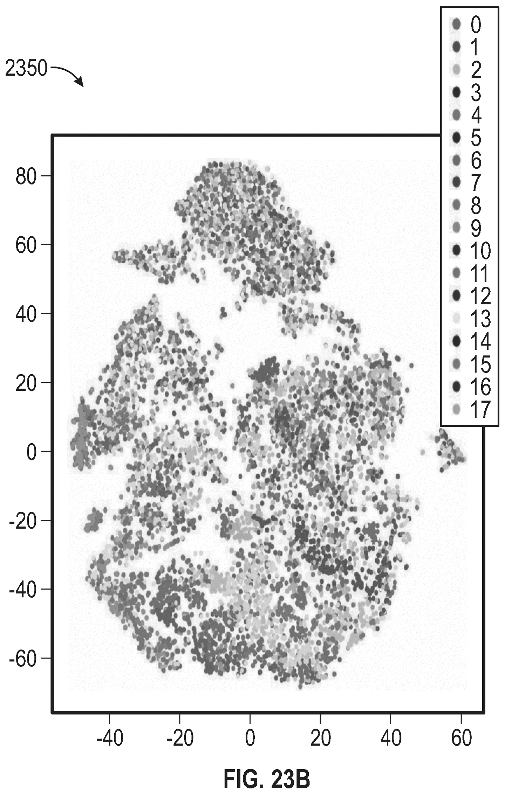

FIGS. 23A-26B illustrate various example embedding plots, in accordance with various embodiments. FIGS. 23A-23B illustrate TSNE plots 2300 and 2350 of embeddings obtained from a validation set analyzed using the adversarial DINO technique. In TSNE plots 2300 and 2350, each color represents one unique tissue processing condition, also referred to herein interchangeably as slide preparation machines or a set of attributes of a slide preparation machine (e.g., staining agent, magnification level, scanner, etc.). Furthermore, the embeddings may be generated on a tile level. TSNE plot 2300 illustrates a distribution of the embeddings for various prior to performing adversarial training. In other words, without filtering sample processing-related characteristics, TSNE plot 2300 depicts how the various slide preparation machine attributes may impact a produced embedding. TSNE plot 2350, however, may illustrate a distribution of the embeddings after adversarial training has been performed.

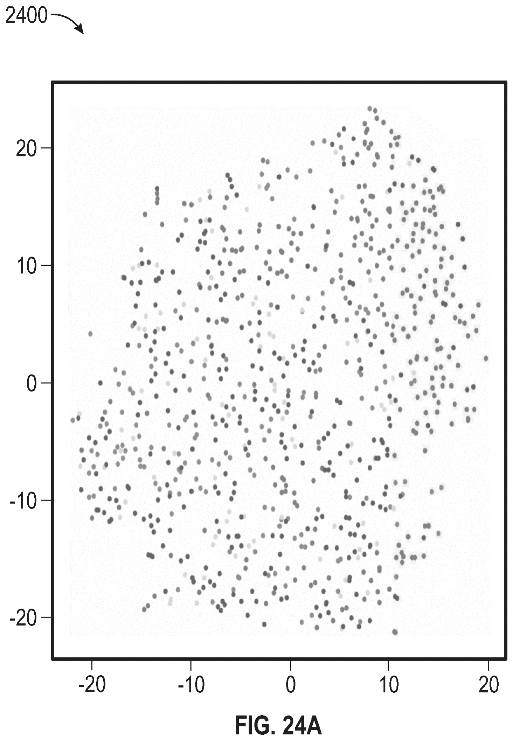

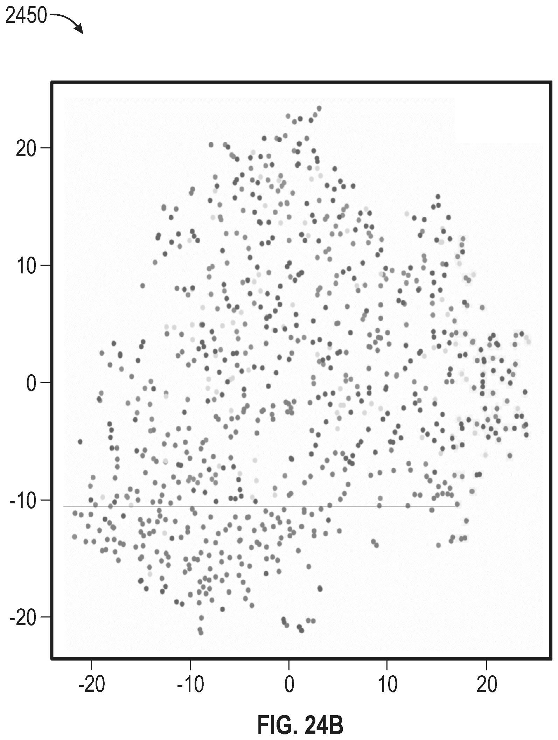

FIGS. 24A-24B illustrate TSNE plots 2400 and 2450 of embeddings obtained from different datasets of a particular clinical trial analyzed using the adversarial DINO technique. In TSNE plots 2400 and 2450, each color represents one unique dataset. Furthermore, the embeddings may be generated on a tile level. TSNE plot 2400 illustrates a distribution of the embeddings prior to performing adversarial training. In other words, without filtering sample processing-related characteristics, TSNE plot 2400 depicts how the dataset may impact a produced embedding. TSNE plot 2450, however, may illustrate a distribution of the embeddings after adversarial training has been performed.

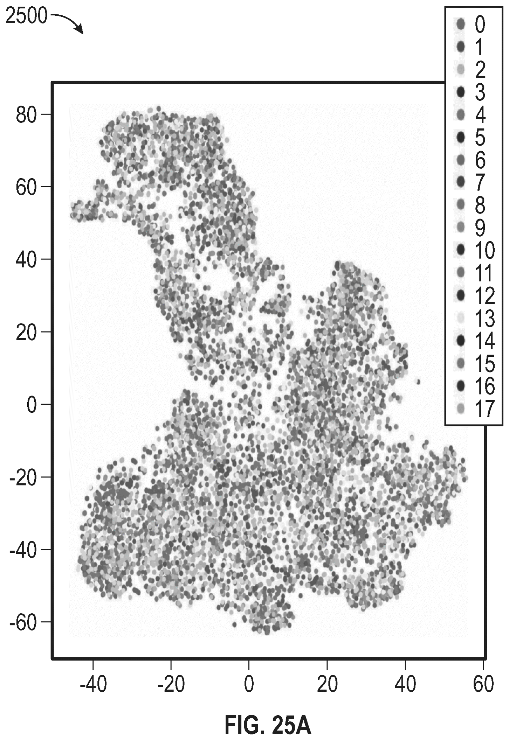

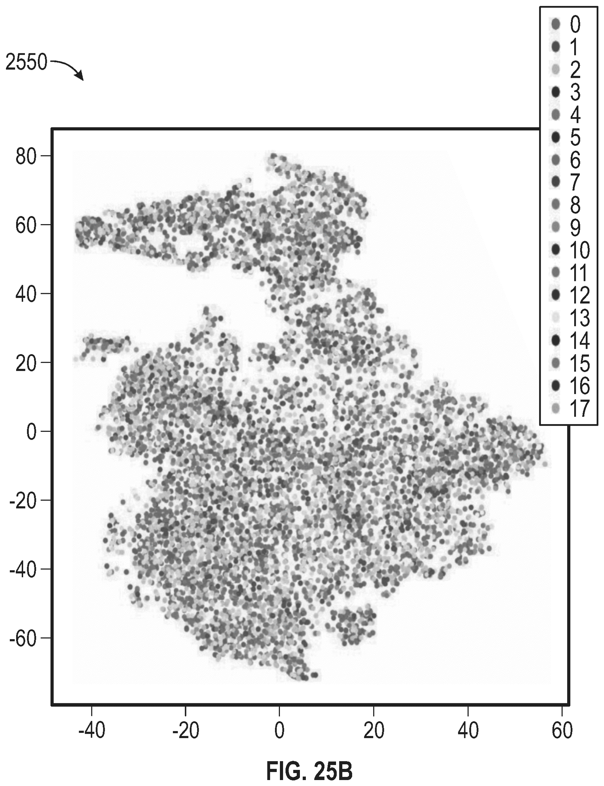

FIGS. 25A-25B illustrate TSNE plots 2500 and 2550 of embeddings obtained from a validation set using the adversarial BYOL technique. In TSNE plots 2500 and 2550, each color represents one unique tissue processing condition, also referred to herein interchangeably as slide preparation machines or a set of attributes of a slide preparation machine (e.g., staining agent, magnification level, scanner, etc.). Furthermore, the embeddings may be generated on a tile level. TSNE plot 2500 illustrates a distribution of the embeddings prior to performing adversarial training. In other words, without filtering sample processing-related characteristics, TSNE plot 2500 depicts how the dataset may impact a produced embedding. TSNE plot 2550, however, may illustrate a distribution of the embeddings after adversarial training has been performed.

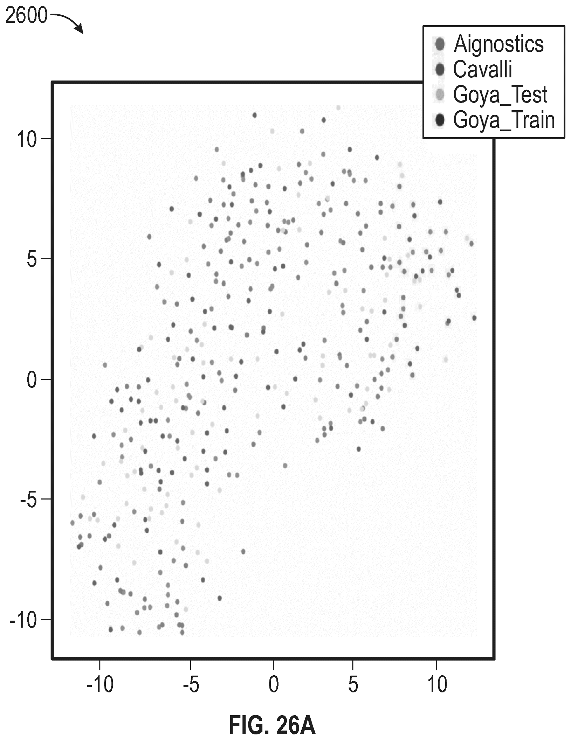

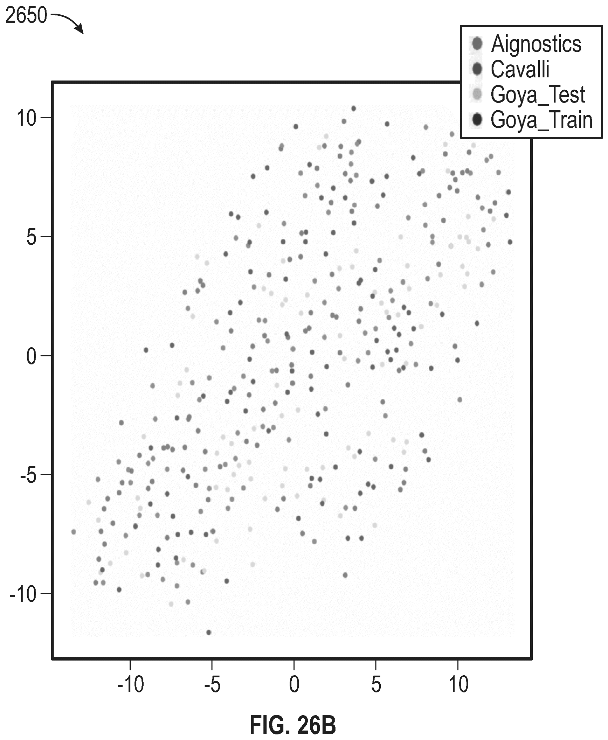

FIGS. 26A-26B illustrate TSNE plots 2600 and 2650 of embeddings obtained from different datasets of a particular clinical trial analyzed using the adversarial BYOL technique. In TSNE plots 2600 and 2650, each color represents one unique dataset. Furthermore, the embeddings may be generated on a tile level. TSNE plot 2600 illustrates a distribution of the embeddings prior to performing adversarial training. In other words, without filtering sample processing-related characteristics, TSNE plot 2600 depicts how the dataset may impact a produced embedding. TSNE plot 2650, however, may illustrate a distribution of the embeddings after adversarial training has been performed.

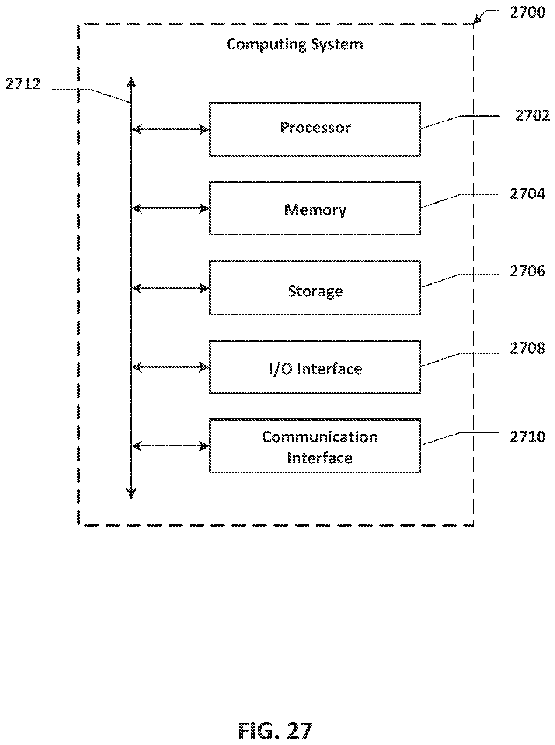

FIG. 27 illustrates an example computing system 2700. In particular embodiments, one or more computing systems 2700 perform one or more steps of one or more methods described or illustrated herein. In particular embodiments, one or more computing systems 2700 provide functionality described or illustrated herein. In particular embodiments, software running on one or more computing systems 2700 performs one or more steps of one or more methods described or illustrated herein or provides functionality described or illustrated herein. Particular embodiments include one or more portions of one or more computing systems 2700. Herein, reference to a computer system may encompass a computing device, and vice versa, where appropriate. Moreover, reference to a computer system may encompass one or more computer systems, where appropriate.

This disclosure contemplates any suitable number of computing systems 2700. This disclosure contemplates computing system 2700 taking any suitable physical form. As example and not by way of limitation, computing system 2700 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computing system 2700 may include one or more computing systems 2700; be unitary or distributed; span multiple locations; span multiple machines; span multiple data centers; or reside in a cloud, which may include one or more cloud components in one or more networks. Where appropriate, one or more computing systems 2700 may perform without substantial spatial or temporal limitation one or more steps of one or more methods described or illustrated herein. As an example and not by way of limitation, one or more computing systems 2700 may perform in real time or in batch mode one or more steps of one or more methods described or illustrated herein. One or more computing systems 2700 may perform at different times or at different locations one or more steps of one or more methods described or illustrated herein, where appropriate.

In particular embodiments, computing system 2700 includes a processor 2702, memory 2704, storage 2706, an input/output (I/O) interface 2708, a communication interface 2710, and a bus 2712. Although this disclosure describes and illustrates a particular computer system having a particular number of particular components in a particular arrangement, this disclosure contemplates any suitable computer system having any suitable number of any suitable components in any suitable arrangement.

In particular embodiments, processor 2702 includes hardware for executing instructions, such as those making up a computer program. As an example and not by way of limitation, to execute instructions, processor 2702 may retrieve (or fetch) the instructions from an internal register, an internal cache, memory 2704, or storage 2706; decode and execute them; and then write one or more results to an internal register, an internal cache, memory 2704, or storage 2706. In particular embodiments, processor 2702 may include one or more internal caches for data, instructions, or addresses. This disclosure contemplates processor 2702 including any suitable number of any suitable internal caches, where appropriate. As an example and not by way of limitation, processor 2702 may include one or more instruction caches, one or more data caches, and one or more translation lookaside buffers (TLBs). Instructions in the instruction caches may be copies of instructions in memory 2704 or storage 2706, and the instruction caches may speed up retrieval of those instructions by processor 2702. Data in the data caches may be copies of data in memory 2704 or storage 2706 for instructions executing at processor 2702 to operate on; the results of previous instructions executed at processor 2702 for access by subsequent instructions executing at processor 2702 or for writing to memory 2704 or storage 2706; or other suitable data. The data caches may speed up read or write operations by processor 2702. The TLBs may speed up virtual-address translation for processor 2702. In particular embodiments, processor 2702 may include one or more internal registers for data, instructions, or addresses. This disclosure contemplates processor 2702 including any suitable number of any suitable internal registers, where appropriate. Where appropriate, processor 2702 may include one or more arithmetic logic units (ALUs); be a multi-core processor; or include one or more processors 2702. Although this disclosure describes and illustrates a particular processor, this disclosure contemplates any suitable processor.

In particular embodiments, memory 2704 includes main memory for storing instructions for processor 2702 to execute or data for processor 2702 to operate on. As an example and not by way of limitation, computing system 2700 may load instructions from storage 2706 or another source (such as, for example, another computing system 2700) to memory 2704. Processor 2702 may then load the instructions from memory 2704 to an internal register or internal cache. To execute the instructions, processor 2702 may retrieve the instructions from the internal register or internal cache and decode them. During or after execution of the instructions, processor 2702 may write one or more results (which may be intermediate or final results) to the internal register or internal cache. Processor 2702 may then write one or more of those results to memory 2704. In particular embodiments, processor 2702 executes only instructions in one or more internal registers or internal caches or in memory 2704 (as opposed to storage 2706 or elsewhere) and operates only on data in one or more internal registers or internal caches or in memory 2704 (as opposed to storage 2706 or elsewhere). One or more memory buses (which may each include an address bus and a data bus) may couple processor 2702 to memory 2704. Bus 2712 may include one or more memory buses, as described below. In particular embodiments, one or more memory management units (MMUs) reside between processor 2702 and memory 2704 and facilitate accesses to memory 2704 requested by processor 2702. In particular embodiments, memory 2704 includes random access memory (RAM). This RAM may be volatile memory, where appropriate This RAM may be dynamic RAM (DRAM) or static RAM (SRAM). Moreover, where appropriate, this RAM may be single-ported or multi-ported RAM. This disclosure contemplates any suitable RAM. Memory 2704 may include one or more memories, where appropriate. Although this disclosure describes and illustrates particular memory, this disclosure contemplates any suitable memory.

In particular embodiments, storage 2706 includes mass storage for data or instructions. As an example and not by way of limitation, storage 2706 may include a hard disk drive (HDD), a floppy disk drive, flash memory, an optical disc, a magneto-optical disc, magnetic tape, or a Universal Serial Bus (USB) drive or a combination of two or more of these. Storage 2706 may include removable or non-removable (or fixed) media, where appropriate. Storage 2706 may be internal or external to computing system 2700, where appropriate. In particular embodiments, storage 2706 is non-volatile, solid-state memory. In particular embodiments, storage 2706 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 2706 taking any suitable physical form. Storage 2706 may include one or more storage control units facilitating communication between processor 2702 and storage 2706, where appropriate. Where appropriate, storage 2706 may include one or more storages 2706. Although this disclosure describes and illustrates particular storage, this disclosure contemplates any suitable storage.

In particular embodiments, I/O interface 2708 includes hardware, software, or both, providing one or more interfaces for communication between computing system 2700 and one or more I/O devices. Computing system 2700 may include one or more of these I/O devices, where appropriate. One or more of these I/O devices may enable communication between a person and computing system 2700. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 2708 for them. Where appropriate, I/O interface 2708 may include one or more device or software drivers enabling processor 2702 to drive one or more of these I/O devices. I/O interface 2708 may include one or more I/O interfaces 2708, where appropriate. Although this disclosure describes and illustrates a particular I/O interface, this disclosure contemplates any suitable I/O interface.

In particular embodiments, communication interface 2710 includes hardware, software, or both providing one or more interfaces for communication (such as, for example, packet-based communication) between computing system 2700 and one or more other computing systems 2700 or one or more networks. As an example and not by way of limitation, communication interface 2710 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 2710 for it. As an example and not by way of limitation, computing system 2700 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computing system 2700 may communicate with a wireless PAN (WPAN) (such as, for example, a BLLTETOOTH WPAN or ultra-wideband WPAN), a WI-FI network, a WI-MAX network, a cellular telephone network (such as, for example, a Global System for Mobile Communications (GSM) network), or other suitable wireless network or a combination of two or more of these. Computing system 2700 may include any suitable communication interface 2710 for any of these networks, where appropriate. Communication interface 2710 may include one or more communication interfaces 2710, where appropriate. Although this disclosure describes and illustrates a particular communication interface, this disclosure contemplates any suitable communication interface.

In particular embodiments, bus 2712 includes hardware, software, or both coupling components of computing system 2700 to each other. As an example and not by way of limitation, bus 2712 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 2712 may include one or more buses 2712, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.
The scope of the claimed invention is defined by the appended claims. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, any reference herein to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A computer-implemented method, comprising:
receiving (700) image data comprising a first image set (712) and a second image set (716), wherein the first image set and the second image set comprise digitized images of a plurality of digital pathology slides (714, 718) processed using a first slide preparation machine (610, 120-1) and a second slide preparation machine (620, 120-2), respectively, wherein the first slide preparation machine and the second slide preparation machine each have a set of attributes, and wherein a value of at least one of the attributes differs between the first slide preparation machine and the second slide preparation machine;
generating (720), based on the image data, a first augmented view set (404a, 504) and a second augmented view set (404b, 506) based on one or more augmentations applied to each image of the first image set and the second image set; and
for each of the digital pathology slides:
training (740) a first encoder (410, 510) to:
generate (742), using the first encoder, a first representation of an augmented view of the first augmented view set; and
enhance (746, 748) a similarity between the first representation and a second representation of an augmented view of the second augmented view set, the second representation being generated via a second encoder (420, 530), and the first representation and the second representation both corresponding to the same digital pathology slide.

2. The method of claim 1, wherein:
(i) the first slide preparation machine (610, 120-1) and the second slide preparation machine (620, 120-2) are both slide scanning machines (124-1, 124-2); or
(ii) the first slide preparation machine and the second slide preparation machine are both slide staining machines (122-1, 122-2); or(iii) the first slide preparation machine and the second slide preparation machine are both slide staining machines (122-1, 122-2), the first slide preparation machine uses a first staining technique and the second slide preparation machine uses a second staining technique different from the first staining technique; or
(iv) the first slide preparation machine and the second slide preparation machine are the same machine, and the value of at least one of the attributes changed over time.

3. The method of claim 1 or claim 2, wherein:
(i) the digital pathology slides (714, 718) comprise whole slide images of a plurality of types of tissue; and/or
(ii) the digital pathology slides are images of tissue stained with hematoxylin and eosin; and/or
(iii) the first encoder and the second encoder have a same architecture; and/or
(iv) the one or more augmentations comprise at least one of blurring of an image, flipping of an image, rotating an image, distorting one or more colors of an image, or cropping an image.

4. The method of any one of claims 1-3, further comprising:
dividing each image of the first augmented view set into a first plurality of tiles (614a, 614b, 614c, 614d); and
dividing each image of the second augmented view set into a second plurality of tiles (624a, 624b, 624c, 624d), wherein the first representation is generated based on the first plurality of tiles and the second representation is generated based on the second plurality of tiles.

5. The method of claim 4, further comprising:
generating a first plurality of embeddings each corresponding to one of the first plurality of tiles, wherein the first representation is generated based on the first plurality of embeddings; and
generating a second plurality of embeddings each corresponding to one of the second plurality of tiles, wherein the second representation is generated based on the second plurality of embeddings.

6. The method of claim 5, further comprising:
computing a first mean embedding based on the first plurality of embeddings, the first representation comprising the computed first mean embedding; and
computing a second mean embedding based on the second plurality of embeddings, the second representation comprising the computed second mean embedding.

7. The method of any one of claims 4-6, wherein the first augmented view set and the second augmented view set comprise tiles selected randomly for the first plurality of tiles and the second plurality of tiles.

8. The method of any one of claims 1-7, further comprising:
training (1456) a classifier (1420) based on the first encoder (1410) to perform image classification of slides of biological samples; and optionally
receiving (1602) an image (1402) depicting a biological sample to be classified into at least one of a plurality of tissue categories; and
providing (1604) the image to the trained classifier to determine (1606) one or more of the tissue categories with which to classify the biological sample.

9. The method of any one of claims 1-8, wherein the first encoder has a first set of hyper-parameters and the second encoder has a second set of hyper-parameters; and/or wherein maximizing the similarity between the first representation and the second representation comprises minimizing a loss function.

10. A method comprising: utilizing a trained classifier to classify a digital pathology image, wherein the trained classifier was trained using the method of claim 8.

11. A computer-implemented method, comprising:
receiving (1310) training data (1302) comprising images of a plurality of biological samples processed using a first slide preparation machine (610, 120-1) or a second slide preparation machine (620, 120-2), wherein the first slide preparation machine and the second slide preparation machine each have a set of attributes, and wherein a value of at least one of the attributes differs between the first slide preparation machine and the second slide preparation machine;
for each of the biological samples:
generating a first augmented view (404a, 504) and a second augmented view (404b, 506) of one of the images of the biological sample processed using the first slide preparation machine;
generating (1312), using a first encoder, a first representation (512, 830) of the first augmented view;
providing (1314) the first representation to a discriminator (860, 1150) to produce a prediction (840, 1154) of whether the biological sample corresponding to the one of the images was processed using the first slide preparation machine or the second slide preparation machine;
updating (1318) one or more parameters of the discriminator based on a first loss computed (1316) based on the produced prediction and metadata (1152) associated with the one of the images, the metadata indicating that the biological sample was processed using the first slide preparation machine;
updating one or more parameters of the first encoder based on the first loss;
training the updated first encoder to:
generate (1320) an updated first representation of the one of the images, and
enhance a similarity between the updated first representation and a second representation of the second augmented view generated using a second encoder.

12. The method of claim 11, wherein the first encoder serves as a generator to perform adversarial learning with the discriminator, and wherein one or more parameters of the second encoder are updated based on the one or more updated parameters of the first encoder.

13. A non-transitory computer-readable medium (2704) storing computer program instructions that, when executed, effectuate the method of any one of claims 1-12.

14. A system (2700, 102), comprising:
memory (2704) storing computer program instructions; and
one or more processors (2702) configured to execute the computer program instructions to perform the method of any one of claims 1-13.

15. The system of claim 14, further comprising:
(i) a first slide scanning machine (124-1); and
a second slide scanning machine (124-2),
wherein the first slide preparation machine (120-1) comprises the first slide scanning machine and the second slide preparation machine (120-2) comprises the second slide scanning machine; or
(ii) a first slide staining machine (122-1); and
a second slide staining machine (122-2),
wherein the first slide preparation machine (120-1) comprises the first slide staining machine and the second slide preparation (120-2) machine comprises the second slide staining machine, optionally wherein the first slide staining machine uses a first slide staining technique and the second slide staining machine uses a second slide staining technique different from the first slide staining technique.

## Patentansprüche

1. Computerimplementiertes Verfahren, umfassend:
Empfangen (700) von Bilddaten, die einen ersten Bildsatz (712) und einen zweiten Bildsatz (716) umfassen, wobei der erste Bildsatz und der zweite Bildsatz digitalisierte Bilder einer Vielzahl von digitalen Pathologie-Objektträgern (714, 718) umfassen, die unter Verwendung eines ersten Objektträger-Vorbereitungsgeräts (610, 120-1) bzw. eines zweiten Objektträger-Vorbereitungsgeräts (620, 120-2) verarbeitet wurden, wobei das erste Objektträger-Vorbereitungsgerät und das zweite Objektträger-Vorbereitungsgerät jeweils einen Satz von Attributen aufweisen und wobei sich ein Wert mindestens eines der Attribute zwischen dem ersten Objektträger-Vorbereitungsgerät und dem zweiten Objektträger-Vorbereitungsgerät unterscheidet;
Erzeugen (720) eines ersten augmentierten Ansichtssatzes (404a, 504) und eines zweiten augmentierten Ansichtssatzes (404b, 506) basierend auf einer oder mehreren Erweiterungen, die auf jedes Bild des ersten Bildsatzes und des zweiten Bildsatzes angewendet werden, basierend auf den Bilddaten; und
für jeden der digitalen Pathologie-Objektträger:
Trainieren (740) eines ersten Encoders (410, 510) zum:
Erzeugen (742) einer ersten Darstellung einer augmentierten Ansicht des ersten augmentierten Ansichtssatzes unter Verwendung des ersten Encoders; und
Erhöhen (746, 748) einer Ähnlichkeit zwischen der ersten Darstellung und einer zweiten Darstellung einer augmentierten Ansicht des zweiten augmentierten Ansichtssatzes, wobei die zweite Darstellung über einen zweiten Encoder (420, 530) erzeugt wird und die erste Darstellung und die zweite Darstellung beide demselben digitalen Pathologie-Objektträger entsprechen.

2. Verfahren nach Anspruch 1, wobei:
(i) das erste Objektträger-Vorbereitungsgerät (610, 120-1) und das zweite Objektträger-Vorbereitungsgerät (620, 120-2) beide Objektträger-Scangeräte (124-1, 124-2) sind; oder
(ii) das erste Objektträger-Vorbereitungsgerät und das zweite Objektträger-Vorbereitungsgerät beide Objektträger-Färbegeräte (122-1, 122-2) sind; oder (iii) das erste Objektträger-Vorbereitungsgerät und das zweite Objektträger-Vorbereitungsgerät beide Objektträger-Färbegeräte (122-1, 122-2) sind, das erste Objektträger-Vorbereitungsgerät eine erste Färbetechnik verwendet und das zweite Objektträger-Vorbereitungsgerät eine zweite Färbetechnik verwendet, die sich von der ersten Färbetechnik unterscheidet; oder
(iv) das erste Objektträger-Vorbereitungsgerät und das zweite Objektträger-Vorbereitungsgerät dasselbe Gerät sind und sich der Wert mindestens eines der Attribute im Laufe der Zeit geändert hat.

3. Verfahren nach Anspruch 1 oder Anspruch 2, wobei:
(i) die digitalen Pathologie-Objektträger (714, 718) Ganzobjektträgerbilder einer Vielzahl von Gewebetypen umfassen; und/oder
(ii) die digitalen Pathologie-Objektträger Bilder von mit Hämatoxylin und Eosin gefärbtem Gewebe sind; und/oder
(iii) der erste Encoder und der zweite Encoder dieselbe Architektur aufweisen; und/oder
(iv) die eine oder die mehreren Augmentationen mindestens eines von Weichzeichnen eines Bildes, Umkippen eines Bildes, Drehen eines Bildes, Verzerren einer oder mehrerer Farben eines Bildes oder Beschneiden eines Bildes umfassen.

4. Verfahren nach einem der Ansprüche 1-3, ferner umfassend:
Unterteilen jedes Bildes des ersten augmentierten Ansichtssatzes in eine erste Vielzahl von Kacheln (614a, 614b, 614c, 614d); und
Unterteilen jedes Bildes des zweiten augmentierten Ansichtssatzes in eine zweite Vielzahl von Kacheln (624a, 624b, 624c, 624d), wobei die erste Darstellung basierend auf der ersten Vielzahl von Kacheln erzeugt wird und die zweite Darstellung basierend auf der zweiten Vielzahl von Kacheln erzeugt wird.

5. Verfahren nach Anspruch 4, ferner umfassend:
Erzeugen einer ersten Vielzahl von Einbettungen, die jeweils einer der ersten Vielzahl von Kacheln entsprechen, wobei die erste Darstellung basierend auf der ersten Vielzahl von Einbettungen erzeugt wird; und
Erzeugen einer zweiten Vielzahl von Einbettungen, die jeweils einer der zweiten Vielzahl von Kacheln entsprechen, wobei die zweite Darstellung basierend auf der zweiten Vielzahl von Einbettungen erzeugt wird.

6. Verfahren nach Anspruch 5, ferner umfassend:
Berechnen einer ersten mittleren Einbettung basierend auf der ersten Vielzahl von Einbettungen, wobei die erste Darstellung die berechnete erste mittlere Einbettung umfasst; und
Berechnen einer zweiten mittleren Einbettung basierend auf der zweiten Vielzahl von Einbettungen, wobei die zweite Darstellung die berechnete zweite mittlere Einbettung umfasst.

7. Verfahren nach einem der Ansprüche 4-6, wobei der erste augmentierte Ansichtssatz und der zweite augmentierte Ansichtssatz Kacheln umfassen, die zufällig für die erste Vielzahl von Kacheln und die zweite Vielzahl von Kacheln ausgewählt wurden.

8. Verfahren nach einem der Ansprüche 1-7, ferner umfassend:
Trainieren (1456) eines Klassifizierers (1420) basierend auf dem ersten Encoder (1410), um eine Bildklassifizierung von Objektträgern biologischer Proben durchzuführen; und gegebenenfalls
Empfangen (1602) eines Bildes (1402), das eine biologische Probe abbildet, die in mindestens eine einer Vielzahl von Gewebekategorien zu klassifizieren ist; und
Bereitstellen (1604) des Bildes an den trainierten Klassifizierer, um eine oder mehrere der Gewebekategorien zu bestimmen (1606), mit denen die biologische Probe zu klassifizieren ist.

9. Verfahren nach einem der Ansprüche 1-8, wobei der erste Encoder einen ersten Satz von Hyperparametern aufweist und der zweite Encoder einen zweiten Satz von Hyperparametern aufweist; und/oder wobei das Maximieren der Ähnlichkeit zwischen der ersten Darstellung und der zweiten Darstellung das Minimieren einer Verlustfunktion umfasst.

10. Verfahren, umfassend: Nutzen eines trainierten Klassifizierers, um ein digitales Pathologiebild zu klassifizieren, wobei der trainierte Klassifizierer unter Verwendung des Verfahrens nach Anspruch 8 trainiert wurde.

11. Computerimplementiertes Verfahren, umfassend:
Empfangen (1310) von Trainingsdaten (1302), die Bilder einer Vielzahl von biologischen Proben umfassen, die unter Verwendung eines ersten Objektträger-Vorbereitungsgeräts (610, 120-1) oder eines zweiten Objektträger-Vorbereitungsgeräts (620, 120-2) verarbeitet wurden, wobei das erste Objektträger-Vorbereitungsgerät und das zweite Objektträger-Vorbereitungsgerät jeweils einen Satz von Attributen aufweisen und wobei sich ein Wert mindestens eines der Attribute zwischen dem ersten Objektträger-Vorbereitungsgerät und dem zweiten Objektträger-Vorbereitungsgerät unterscheidet;
für jede der biologischen Proben:
Erzeugen einer ersten augmentierten Ansicht (404a, 504) und einer zweiten augmentierten Ansicht (404b, 506) eines der Bilder der biologischen Probe, die unter Verwendung des ersten Objektträger-Vorbereitungsgeräts verarbeitet wurde;
Erzeugen (1312) einer ersten Darstellung (512, 830) der ersten augmentierten Ansicht unter Verwendung eines ersten Encoders;
Bereitstellen (1314) der ersten Darstellung an einen Diskriminator (860, 1150), um eine Vorhersage (840, 1154) zu erzeugen, ob die biologische Probe, die dem einen der Bilder entspricht, unter Verwendung des ersten Objektträger-Vorbereitungsgeräts oder des zweiten Objektträger-Vorbereitungsgeräts verarbeitet wurde;
Aktualisieren (1318) eines oder mehrerer Parameter des Diskriminators basierend auf einem ersten Verlust, der basierend auf der erzeugten Vorhersage und Metadaten (1152), die dem einen der Bilder zugeordnet sind, berechnet wurde (1316), wobei die Metadaten angeben, dass die biologische Probe unter Verwendung des ersten Objektträger-Vorbereitungsgeräts verarbeitet wurde;
Aktualisieren eines oder mehrerer Parameter des ersten Encoders basierend auf dem ersten Verlust;
Trainieren des aktualisierten ersten Encoders zu Folgendem:
Erzeugen (1320) einer aktualisierten ersten Darstellung des einen der Bilder und
Erhöhen einer Ähnlichkeit zwischen der aktualisierten ersten Darstellung und einer zweiten Darstellung der zweiten augmentierten Ansicht, die unter Verwendung eines zweiten Encoders erzeugt wurde.

12. Verfahren nach Anspruch 11, wobei der erste Encoder als ein Generator dient, um ein adversariales Lernen mit dem Diskriminator durchzuführen, und wobei ein oder mehrere Parameter des zweiten Encoders basierend auf dem einen oder den mehreren aktualisierten Parametern des ersten Encoders aktualisiert werden.

13. Nichtflüchtiges computerlesbares Medium (2704), das Computerprogrammanweisungen speichert, die, wenn sie ausgeführt werden, das Verfahren nach einem der Ansprüche 1-12 bewirken.

14. System (2700, 102), umfassend:
einen Speicher (2704), der Computerprogrammanweisungen speichert; und
einen oder mehrere Prozessoren (2702), die konfiguriert sind, um die Computerprogrammanweisungen auszuführen, um das Verfahren nach einem der Ansprüche 1-13 durchzuführen.

15. System nach Anspruch 14, ferner umfassend:
(i) ein erstes Objektträger-Scangerät (124-1); und
ein zweites Objektträger-Scangerät (124-2),
wobei das erste Objektträger-Vorbereitungsgerät (120-1) das erste Objektträger-Scangerät umfasst und das zweite Objektträger-Vorbereitungsgerät (120-2) das zweite Objektträger-Scangerät umfasst; oder
(ii) ein erstes Objektträger-Färbegerät (122-1); und
ein zweites Objektträger-Färbegerät (122-2),
wobei das erste Objektträger-Vorbereitungsgerät (120-1) das erste Objektträger-Färbegerät umfasst und das zweite Objektträger-Vorbereitungsgerät (120-2) das zweite Objektträger-Färbegerät umfasst, gegebenenfalls wobei das erste Objektträger-Färbegerät eine erste Objektträger-Färbetechnik verwendet und das zweite Objektträger-Färbegerät eine zweite Objektträger-Färbetechnik verwendet, die sich von der ersten Objektträger-Färbetechnik unterscheidet.

## Revendications

1. Procédé mis en œuvre par ordinateur, comprenant :
la réception (700) de données d'images comprenant un premier ensemble d'images (712) et un second ensemble d'images (716), le premier ensemble d'images et le second ensemble d'images comprenant des images numérisées d'une pluralité de lames de pathologie numérique (714, 718) traitées en utilisant respectivement une première machine de préparation de lames (610, 120-1) et une seconde machine de préparation de lames (620, 120-2), la première machine de préparation de lames et la seconde machine de préparation de lames ayant chacune un ensemble d'attributs, et une valeur d'au moins l'un des attributs différant entre la première machine de préparation de lames et la seconde machine de préparation de lames ;
la génération (720), sur la base des données d'images, d'un premier ensemble de vues augmentées (404a, 504) et d'un second ensemble de vues augmentées (404b, 506) sur la base d'une ou de plusieurs augmentations appliquées à chaque image du premier ensemble d'images et du second ensemble d'images ; et
pour chacune des lames de pathologie numérique :
l'entraînement (740) d'un premier encodeur (410, 510) pour :
générer (742), en utilisant le premier encodeur, une première représentation d'une vue augmentée du premier ensemble de vues augmentées ; et
améliorer (746, 748) une similarité entre la première représentation et une seconde représentation d'une vue augmentée du second ensemble de vues augmentées, la seconde représentation étant générée par l'intermédiaire d'un second encodeur (420, 530), et la première représentation et la seconde représentation correspondant toutes deux à la même lame de pathologie numérique.

2. Procédé selon la revendication 1, dans lequel :
(i) la première machine de préparation de lames (610, 120-1) et la seconde machine de préparation de lames (620, 120-2) sont toutes deux des machines de numérisation de lames (124-1, 124-2) ; ou
(ii) la première machine de préparation de lames et la seconde machine de préparation de lames sont toutes deux des machines de coloration de lames (122-1, 122-2) ; ou (iii) la première machine de préparation de lames et la seconde machine de préparation de lames sont toutes deux des machines de coloration de lames (122-1, 122-2), la première machine de préparation de lames utilise une première technique de coloration et la seconde machine de préparation de lames utilise une seconde technique de coloration différente de la première technique de coloration ; ou
(iv) la première machine de préparation de lames et la seconde machine de préparation de lames sont la même machine, et la valeur d'au moins l'un des attributs a changé au fil du temps.

3. Procédé selon la revendication 1 ou la revendication 2, dans lequel :
(i) les lames de pathologie numérique (714, 718) comprennent des images de lames entières d'une pluralité de types de tissus ; et/ou
(ii) les lames de pathologie numérique sont des images de tissus colorés à l'hématoxyline et à l'éosine ; et/ou
(iii) le premier encodeur et le second encodeur ont une même architecture ; et/ou
(iv) la ou les augmentations comprennent au moins un parmi le floutage d'une image, le retournement d'une image, la rotation d'une image, l'altération d'une ou plusieurs couleurs d'une image ou le recadrage d'une image.

4. Procédé selon l'une quelconque des revendications 1 à 3, comprenant en outre :
la division de chaque image du premier ensemble de vues augmentées en une première pluralité de tuiles (614a, 614b, 614c, 614d) ; et
la division de chaque image du second ensemble de vues augmentées en une seconde pluralité de tuiles (624a, 624b, 624c, 624d), dans lequel la première représentation est générée sur la base de la première pluralité de tuiles et la seconde représentation est générée sur la base de la seconde pluralité de tuiles.

5. Procédé selon la revendication 4, comprenant en outre :
la génération d'une première pluralité d'incorporations chacune correspondant à l'une de la première pluralité de tuiles, la première représentation étant générée sur la base de la première pluralité d'incorporations ; et
la génération d'une seconde pluralité d'incorporations chacune correspondant à l'une de la seconde pluralité de tuiles, la seconde représentation étant générée sur la base de la seconde pluralité d'incorporations.

6. Procédé selon la revendication 5, comprenant en outre :
le calcul d'une première incorporation moyenne sur la base de la première pluralité d'incorporations, la première représentation comprenant la première incorporation moyenne calculée ; et
le calcul d'une seconde incorporation moyenne sur la base de la seconde pluralité d'incorporations, la seconde représentation comprenant la seconde incorporation moyenne calculée.

7. Procédé selon l'une quelconque des revendications 4 à 6, dans lequel le premier ensemble de vues augmentées et le second ensemble de vues augmentées comprennent des tuiles sélectionnées de manière aléatoire pour la première pluralité de tuiles et la seconde pluralité de tuiles.

8. Procédé selon l'une quelconque des revendications 1 à 7, comprenant en outre :
l'entraînement (1456) d'un classifieur (1420) sur la base du premier encodeur (1410) pour effectuer une classification d'images de lames d'échantillons biologiques ; et éventuellement
la réception (1602) d'une image (1402) représentant un échantillon biologique à classifier dans au moins une d'une pluralité de catégories de tissus ; et
la fourniture (1604) de l'image au classifieur entraîné afin de déterminer (1606) une ou plusieurs des catégories de tissus dans lesquelles classifier l'échantillon biologique.

9. Procédé selon l'une quelconque des revendications 1 à 8, dans lequel le premier encodeur a un premier ensemble d'hyperparamètres et le second encodeur a un second ensemble d'hyperparamètres ; et/ou dans lequel la maximisation de la similarité entre la première représentation et la seconde représentation comprend la minimisation d'une fonction de perte.

10. Procédé comprenant : l'utilisation d'un classifieur entraîné pour classifier une image de pathologie numérique, dans lequel le classifieur entraîné a été entraîné en utilisant le procédé selon la revendication 8.

11. Procédé mis en œuvre par ordinateur, comprenant :
la réception (1310) de données d'entraînement (1302) comprenant des images d'une pluralité d'échantillons biologiques traités en utilisant une première machine de préparation de lames (610, 120-1) ou une seconde machine de préparation de lames (620, 120-2), la première machine de préparation de lames et la seconde machine de préparation de lames ayant chacune un ensemble d'attributs, et une valeur d'au moins l'un des attributs différant entre la première machine de préparation de lames et la seconde machine de préparation de lames ;
pour chacun des échantillons biologiques :
la génération d'une première vue augmentée (404a, 504) et d'une seconde vue augmentée (404b, 506) de l'une des images de l'échantillon biologique traité en utilisant la première machine de préparation de lames ;
la génération (1312), en utilisant un premier encodeur, d'une première représentation (512, 830) de la première vue augmentée ;
la fourniture (1314) de la première représentation à un discriminateur (860, 1150) afin de produire une prédiction (840, 1154) indiquant si l'échantillon biologique correspondant à l'une des images a été traité en utilisant la première machine de préparation de lames ou la seconde machine de préparation de lames ;
la mise à jour (1318) d'un ou de plusieurs paramètres du discriminateur sur la base d'une première perte calculée (1316) sur la base de la prédiction produite et de métadonnées (1152) associées à l'une des images, les métadonnées indiquant que l'échantillon biologique a été traité en utilisant la première machine de préparation de lames ;
la mise à jour d'un ou de plusieurs paramètres du premier encodeur sur la base de la première perte ;
l'entraînement du premier encodeur mis à jour pour :
générer (1320) une première représentation mise à jour de l'une des images, et
améliorer une similarité entre la première représentation mise à jour et une seconde représentation de la seconde vue augmentée générée en utilisant un second encodeur.

12. Procédé selon la revendication 11, dans lequel le premier encodeur sert de générateur pour effectuer un apprentissage antagoniste avec le discriminateur, et dans lequel un ou plusieurs paramètres du second encodeur sont mis à jour sur la base du ou des paramètres mis à jour du premier encodeur.

13. Support non transitoire lisible par ordinateur (2704) stockant des instructions de programme informatique qui, lorsqu'elles sont exécutées, mettent en œuvre le procédé selon l'une quelconque des revendications 1 à 12.

14. Système (2700, 102), comprenant :
une mémoire (2704) stockant des instructions de programme informatique ; et
un ou plusieurs processeurs (2702) configurés pour exécuter les instructions de programme informatique afin d'effectuer le procédé selon l'une quelconque des revendications 1 à 13.

15. Système selon la revendication 14, comprenant en outre :
(i) une première machine de numérisation de lames (124-1) ; et
une seconde machine de numérisation de lames (124-2),
dans lequel la première machine de préparation de lames (120-1) comprend la première machine de numérisation de lames et la seconde machine de préparation de lames (120-2) comprend la seconde machine de numérisation de lames ; ou
(ii) une première machine de coloration de lames (122-1) ; et
une seconde machine de coloration de lames (122-2),
dans lequel la première machine de préparation de lames (120-1) comprend la première machine de coloration de lames et la seconde machine de préparation de lames (120-2) comprend la seconde machine de coloration de lames, éventuellement dans lequel la première machine de coloration de lames utilise une première technique de coloration de lames et la seconde machine de coloration de lames utilise une seconde technique de coloration de lames différente de la première technique de coloration de lames.
